(19) Europäisches Patentamt
European Patent Office
Office européen des brevets

(11) **EP 4 388 874 A1**

(12) **EUROPEAN PATENT APPLICATION**

(43) Date of publication:
**26.06.2024 Bulletin 2024/26**

(21) Application number: **22216265.3**

(22) Date of filing: **23.12.2022**

(51) International Patent Classification (IPC):
*A01N 25/28* (2006.01)     *A01N 55/00* (2006.01)
*A01N 59/06* (2006.01)     *A01N 59/26* (2006.01)
*A01P 13/00* (2006.01)     *C04B 28/00* (2006.01)
*A01G 13/02* (2006.01)

(52) Cooperative Patent Classification (CPC):
(C-Sets available)
**A01P 13/00; A01N 25/28; A01N 55/00;
A01N 59/06; A01N 59/26;** A01G 13/0262     (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Bind-X GmbH
82152 Planegg (DE)**

(72) Inventors:
• **MERKL, Jan-Philip
82152 Planegg (DE)**

• **FRIED, Luitpold
82152 Planegg (DE)**
• **ZACHERL, Judith
82152 Planegg (DE)**
• **KREHENBRINK, Martin
82152 Planegg (DE)**

(74) Representative: **Eisenführ Speiser
Patentanwälte Rechtsanwälte PartGmbB
Postfach 31 02 60
80102 München (DE)**

(54) **PARTICULATE WEED CONTROL**

(57)     The present invention primarily relates to the use of a composition comprising or consisting of a plurality of particles, wherein the particles comprise or consist of the components as defined herein as herbicide. The invention further relates to the use of a particulate cement modifier, preferably of a particulate cement accelerator, as herbicide. Moreover, the invention relates to different methods for preventing or reducing plant growth, preferably weed growth, comprising or consisting of the steps as defined herein.

EP 4 388 874 A1

(52) Cooperative Patent Classification (CPC): (Cont.)

C-Sets
**A01N 59/06, A01N 25/28, A01N 55/00;**
**A01N 59/06, A01N 25/28, A01N 55/00,**
**A01N 59/26;**
**A01N 59/06, A01N 25/28, A01N 59/26**

**Description**

The present invention primarily relates to the use of a composition comprising or consisting of a plurality of particles, wherein the particles comprise or consist of the components as defined herein, as herbicide. The invention further relates to the use of a particulate cement modifier, preferably of a particulate cement accelerator, as herbicide. Moreover, the invention relates to different methods for preventing or reducing plant growth, preferably weed growth, comprising or consisting of the steps as defined herein.

Further aspects of the present invention will arise from the description below, in particular from the examples, as well as from the attached patent claims.

One of the main challenges of addressing climate change and the rising food demand worldwide are yield losses due to unwanted growth of weeds on agricultural soil. Weeds compete with crops (wanted plants) for space, light, water and nutrients. Besides the mentioned competition, further problems for the crops such as damage by insects, fungi and bacteria can be related to weed growth. Furthermore, the uncontrolled growth of weeds in cities, municipalities and in home gardens is considered to be unattractive and can pose a safety risk.

For this reason, weeds are combated and/or destroyed by thermal methods such as flaming, by manual or automated weeding, by chemical herbicides and/or surface solidification techniques.

The solidification techniques have in common that a hardened surface layer is formed, suppressing weed emergence. Most of these methods are based on inorganic binders, e.g. silicate cement, magnesia binders, aluminate cement or a mixture of slag and calcium oxide. Patent JPH06245680A, for example, discloses the formation of a hardened layer on a surface with a weed controlling mixture comprising cement. Cementitious binders are usually contaminated with heavy metals such as nickel and chromium (VI), which are strongly regulated in agricultural applications. Solidification techniques have in common that they require a higher application amount per square metre in comparison to e.g. chemical herbicides, due to their different mode(s) of action.

Manual and/or automated weeding requires regular execution (e.g. once per month or more often) and consequently physical presence on the field while executing the mechanical work. Thus, these methods are labour intensive and bear the risk of damage to the wanted plants. Also, weeds usually start growing simultaneously and during a short period of time, leaving a short time window for labour intensive means of combating weeds. This could be especially problematic in the case of fast flowering and thus fast spreading weeds, resulting in subsequent airborne seed dispersion.

Molecular herbicides are known since the 19th century and have been changing the agricultural industry significantly ever since. The first highly efficient molecular herbicide was 2,4-dichlorophenoxyacetic acid (2,4-D). Currently, the most widely used molecular herbicide worldwide is glyphosate. Most molecules acting as herbicides exhibit (acute) toxicity, are classified or suspected to be carcinogenic and/or cause environmental problems in the short and long term. Furthermore, it can currently be observed that more and more resistances against molecular herbicides are being developed. Therefore, they must be used in higher quantities or in new combinations, which further increases the negative aspects mentioned above as well as the cost of their use.

Molecules being used as herbicides are usually synthetic and are designed to reduce plant growth by interfering with certain biosynthetic pathways within the plant. Thus, they are selective toxins for certain plants. Due to their chemical structure, these chemicals exhibit risks for other plants, humans and/or the entire ecosystem. Furthermore, they may contain toxic elements, e.g. tin or fluorine. Use of herbicides containing these elements also leads to accumulation of said elements in the environment. Depending on the water solubility and degradation properties, the products or metabolites of the herbicides are washed out of the soil and exposed to the environment. Consequently, said molecular herbicides are strongly regulated (especially in the past 10 years), need to be certified, and their substitution is desired and/or the amounts used should be reduced.

Stabilised agrochemicals promise higher efficiency than conventional pesticides by stabilising and/or changing the release profile of the molecular herbicides, however, they still rely on the effect of the molecular herbicides as a plant toxin (CN110140727A, WO2013186695A1). For any specific composition, much has to be learned about the effect and specific gain of efficiency of stabilised agrochemicals compared to conventional products (Nanotoxicology 2016, 10, (3), 257-278; Arabian Journal of Chemistry 2020, 13, (1), 3172-3182).

It was therefore a primary object of the present invention to provide a means for preventing or reducing plant growth, preferably weed growth, that would overcome the problems described above.

According to a first aspect of the present invention, the stated object is achieved by the use of a composition comprising or consisting of a plurality of particles,

wherein the particles comprise or consist of the following components

(i) one or more alkaline earth cation(s), preferably calcium and/or magnesium ions, and

(ii) one or more inorganic anion(s) selected from the group consisting of silicate and phosphate anion(s), and

(iii) optionally bound water (preferably crystal water and/or water(s) of hydration), and

(iv) optionally one or more organic substance(s),

as herbicide,

wherein the plurality of particles contained in the composition is applied in an amount of from 0.1 to 100 g/m$^2$.

The application amount in g/m$^2$ relates to the amount of composition (as defined herein) in grams applied to the sum of the total surface area of a substrate (on/in which one or more unwanted plant(s) and/or seeds thereof are located) that is treated with the composition, if applicable, and of the total surface area of unwanted plants and/or seeds thereof that are treated with the composition, if applicable.

Herein generally described is also the use of a composition comprising or consisting of a plurality of particles,

wherein the particles comprise or consist of the following components

(i) one or more alkaline earth cation(s), preferably calcium and/or magnesium ions, and

(ii) one or more inorganic anion(s) selected from the group consisting of silicate and phosphate anion(s), and

(iii) optionally bound water (preferably crystal water and/or water(s) of hydration), and

(iv) optionally one or more organic substance(s),

as herbicide.

In the course of the studies underlying the present invention, it was surprisingly found that the use of a composition as described herein very efficiently prevents or reduces plant growth, preferably weed growth, when contacted with (unwanted) plants and/or seeds thereof. When used against unwanted plants, i.e. against weeds, the composition as defined herein thus displays a strong herbicidal effect (as demonstrated further below in the examples).

Within the framework of the present text, it is not the hardening of the substrate, on/in which one or more unwanted plant(s) and/or seed(s) thereof are located, that causes the herbicidal effect. On the contrary, the herbicidal effect within the framework of the present text is caused by directly contacting a composition as defined herein with an unwanted plant and/or seed thereof. The herbicidal effect reduces the growth of said unwanted plant and/or reduces or inhibits sprouting of the seeds of said unwanted plant.

Within the framework of the present text, the term "hardening of a/the substrate" relates to the formation of one or more layer(s) or area(s) on/in the substrate that are resistant to the penetration of (unwanted) plants and/or seeds thereof (due to their hardness). The hardness of a substrate corresponds to the breaking force (in Newton (N)) that must be applied to break said layer(s) or area(s). The breaking of a hardened layer or area is the point at which permanent plastic deformation of the layer or area results in physical separation of the body into multiple parts and thus the layer or area can no longer be modelled as one material element. This is called failure of the hardened layer or area. The breaking force (maximum value of the force measurement) can be determined using the method based on the standardized test method for strength determination in cement DIN EN 196-1 :2005-05. According to the manufacturer, the breaking force is measured using a digital (breaking) force instrument. A test piece is pressed into the specimen (until failure) with the aid of a crank test stand and the applied force is continuously measured. The average breaking force is calculated from several measurements (>3).

Thus, according to a preferred embodiment of the use according to the invention, no layer(s) or area(s) are formed on/in a substrate, on/in which one or more (unwanted) plant(s) and/or seed(s) thereof are located, that are resistant to the penetration of the (unwanted) plants and/or seeds thereof (due to their hardness).

The application of the composition as defined herein, i.e. of the plurality of particles as defined herein, may take place before the emergence of the unwanted plant (acting as pre-emergence herbicide) and/or after the emergence (acting as post-emergence herbicide) of the unwanted plant from the substrate. This leads either to contact of the composition as defined herein with the seeds and/or sprouts of the unwanted plant and/or to contact with the (young) unwanted plant.

Preferred is an application of the composition as defined herein to plants, preferably weeds, during a BBCH growth stage of the plants of from 0 to 97, more preferably from 0 to 60, more preferably from 0 to 50, more preferably 0 to 40, more preferably from 0 to 30, more preferably from 0 to 20, more preferably from 0 to 15, most preferably from 0 to 10 (Growth stages of mono- and dicotyledonous plants, BBCH Monograph, DOI: 10.5073/20180906-074619).

According to a preferred embodiment, the composition used according to the invention consists of the plurality of particles as defined herein.

Preferably, the composition, i.e. also the particles, used according to the invention is/are essentially free from copper, zinc, iron, titanium, chromium, lead, nickel, arsenic, mercury, and manganese (in elemental, ionic or any other form).

Preferably, the composition, i.e. also the particles, used according to the invention does/do not comprise any copper, zinc, iron, titanium, chromium, lead, nickel, arsenic, mercury, and manganese.

Preferably, the composition, i.e. also the particles, used according to the invention does/do not comprise any copper.

Preferably, the concentration of copper in the composition used according to the invention is below 1000 $\mu$g/g and above 0.01 $\mu$g/g, more preferably below 750 $\mu$g/g and above 0.01 $\mu$g/g, more preferably below 500 $\mu$g/g and above 0.01 $\mu$g/g, more preferably below 400 $\mu$g/g and above 0.01 $\mu$g/g, more preferably below 300 $\mu$g/g and above 0.01 $\mu$g/g, most preferably below 200 $\mu$g/g and above 0.01 $\mu$g/g.

Preferably, the concentration of copper in the particles contained in the composition used according to the invention is below 1000 $\mu$g/g and above 0.01 $\mu$g/g, more preferably below 750 $\mu$g/g and above 0.01 $\mu$g/g, more preferably below 500 $\mu$g/g and above 0.01 $\mu$g/g, more preferably below 400 $\mu$g/g and above 0.01 $\mu$g/g, more preferably below 300 $\mu$g/g and above 0.01 $\mu$g/g, most preferably below 200 $\mu$g/g and above 0.01 $\mu$g/g.

The concentration referred to with respect to agriculturally regulated (non-wanted or wanted) elements (e.g., but bot exclusively, copper, zinc, iron, titanium, chromium, lead, nickel, arsenic, mercury, and manganese) is measured in m(element or ion)/m(composition). Most preferably, it refers to "dry mass content", determined with standard agricultural techniques; in the present case including bound water in m(composition).

Preferably, the composition, i.e. also the particles, used according to the invention does/do not comprise any zinc.

Preferably, the concentration of zinc in the composition used according to the invention is below 1000 $\mu$g/g and above 0.01 $\mu$g/g, more preferably below 750 $\mu$g/g and above 0.01 $\mu$g/g, more preferably below 500 $\mu$g/g and above 0.01 $\mu$g/g, more preferably below 400 $\mu$g/g and above 0.01 $\mu$g/g, more preferably below 300 $\mu$g/g and above 0.01 $\mu$g/g, most preferably below 200 $\mu$g/g and above 0.01 $\mu$g/g.

Preferably, the concentration of zinc in the particles contained in the composition used according to the invention is below 1000 $\mu$g/g and above 0.01 $\mu$g/g, more preferably below 750 $\mu$g/g and above 0.01 $\mu$g/g, more preferably below 500 $\mu$g/g and above 0.01 $\mu$g/g, more preferably below 400 $\mu$g/g and above 0.01 $\mu$g/g, more preferably below 300 $\mu$g/g and above 0.01 $\mu$g/g, most preferably below 200 $\mu$g/g and above 0.01 $\mu$g/g.

Preferably, the composition, i.e. also the particles, used according to the invention does/do not comprise any iron.

Preferably, the concentration of iron in the composition used according to the invention is below 1000 $\mu$g/g and above 0.01 $\mu$g/g, more preferably below 750 $\mu$g/g and above 0.01 $\mu$g/g, more preferably below 500 $\mu$g/g and above 0.01 $\mu$g/g, more preferably below 400 $\mu$g/g and above 0.01 $\mu$g/g, more preferably below 300 $\mu$g/g and above 0.01 $\mu$g/g, more preferably below 200 $\mu$g/g and above 0.01 $\mu$g/g.

Preferably, the concentration of iron in the particles contained in the composition used according to the invention is below 1000 $\mu$g/g and above 0.01 $\mu$g/g, more preferably below 750 $\mu$g/g and above 0.01 $\mu$g/g, more preferably below 500 $\mu$g/g and above 0.01 $\mu$g/g, more preferably below 400 $\mu$g/g and above 0.01 $\mu$g/g, more preferably below 300 $\mu$g/g and above 0.01 $\mu$g/g, more preferably below 200 $\mu$g/g and above 0.01 $\mu$g/g.

Preferably, the composition, i.e. also the particles, used according to the invention does/do not comprise any titanium.

Preferably, the concentration of titanium in the composition used according to the invention is below 1000 $\mu$g/g and above 0.01 $\mu$g/g, more preferably below 750 $\mu$g/g and above 0.01 $\mu$g/g, more preferably below 500 $\mu$g/g and above 0.01 $\mu$g/g, more preferably below 400 $\mu$g/g and above 0.01 $\mu$g/g, more preferably below 300 $\mu$g/g and above 0.01 $\mu$g/g, more preferably below 200 $\mu$g/g and above 0.01 $\mu$g/g.

Preferably, the concentration of titanium in the particles contained in the composition used according to the invention is below 1000 $\mu$g/g and above 0.01 $\mu$g/g, more preferably below 750 $\mu$g/g and above 0.01 $\mu$g/g, more preferably below 500 $\mu$g/g and above 0.01 $\mu$g/g, more preferably below 400 $\mu$g/g and above 0.01 $\mu$g/g, more preferably below 300 $\mu$g/g and above 0.01 $\mu$g/g, more preferably below 200 $\mu$g/g and above 0.01 $\mu$g/g.

Preferably, the composition, i.e. also the particles, used according to the invention does/do not comprise any chromium.

Preferably, the concentration of chromium in the composition used according to the invention is below 1000 $\mu$g/g and above 0.01 $\mu$g/g, more preferably below 750 $\mu$g/g and above 0.01 $\mu$g/g, more preferably below 500 $\mu$g/g and above 0.01 $\mu$g/g, more preferably below 400 $\mu$g/g and above 0.01 $\mu$g/g, more preferably below 300 $\mu$g/g and above 0.01 $\mu$g/g, more preferably below 200 $\mu$g/g and above 0.01 $\mu$g/g.

Preferably, the concentration of chromium in the particles contained in the composition used according to the invention is below 1000 $\mu$g/g and above 0.01 $\mu$g/g, more preferably below 750 $\mu$g/g and above 0.01 $\mu$g/g, more preferably below 500 $\mu$g/g and above 0.01 $\mu$g/g, more preferably below 400 $\mu$g/g and above 0.01 $\mu$g/g, more preferably below 300 µg/g and above 0.01 µg/g, more preferably below 200 µg/g and above 0.01 µg/g.

Preferably, the composition, i.e. also the particles, used according to the invention does/do not comprise any chromium(VI).

Preferably the concentration of chromium(VI) in the composition used according to the invention is below 2 µg and above 0.01 µg/g, more preferably below 1.5 µg and above 0.01 µg/g, more preferably below 1 µg and above 0.01 µg/g, more preferably below 0.5 µg and above 0.01 µg/g.

Preferably the concentration of chromium(VI) in the particles contained in the composition used according to the invention is below 2 µg and above 0.01 µg/g, more preferably below 1.5 µg and above 0.01 µg/g, more preferably below 1 µg and above 0.01 µg/g, more preferably below 0.5 µg and above 0.01 µg/g.Preferably, the composition, i.e. also the particles, used according to the invention does/do not comprise any lead.

Preferably, the concentration of lead in the composition used according to the invention is below 1000 µg/g and above 0.01 µg/g, more preferably below 750 µg/g and above 0.01 µg/g, more preferably below 500 µg/g and above 0.01 µg/g, more preferably below 400 µg/g and above 0.01 µg/g, more preferably below 300 µg/g and above 0.01 µg/g, more preferably below 200 µg/g and above 0.01 µg/g, more preferably below 150 µg/g and above 0.01 µg/g, more preferably below 100 µg/g and above 0.01 µg/g, most preferably below 75 µg/g and above 0.01 µg/g.

Preferably, the concentration of lead in the particles contained in the composition used according to the invention is below 1000 µg/g and above 0.01 µg/g, more preferably below 750 µg/g and above 0.01 µg/g, more preferably below 500 µg/g and above 0.01 µg/g, more preferably below 400 µg/g and above 0.01 µg/g, more preferably below 300 µg/g and above 0.01 µg/g, more preferably below 200 µg/g and above 0.01 µg/g, more preferably below 150 µg/g and above 0.01 µg/g, more preferably below 100 µg/g and above 0.01 µg/g, most preferably below 75 µg/g and above 0.01 µg/g.

Preferably, the composition, i.e. also the particles, used according to the invention does/do not comprise any nickel.

Preferably, the concentration of nickel in the composition used according to the invention is below 1000 µg/g and above 0.01 µg/g, more preferably below 750 µg/g and above 0.01 µg/g, more preferably below 500 µg/g and above 0.01 µg/g, more preferably below 400 µg/g and above 0.01 µg/g, more preferably below 300 µg/g and above 0.01 µg/g, more preferably below 200 µg/g and above 0.01 µg/g, more preferably below 150 µg/g and above 0.01 µg/g, more preferably below 100 µg/g and above 0.01 µg/g, more preferably below 75 µg/g and above 0.01 µg/g, more preferably below 50 µg/g and above 0.01 µg/g, more preferably below 40 µg/g and above 0.01 µg/g, most preferably below 30 µg/g and above 0.01 µg/g.

Preferably, the concentration of nickel in the particles contained in the composition used according to the invention is below 1000 µg/g and above 0.01 µg/g, more preferably below 750 µg/g and above 0.01 µg/g, more preferably below 500 µg/g and above 0.01 µg/g, more preferably below 400 µg/g and above 0.01 µg/g, more preferably below 300 µg/g and above 0.01 µg/g, more preferably below 200 µg/g and above 0.01 µg/g, more preferably below 150 µg/g and above 0.01 µg/g, more preferably below 100 µg/g and above 0.01 µg/g, more preferably below 75 µg/g and above 0.01 µg/g, more preferably below 50 µg/g and above 0.01 µg/g, more preferably below 40 µg/g and above 0.01 µg/g, most preferably below 30 µg/g and above 0.01 µg/g.

Preferably, the composition, i.e. also the particles, used according to the invention does/do not comprise any arsenic.

Preferably, the concentration of arsenic in the composition used according to the invention is below 1000 µg/g and above 0.01 µg/g, more preferably below 750 µg/g and above 0.01 µg/g, more preferably below 500 µg/g and above 0.01 µg/g, more preferably below 400 µg/g and above 0.01 µg/g, more preferably below 300 µg/g and above 0.01 µg/g, more preferably below 200 µg/g and above 0.01 µg/g, more preferably below 150 µg/g and above 0.01 µg/g, more preferably below 100 µg/g and above 0.01 µg/g, more preferably below 75 µg/g and above 0.01 µg/g, more preferably below 40 µg/g and above 0.01 µg/g, more preferably below 30 µg/g and above 0.01 µg/g, most preferably below 20 µg/g and above 0.01 µg/g.

Preferably, the concentration of arsenic in the particles contained in the composition used according to the invention is below 1000 µg/g and above 0.01 µg/g, more preferably below 750 µg/g and above 0.01 µg/g, more preferably below 500 µg/g and above 0.01 µg/g, more preferably below 400 µg/g and above 0.01 µg/g, more preferably below 300 µg/g and above 0.01 µg/g, more preferably below 200 µg/g and above 0.01 µg/g, more preferably below 150 µg/g and above 0.01 µg/g, more preferably below 100 µg/g and above 0.01 µg/g, more preferably below 75 µg/g and above 0.01 µg/g, more preferably below 40 µg/g and above 0.01 µg/g, more preferably below 30 µg/g and above 0.01 µg/g, most preferably below 20 µg/g and above 0.01 µg/g.

Preferably, the composition, i.e. also the particles, used according to the invention does/do not comprise any mercury.

Preferably, the concentration of mercury in the composition used according to the invention is below 30 µg/g and above 0.01 µg/g, more preferably below 20 µg/g and above 0.01 µg/g, more preferably below 10 µg/g and above 0.01 µg/g, more preferably below 5 µg/g and above 0.01 µg/g, more preferably below 2,5 µg/g and above 0.01 µg/g, more preferably below 1 µg/g and above 0.01 µg/g, more preferably below 0,75 µg/g and above 0.01 µg/g, more preferably below 0,5 $\mu$g/g and above 0.01 $\mu$g/g, more preferably below 0,25 $\mu$g/g and above 0.01 $\mu$g/g, most preferably below 0,1 $\mu$g/g and above 0.01 $\mu$g/g.

Preferably, the concentration of mercury in the particles contained in the composition used according to the invention is below 30 $\mu$g/g and above 0.01 $\mu$g/g, more preferably below 20 $\mu$g/g and above 0.01 $\mu$g/g, more preferably below 10 $\mu$g/g and above 0.01 $\mu$g/g, more preferably below 5 $\mu$g/g and above 0.01 $\mu$g/g, more preferably below 2,5 $\mu$g/g and above 0.01 $\mu$g/g, more preferably below 1 $\mu$g/g and above 0.01 $\mu$g/g, more preferably below 0,75 $\mu$g/g and above 0.01 $\mu$g/g, more preferably below 0,5 $\mu$g/g and above 0.01 $\mu$g/g, more preferably below 0,25 $\mu$g/g and above 0.01 $\mu$g/g, most preferably below 0,1 $\mu$g/g and above 0.01 $\mu$g/g.

Preferably, the composition, i.e. also the particles, used according to the invention does/do not comprise any manganese.

Preferably, the concentration of manganese in the composition used according to the invention is below 1000 $\mu$g/g and above 0.01 $\mu$g/g, more preferably below 750 $\mu$g/g and above 0.01 $\mu$g/g, more preferably below 500 $\mu$g/g and above 0.01 $\mu$g/g, more preferably below 400 $\mu$g/g and above 0.01 $\mu$g/g, more preferably below 300 $\mu$g/g and above 0.01 $\mu$g/g, more preferably below 200 $\mu$g/g and above 0.01 $\mu$g/g, more preferably below 150 $\mu$g/g and above 0.01 $\mu$g/g, more preferably below 100 $\mu$g/g and above 0.01 $\mu$g/g, more preferably below 75 $\mu$g/g and above 0.01 $\mu$g/g, more preferably below 50 $\mu$g/g and above 0.01 $\mu$g/g, more preferably below 40 $\mu$g/g and above 0.01 $\mu$g/g, most preferably below 30 $\mu$g/g and above 0.01 $\mu$g/g.

Preferably, the concentration of manganese in the particles contained in the composition used according to the invention is below 1000 $\mu$g/g and above 0.01 $\mu$g/g, more preferably below 750 $\mu$g/g and above 0.01 $\mu$g/g, more preferably below 500 $\mu$g/g and above 0.01 $\mu$g/g, more preferably below 400 $\mu$g/g and above 0.01 $\mu$g/g, more preferably below 300 $\mu$g/g and above 0.01 $\mu$g/g, more preferably below 200 $\mu$g/g and above 0.01 $\mu$g/g, more preferably below 150 $\mu$g/g and above 0.01 $\mu$g/g, more preferably below 100 $\mu$g/g and above 0.01 $\mu$g/g, more preferably below 75 $\mu$g/g and above 0.01 $\mu$g/g, more preferably below 50 $\mu$g/g and above 0.01 $\mu$g/g, more preferably below 40 $\mu$g/g and above 0.01 $\mu$g/g, most preferably below 30 $\mu$g/g and above 0.01 $\mu$g/g.

Preferably, the composition, i.e. also the particles, used according to the invention neither comprises any humic acid nor any humates (salts of humic acid), in particular does not comprise any potassium humate. Thus, a use according to the invention is preferred, wherein the organic substance of component (iv) is neither humic acid nor potassium humate, preferably is not potassium humate.

Preferably, the composition, i.e. also the particles, used according to the invention does/do not comprise any cement. Preferably, cement is a substance which hardens by hydration of clinker minerals when water is added.

Preferably, the composition, i.e. also the particles, used according to the invention does/do not comprise any molecular herbicides.

A molecule is a polyatomic entity that is held together by covalent bonding. It is the smallest entity of a given pure substance and has a molecular mass that can be determined, preferably by mass spectrometry. A molecule is fixed by the covalent bonds and represented by a chemical formula.

Typical examples of molecular herbicides are: Thifensulfuron methyl ester, oxamethoxam ethyl ester, lactoferox, azoxysulme salt, glyphosate, glufosinate, 3-phenyluracils, chlorflurenol, chlorflurenol-methyl, cinmethylin, cumyluron, dalapon, dazomet, dicamba, difenzoquat, difenzoquat-metilsulfate, dimethipin, disodium methyl arsonate, dymron, endothal and its salts, etobenzanid, flamprop, flamprop-isopropyl, flamprop-methyl, flamprop-M-isopropyl, flamprop-M-methyl, flurenol, flurenol-butyl, flurprimidol, fosamine, fosamine-ammonium, indanofan, indaziflam, maleic hydrazide, mefluidide, metam, methiozolin, methyl azide, methyl bromide, methyl-dymron, methyl iodide, mono sodium methyl arsonate, oxaziclomefone, oxynil (i.e. bromoxynil or ioxynil), pelargonic acid, pyributicarb, quinoclamine, sulfonylureas triaziflam, tridiphane and 6-chloro-3-(2-cyclopropyl-6-methylphenoxy)-4-pyridazinol (CAS 499223-49-3). Further typical molecular herbicides are listed in Candidates for Substitution, published 27 January 2015 by the European commission.

The one or more organic substance(s) referred to in component (iv) of the particles as defined herein preferably are the templates that were used to synthesise the particles. Hence, they may still be present on/in the particles after synthesis.

Preferably, the one or more organic substance(s) referred to in component (iv) of the particles as defined herein are not molecular herbicides.

Preferably, the composition used according to the invention is not a controlled release formulation.

Preferably, the particles contained in the composition used according to the invention act as herbicides themselves.

Preferably, the particles contained in the composition used according to the invention are non-hollow particles.

Preferably, the composition, i.e. also the particles, used according to the invention are colloidally stable. Most preferably, they retain their herbicidal activity (e.g., but not exclusively through sedimentation) for at least one week after synthesis. More preferably, the composition, i.e. also the particles, used according to the invention, retain their herbicidal activity for at least two weeks after synthesis, more preferably for at least one month after synthesis, more preferably for at least two months after synthesis, more preferably for at least three months after synthesis, more preferably for at least six months after synthesis, more preferably for at least 12 months after synthesis, more preferably for at least 18 months after synthesis, more preferably for at least 24 months after synthesis, most preferably for at least 36 months after synthesis. Preferably the herbicidal activity of the composition, i.e. also the particles, used according to the invention reduces by less than 50%, preferably less than 40%, preferably less than 30%, preferably less than 20%, preferably less than 15%, preferably less than 10%, preferably less than 5%, in a time period of two years after synthesis, comparing the mass of the composition needed to gain a certain herbicidal activity directly after synthesis to the mass needed to gain a similar herbicidal activity after two years of the initial measurement.

Generally described herein is also the use of a composition comprising or consisting of a plurality of particles, wherein the particles comprise or consist of the following components

(i) one or more alkaline earth cation(s), preferably calcium and/or magnesium ions, and

(ii) one or more inorganic anion(s) selected from the group consisting of silicate and phosphate anion(s), and

(iv) optionally one or more organic substance(s),

as herbicide.

Another embodiment relates to the use of a composition comprising or consisting of a plurality of particles, wherein the particles comprise or consist of the following components

(i) one or more alkaline earth cation(s), preferably calcium and/or magnesium ions, and

(ii) one or more inorganic anion(s) selected from the group consisting of silicate and phosphate anion(s), and

(iv) optionally one or more organic substance(s),

as herbicide,

wherein the plurality of particles contained in the composition is applied in an amount of from 0.1 to 100 g/m$^2$.

Generally described herein is also the use of a composition comprising or consisting of a plurality of particles, wherein the particles comprise or consist of the following components

(i) one or more alkaline earth cation(s), preferably calcium and/or magnesium ions, and

(ii) one or more inorganic anion(s) selected from the group consisting of silicate and phosphate anion(s), and

(iii) optionally crystal water, and

(iv) optionally one or more organic substance(s),

as herbicide.

Another embodiment relates to the use of a composition comprising or consisting of a plurality of particles, wherein the particles comprise or consist of the following components

(i) one or more alkaline earth cation(s), preferably calcium and/or magnesium ions, and

(ii) one or more inorganic anion(s) selected from the group consisting of silicate and phosphate anion(s), and

(iii) optionally crystal water, and

(iv) optionally one or more organic substance(s),

as herbicide,

wherein the plurality of particles contained in the composition is applied in an amount of from 0.1 to 100 g/m$^2$.

According to another preferred embodiment, the composition used according to the invention does not comprise any organisms capable of forming carbonate and/or of inducing and/or catalysing carbonate formation.

According to another preferred embodiment, the composition used according to the invention does not comprise any enzymes capable of forming carbonate and/or of inducing and/or catalysing carbonate formation.

According to a most preferred embodiment, the composition used according to the invention neither comprises any organisms nor any enzymes capable of forming carbonate and/or of inducing and/or catalysing carbonate formation.

According to another preferred embodiment, the composition used according to the invention is not a joint filling mixture or joint filling sand (i.e. a mixture or sand that is used to fill the gaps between blocks or stones to create, for example, paths, driveways or roads). Joint filling mixtures or sands usually comprise a large portion of sand.

According to another preferred embodiment, the composition used according to the invention does not prevent or reduce the growth of unwanted plants and/or seeds thereof on/in a substrate by hardening said substrate.

According to another preferred embodiment, the composition used according to the invention does not harden a substrate it is applied to and/or introduced into to prevent or reduce the growth of unwanted plants and/or seeds thereof.

The composition used according to the invention has an acidic, basic or neutral pH value.

According to one embodiment of the invention, the pH value of the composition is acidic. Preferably the pH value of the composition is between 1.0 to 6.5, more preferably 2 to 6.25, more preferably 3 to 6.0, most preferably 4 to 5.5.

According to another embodiment of the invention, the pH value of the composition is neutral. Preferably, the pH value of the composition is between more than 6.5 to 7.5, more preferably is 6.6 to 7.4, more preferably 6.7 to 7.3, most preferably 6.8 to 7.2.

According to another embodiment of the invention, the pH value of the composition is alkaline. Preferably, the pH value of the composition is between more than 7.5 to 14, more preferably is 7.75 to 13.75, more preferably 8.0 to 13.5, more preferably 8.25 to 13.25, more preferably 8.5 to 13.0, most preferably 8.75 to 12.75.

More preferably, the composition used according to the invention has a neutral or basic pH value. Most preferably, the pH value of the composition is basic.

Preferable sources for the one or more alkaline earth cation(s) defined in component (i) are calcium salts, preferably calcium oxide, calcium nitrate, calcium formate, calcium acetate, calcium propionate, calcium butyrate, calcium hydroxide, calcium lactate, calcium pyruvate, calcium salicylate, calcium disulfamate, and calcium chloride, and magnesium salts, preferably magnesium oxide, magnesium nitrate, magnesium formate, magnesium acetate, magnesium propionate, magnesium butyrate, magnesium hydroxide, magnesium lactate, magnesium sulfate, magnesium pyruvate, magnesium salicylate, magnesium disulfamate, and magnesium chloride. Further preferred are mixtures and derivatives of the before mentioned.

Advantageously, the counter-anions of the alkaline earth cations used to synthesise the plurality of particles can also function as ligands and/or templates during particle synthesis.

Preferable sources for the one or more inorganic anion(s) defined in component (ii) are silicates, preferably alkali (lithium, sodium and/or potassium) silicates, more preferably of modulus M = 0.01 to 5.0, siloxanes, microsilica, amorphous silica, phosphoric acid, sodium dihydrogen phosphate, disodium hydrogen phosphate, trisodium phosphate, aluminium phosphate, potassium dihydrogen phosphate, dipotassium hydrogen phosphate, and tripotassium phosphate. Further preferred are mixtures and derivatives of the before mentioned.

According to an alternative embodiment, the one or more inorganic anion(s) of component (ii) of the particles used according to the invention is/are selected from the group consisting of silicate, phosphate, aluminate, sulfate, carbonate, and bicarbonate anion(s). Thus, further preferred sources for inorganic anions are sulfates, preferably ammonium sulfate and sodium sulfate, and aluminates, preferably sodium and potassium aluminate. Most preferred sources for inorganic anions are sodium aluminate, potassium aluminate, aluminium chloride, aluminium sulfate, aluminium hydroxide, sodium sulfate, potassium sulfate, ammonium sulfate, sulphuric acid, sodium hydrogen carbonate, disodium carbonate, potassium hydrogen carbonate, and dipotassium carbonate.

According to a preferred embodiment of the invention, the average ratio of the total number of alkaline earth cations (cf. component (i)) to the total number of organic substance molecules (cf. component (iv)) in the plurality of particles as defined herein is in a range of from more than 0.000001 to 1000000, preferably from more than 0.00001 to 100000, preferably from more than 0.00005 to 50000, more preferably from more than 0.0001 to 50000, more preferably from more than 0.001 to 50000, more preferably from more than 0.01 to 50000, more preferably from more than 0.01 to 10000, more preferably from more than 0.05 to 8000, more preferably from more than 0.1 to 6000, more preferably from more than 0.2 to 5000, more preferably from 0.5 to 4000, more preferably from 1 to 2000, more preferably from 1.5 to 1000, most preferably from 2 to 750. In case of polymers, the mass average molar mass Mw shall be used to calculate the number of organic substance molecules (n(organic substance) = m(organic substance) / Mw(organic substance); N(organic substance) = n(organic substance) x $N_A$; $N_A$ is the Avogadro constant).

In the context of the present text, the term plant stands for land plants (kingdom Plantae), including all gymnosperms, angiosperms, preferably monocotyledons and dicotyledons, mosses and ferns, i.e. the monophyletic group of embryophyta characterized by a common, functionally understood feature complex of several synapomorphies. Their main groups are the liverworts (Marchantiopsida), hornworts (Anthocerotopsida) and mosses (Bryopsida), which are often grouped in the paraphyletic moss group, lycopods (Lycopsida), horsetails (Equisetopsida) and ferns in the narrow sense (Filicopsida), grouped in the pteridophytes, as well as the monophyletic seed plants (Spermatophyta) with the angiosperms and the different development lines of the gymnosperms.

In the context of the present text, the term weed stands for all plants (including mosses and ferns) of the spontaneous or undesirable accompanying vegetation, in particular in agricultural or urban areas, grassland or (home) gardens, which develop from the seed potential of the soil (as first shoots or re-sprouts), *via* runners, preferably root and stem runners, plant fragments or seed inflows, and which are preferably not specifically cultivated there. Synonyms for weed are unwanted plant, wild herb and wild plant.

In the context of the present text, the terms cultivated plants, wanted plants and crops stand for plants whose growth or presence is desired.

Alkali metal cations are considered exchangeable in context of the present text. Thus, any mention of sodium salts in the present text includes any alkali metal cation, preferably the corresponding potassium salt. Any mention of potassium salts in the present text includes any alkali metal ions, preferably the corresponding sodium salt.

Any reference in the present text to a salt encompasses any protonation state of such salts, preferably monohydrogen, dihydrogen and trihydrogen forms of such salts are encompassed.

In the context of the present text, the organic substance(s) cited herein preferably are able to influence the particle size and/or shape of the plurality of particles by selectively adsorbing to surfaces formed during the nucleation and/or growth of the particles (i.e. are used as so-called "templates" or "ligands"). Thus, the organic substance(s) cited herein preferably is/are able to influence the characteristics of each particle (usually during the synthesis of said particle) and, thus, are able to influence the particulate characteristics of the plurality of particles (e.g. average length, average width, and average aspect ratio (as defined further below)).

Unless defined otherwise, technical and scientific terms used herein have the same meaning as commonly understood by one of ordinary skill in the art to which this invention belongs.

Preferably, the average particle size of the plurality of particles contained in the composition used according to the invention is in a range of from 0.001 to 2 μm, preferably from 0.001 μm to 1 μm, preferably from 0.002 μm to 0.900 μm, more preferably from 0.003 to 0.800 μm, more preferably from 0.005 to 0.700 μm, more preferably from 0.010 to 0.600 μm, more preferably from 0.015 to 0.500 μm, more preferably from 0.020 to 0.400 μm, more preferably from 0.025 to 0.350 μm, more preferably from 0.030 to 0.300 μm, more preferably from 0.035 to 0.250 μm, more preferably from 0.040 to 0.225 μm, more preferably from 0.045 to 0.200 μm, more preferably from 0.050 to 0.175 μm, more preferably from 0.055 to 0.160 μm, most preferably from 0.060 to 0.150 μm.

Preferably, the average particle size of the plurality of particles contained in the composition used according to the invention is in a range of from 0.001 to 2 μm, preferably from 0.001 μm to 1 μm, preferably from 0.002 μm to 0.900 μm, preferably from 0.002 μm to 0.800 μm, preferably from 0.002 μm to 0.700 μm, preferably from 0.002 μm to 0.600 μm, preferably from 0.002 μm to 0.500 μm, preferably from 0.002 μm to 0.400 μm, preferably from 0.002 μm to 0.300 μm, preferably from 0.002 to 0.200 μm, more preferably from 0.002 to 0.190 μm, more preferably from 0.002 to 0.170 μm, more preferably from 0.002 to 0.160 μm, more preferably from 0.002 to 0.150 μm, more preferably from 0.002 to 0.140 μm, more preferably from 0.002 to 0.130 μm, more preferably from 0.002 to 0.120 μm.

Preferably, the average particle size of the plurality of particles contained in the composition used according to the invention is in a range of from 0.001 to 2 μm, preferably from 0.001 μm to 1 μm, preferably from 0.005 μm to 0.900 μm, preferably from 0.005 μm to 0.800 μm, preferably from 0.005 μm to 0.700 μm, preferably from 0.005 μm to 0.600 μm, preferably from 0.005 μm to 0.500 μm, preferably from 0.005 μm to 0.400 μm, preferably from 0.005 μm to 0.300 μm, preferably from 0.005 to 0.200 μm, more preferably from 0.005 to 0.190 μm, more preferably from 0.005 to 0.170 μm, more preferably from 0.005 to 0.160 μm, more preferably from 0.005 to 0.150 μm, more preferably from 0.005 to 0.140 μm, more preferably from 0.005 to 0.130 μm, more preferably from 0.005 to 0.120 μm.

Preferably, the average particle size of the plurality of particles contained in the composition used according to the invention is in a range of from 0.010 to 2 μm, preferably from 0.010 μm to 1 μm, preferably from 0.010 μm to 0.900 μm, preferably from 0.010 μm to 0.800 μm, preferably from 0.010 μm to 0.700 μm, preferably from 0.010 μm to 0.600 μm, preferably from 0.010 μm to 0.500 μm, preferably from 0.010 μm to 0.400 μm, preferably from 0.010 μm to 0.300 μm, preferably from 0.010 to 0.200 μm, more preferably from 0.010 to 0.190 μm, more preferably from 0.010 to 0.170 μm, more preferably from 0.010 to 0.160 μm, more preferably from 0.010 to 0.150 μm, more preferably from 0.010 to 0.140 μm, more preferably from 0.010 to 0.130 μm, more preferably from 0.010 to 0.120 μm.

Preferably, the average particle size of the plurality of particles contained in the composition used according to the invention is in a range of from 0.025 to 2 μm, preferably from 0.025 μm to 1 μm, preferably from 0.025 μm to

0.900 µm, preferably from 0.025 µm to 0.800 µm, preferably from 0.025 µm to 0.700 µm, preferably from 0.025 µm to 0.600 µm, preferably from 0.025 µm to 0.500 µm, preferably from 0.025 µm to 0.400 µm, preferably from 0.025 µm to 0.300 µm, preferably from 0.025 to 0.200 µm, more preferably from 0.025 to 0.190 µm, more preferably from 0.025 to 0.170 µm, more preferably from 0.025 to 0.160 µm, more preferably from 0.025 to 0.150 µm, more preferably from 0.025 to 0.140 µm, more preferably from 0.025 to 0.130 µm, more preferably from 0.025 to 0.120 µm.

Preferably, the average particle size of the plurality of particles contained in the composition used according to the invention is in a range of from 0.050 to 2 µm, preferably from 0.050 µm to 1 µm, preferably from 0.050 µm to 0.900 µm, preferably from 0.050 µm to 0.800 µm, preferably from 0.050 µm to 0.700 µm, preferably from 0.050 µm to 0.600 µm, preferably from 0.050 µm to 0.500 µm, preferably from 0.050 µm to 0.400 µm, preferably from 0.050 µm to 0.300 µm, preferably from 0.050 to 0.200 µm, more preferably from 0.050 to 0.190 µm, more preferably from 0.050 to 0.170 µm, more preferably from 0.050 to 0.160 µm, more preferably from 0.050 to 0.150 µm, more preferably from 0.050 to 0.140 µm, more preferably from 0.050 to 0.130 µm, more preferably from 0.050 to 0.120 µm.

Preferably, the average particle size of the plurality of particles contained in the composition used according to the invention is in a range of from 0.075 to 2 µm, preferably from 0.075 µm to 1 µm, preferably from 0.075 µm to 0.900 µm, preferably from 0.075 µm to 0.800 µm, preferably from 0.075 µm to 0.700 µm, preferably from 0.075 µm to 0.600 µm, preferably from 0.075 µm to 0.500 µm, preferably from 0.075 µm to 0.400 µm, preferably from 0.075 µm to 0.300 µm, preferably from 0.075 to 0.200 µm, more preferably from 0.075 to 0.190 µm, more preferably from 0.075 to 0.170 µm, more preferably from 0.075 to 0.160 µm, more preferably from 0.075 to 0.150 µm, more preferably from 0.075 to 0.140 µm, more preferably from 0.075 to 0.130 µm, more preferably from 0.075 to 0.120 µm.

The average particle size of the plurality of particles contained in the composition used according to the invention as indicated herein corresponds to the Z average value determined by dynamic light scattering using [ISO22412:2008] (unless otherwise indicated). Solutions and/or suspensions containing the plurality of particles have to be homogenised before the measurements (cf. example 1). Also, ISO13321:1996 and/or X-ray scattering and/or static light scattering can be used to determine the average particle size of the plurality of particles.

Preferably, the plurality of particles contained in the composition is applied in an amount of from 0.25 to 100 g/m$^2$, preferably from 0.5 to 90 g/m$^2$, more preferably from 1 to 75 g/m$^2$, more preferably from 1 to 50 g/m$^2$, most preferably from 2 to 50 g/m$^2$.

Preferably, the plurality of particles contained in the composition is applied in an amount of from 0.1 to 90 g/m$^2$, preferably from 0.1 to 80 g/m$^2$, more preferably from 0.1 to 75 g/m$^2$, more preferably from 0.1 to 50 g/m$^2$, more preferably from 0.1 to 40 g/m$^2$, more preferably from 0.1 to 30 g/m$^2$, most preferably from 0.1 to 25 g/m$^2$.

Further preferred is a use according to the invention, wherein the plurality of particles contained in the composition is applied in an amount of from 0.25 to 100 g/m$^2$, preferably from 0.25 to 75 g/m$^2$, preferably from 0.25 to 50 g/m$^2$, preferably from 0.25 to 40 g/m$^2$, most preferably from 0.25 to 30 g/m$^2$.

Further preferred is a use according to the invention, wherein the plurality of particles contained in the composition is applied in an amount of from 0.5 to 100 g/m$^2$, preferably from 0.5 to 75 g/m$^2$, preferably from 0.5 to 50 g/m$^2$, preferably from 0.5 to 40 g/m$^2$, most preferably from 0.5 to 30 g/m$^2$.

Also preferred is a use according to the invention, wherein the plurality of particles contained in the composition is applied in an amount of from 1 to 75 g/m$^2$, preferably from 1 to 50 g/m$^2$, preferably from 1 to 40 g/m$^2$, most preferably from 1 to 30 g/m$^2$.

The composition comprising or consisting of a plurality of particles as defined herein can be applied to a substrate from which the unwanted plants already surfaced (post-emergence herbicide) or will surface (pre-emergence herbicide), and/or to unwanted plants and/or to the seeds thereof.

A preferred embodiment of the invention is the use of a composition comprising or consisting of a plurality of particles,

wherein the particles comprise or consist of the following components

(i) one or more alkaline earth cation(s), preferably calcium and/or magnesium ions, and

(ii) one or more inorganic anion(s) selected from the group consisting of silicate and phosphate anion(s), and

(iii) optionally bound water, and

(iv) optionally one or more organic substance(s),

as herbicide,

wherein the composition is applied to a substrate on/in which one or more unwanted plants and/or seed(s) thereof are located and to one or more unwanted plants and/or to seeds thereof, and

wherein the plurality of particles contained in the composition is applied in an amount of from 0.1 to 100 g/m$^2$.

In this case, the application amount in g/m$^2$ as defined herein relates to the amount of composition as defined herein in grams applied to the sum of the total surface area of the substrate (on/in which one or more unwanted plant(s) and/or seed(s) thereof are located) that is treated with the composition as defined herein and of the total surface area of the unwanted plants and/or seeds thereof that are treated with the composition as defined herein.

An alternative preferred embodiment of the invention is the use of a composition comprising or consisting of a plurality of particles,

wherein the particles comprise or consist of the following components

(i) one or more alkaline earth cation(s), preferably calcium and/or magnesium ions, and

(ii) one or more inorganic anion(s) selected from the group consisting of silicate and phosphate anion(s), and

(iii) optionally bound water, and

(iv) optionally one or more organic substance(s),

as herbicide,

wherein the composition is (only) applied to a substrate on/in which one or more unwanted plants and/or seed(s) thereof are located, and

wherein the plurality of particles contained in the composition is applied in an amount of from 0.1 to 100 g/m$^2$.

When the composition comprising or consisting of a plurality of particles as defined herein is (only) applied to a substrate on/in which one or more unwanted plants and/or seed(s) thereof are located (and not to the unwanted plants and/or to seeds thereof themselves), the application amount in g/m$^2$ as defined herein relates to the amount of composition as defined herein in grams applied to the total surface area of the substrate (on/in which one or more (unwanted) plant(s) and/or seed(s) thereof are located) that is treated with the composition as defined herein.

Another alternative preferred embodiment is the use of a composition comprising or consisting of a plurality of particles,

wherein the particles comprise or consist of the following components

(i) one or more alkaline earth cation(s), preferably calcium and/or magnesium ions, and

(ii) one or more inorganic anion(s) selected from the group consisting of silicate and phosphate anion(s), and

(iii) optionally bound water, and

(iv) optionally one or more organic substance(s),

as herbicide,

wherein the composition is applied to one or more unwanted plants and/or to seeds thereof, and

wherein the plurality of particles contained in the composition is applied in an amount of from 0.1 to 100 g/m$^2$.

When the composition comprising or consisting of a plurality of particles as defined herein is (only) applied to the unwanted plants and/or seeds thereof (and not to the substrate on/in which the one or more unwanted plants and/or seed(s) thereof are located), the application amount in g/m$^2$ as defined herein relates to the amount of composition as defined herein in grams applied to the total surface area of the unwanted plants and/or seeds thereof that are treated with the composition as defined herein.

Preferably, the plurality of particles contained in the composition is applied to a substrate (on/in which one or more (unwanted) plant(s) and/or seed(s) thereof are located) in an amount of from 0.1 to 100 g, preferably from 0.25 to 100 g, preferably from 0.5 to 90 g, more preferably from 1 to 75 g, more preferably from 1 to 50 g, most preferably from 2 to 50 g, per m$^2$ of the total surface of said substrate.

Preferably, the plurality of particles contained in the composition is applied to one or more (unwanted) plants and/or seeds thereof (whose growth is supposed to be reduced or prevented) in an amount of from 0.25 to 200 g, preferably from 0.5 to 100 g, preferably from 0.5 to 90 g, more preferably from 1 to 75 g, more preferably from 1 to 50 g, most preferably from 2 to 50 g, per m$^2$ of the total surface of said plants and/or seeds thereof.

Within the framework of the present text, a herbicide is a substance or composition capable of preventing or reducing plant growth, preferably weed growth, at a concentration of 100, 90, 75, 50, 25, 12.5, 10, 7.5, 5, 2.5, 2, 1.5, 1, 0.5, 0.25, 0.1, 0.01 g/m$^2$ or less.

A dose-performance correlation exists, meaning that lower dosages of the same herbicide acting in the same manner (e.g. exposure scenario, exterior conditions, similar assay) on the same plant and/or seed thereof should have a smaller effect than larger dosages, e.g. a lower degree of efficiency. Thus, the herbicidal characters of different substances or compositions can be compared.

According to a preferred embodiment of the use according to the invention, the composition is in solid form, preferably in powder form, granulate form, or aggregate form, in liquid form, preferably is a solution, a suspension or an emulsion, or in gel form or in paste form. Also mixed forms of the beforementioned forms are preferred. Most preferred is a use according to the invention, where the composition is in powder form, in granualate form or is a suspension.

In the context of the present text, powder (form) means that 95 wt.-% of the composition used according to the invention passes sieves with a mesh size of 4 mm (based on the total weight of said composition, according to DIN EN 12620 Aggregates for Concrete). Preferably, the content of liquid volatile components, preferably of water, most preferably of bulk water (as defined herein below), in a composition used according to the invention that is in powder form is 25 wt.-% or less, more preferably 15 wt.-% or less, more preferably 10 wt.-% or less, more preferably 5 wt.-% or less, most preferably 2.5 wt.-% or less, based on the total weight of said composition, excluding the bound water of component (iii) of the particles, if present.

In the context of the present text, granulate (form) means that 95 wt.-% of the composition used according to the invention passes sieves with a mesh size of 16 mm (based on the total weight of said composition, according to DIN EN 12620 Aggregates for Concrete). Preferably, the content of liquid volatile components, preferably of water, most preferably of bulk water, in the composition used according to the invention that is in granulate form is 25 wt.-% or less, more preferably 15 wt.-% or less, more preferably 10 wt.-% or less, more preferably 5 wt.-% or less, most preferably 2.5 wt.-% or less, based on the total weight of said composition, excluding the bound water of component (iii) of the particles, if present.

In the context of the present text, aggregate (form) means that 95 wt.-% of the composition used according to the invention does not pass sieves with a mesh size of 16 mm (based on the total weight of said composition, according to DIN EN 12620 Aggregates for Concrete). Preferably, the content of liquid volatile components, preferably of water, most preferably of bulk water, in the composition used according to the invention that is in aggregate form is 25 wt.-% or less, more preferably 15 wt.-% or less, more preferably 10 wt.-% or less, more preferably 5 wt.-% or less, most preferably 2.5 wt.-% or less, based on the total weight of said composition, excluding the bound water of component (iii) of the particles, if present.

In context of the present text, bulk water and bound water are distinguished. Bulk water is defined as water having the general physicochemical properties (e.g. relaxation time, vapour pressure) of liquid water. It can be contained in the composition as defined herein. Preferably, bulk water is the suspension agent and/or solvent in the composition used according to the invention. Bound water, if present, on the contrary is an integral component of the particles as defined herein (cf. optional component (iii) of the particles as defined herein), and is bound to the surface and/or within the particles as defined herein, e.g. is bound within crystal unit cells or held within gels. The binding of the bound water molecules may be caused by chemical and/or physical interactions, preferably by hydrogen bonding, van-der-Waals interaction(s), ionic interaction(s), hydrophobic interaction(s), coordination interaction(s) and mixtures thereof. The physicochemical properties of bound water (e.g. relaxation time, vapour pressure) are altered compared to bulk liquid water due to these bonds. The binding process causes reduced mobility of the bound water molecules compared to bulk water molecules. Preferably, bound water comprises water(s) of hydration and/or structural water and/or crystal water, the latter being water found in the crystalline framework. Most preferably, bound water is crystal water and/or water(s) of hydration. In case of amorphous substances, bound water can also be an integral part of the structure, e.g. in the form of structural water. Most preferably, water which requires temperatures of over 101 °C, preferably over 102 °C, preferably over 103 °C, preferably over 104 °C, most preferably over 105 °C to be evaporated at atmospheric pressure (1,013.25 hPa) is defined as bound water within the framework of the present text.

The content of liquid volatile components, preferably of water, in the composition used according to the invention can be determined by standard methods known to the skilled person. To distinguish the different binding states of water within a composition (e.g. bulk water and bound water) various techniques can be used such as relaxometry, thermal gravimetric analysis (TGA) and/or differential scanning calorimetry (DSC). For example, a gravimetric determination of the content of the bulk liquid volatile components can be performed by weighing the sample taken, heating it to a temperature above the boiling point, preferably less than 5% over the boiling point, more preferably 5% over the boiling point, of the liquid volatile components on the Celsius scale, for a sufficient period of time at atmospheric pressure (1,013.25 hPa) for drying, preferably until no further change in mass occurs, and then weighing the sample again. From the difference in weight before and after drying, the content in % by weight of liquid volatile components, preferably of water, can be determined. The crystal structures and/or the local order of inorganic ions and/or molecules within a particle on length scales of 0.002 µm of said composition, especially in the context of inorganic hydrates, must not change during the process. In the case where there is no change in crystal structures and/or the local order of inorganic ions and/or molecules within a particle on length scales of 0.002 µm of said composition upon removal of water, the separated water is bulk water. In the case of changes in the crystal structures and/or the local order of inorganic ions and/or molecules within a particle on length scales of 0.002 µm of said composition upon removal of water, bound water was removed. Another technique to determine the bound water content, preferably of inorganic hydrates, most preferably of calcium silicate hydrate and/or calcium silicate hydrate phosphate is small angle neutron scattering (Nature Materials 2007, 6, 311-316).

The composition used according to the present invention may be present or used in the form of one solid, preferably powder, granulate, or aggregate, liquid, preferably solution, suspension, or emulsion, gel or paste or in the form of two, three, four or more solid and/or powder and/or granulate and/or aggregate and/or solution-like and/or suspension-like and/or emulsion-like and/or gel-like and/or paste-like pre-compositions, which may be stored separately from each other before use and which are mixed together before or during the use according to the invention. Preferably, the composition used according to the invention is a solid or a mixture of two or more solid pre-compositions (powder(s) and/or granulate(s) and/or aggregate(s) and/or intermediate forms thereof). Most preferably, the composition used according to the invention is a powder, a suspension or an emulsion or a mixture of two or more powder-like, suspension-like and/or emulsion-like pre-compositions.

Particularly in the form of a powder and/or granulate and/or aggregate, i.e. in solid form, the composition used according to the invention or the corresponding pre-compositions advantageously has/have a particularly long storage stability, preferably of at least 12 to 36 months.

A powder form of the composition used according to the invention can be obtained by standard industrial processes known to the skilled person, e.g. by ambient drying, heat drying, spray drying, freeze drying, (low-temperature) vacuum drying, fluid bed drying and/or by filtration with or without filtering aids and/or by sedimentation and/or centrifugation and/or by mixing.

Mixing of precursors of single components of the composition used according to the invention, excluding additional water (not referring to the water that is optionally already bound within the precursors, preferably the water(s) of hydration and/or crystal water), may advantageously result in a ready-mix powder and/or a ready-mix granulate depending on the used conditions. Upon contact with (additional) water, the ready-mix powder and/or ready-mix granulate forms the composition used according to the invention.

The particles contained in the composition used according to the invention are solids. They may also be obtained, for instance, by solid state synthesis.

Preferably, a solid state synthesis of the particles contained in the composition used according to the invention can be done with or without the addition of, for example, (bulk) water to form a composition used according to the invention. Preferably the bringing in contact with water in case of ready-mix powder(s) and/or ready-mix granuale(s) and/or the solid state synthesis is done with a particular device, whose mixing principle, geometry, and/or mode of operation is optimised to produce the particles as defined herein (e.g. hammer mills, pin mills, ball mills, roller mills, high speed dispersers, (conical) screw mixers, high-shear mixer, blending devices, high pressure homogenizers, colloid mills, intensive mixers, mixing systems, granulating mixers, and/or pelletizing mixers and/or stirred tanks). The bringing in contact with water and/or the solid state synthesis can be done under reduced or elevated pressure and/or at ambient temperatures or elevated temperatures.

Preferably, the device used to synthesize the compositions used according to the invention is mounted on a mobile platform in order to be able to produce the compositions as defined herein close to the location of use to avoid long transport distances of liquids, especially of aqueous suspensions of said particles. Preferably, said device is modular, thus being easily dis- and reassembled.

A powder, granulate or aggregate form of the composition used according to the invention can be obtained by fluidised bed drying, spray agglomeration, dry agglomeration, granulation, extrusion, mixing, wet agglomeration, prilling, air drying as well as a combination and/or subsequent execution of said methods.

According to a preferred embodiment, component (iv) is present in the particles as defined herein and the, one, several or all of the organic substance(s) is/are selected from the group consisting of

(a) monomers and/or oligomers selected from the group consisting of

saccharides, preferably comprising maltose, galactose, xylose, lactose, sucrose, glucose, glucosamine, mannose, glycerol, gluconate, fructose and/or inulin;

more preferably selected from the group consisting of maltose, galactose, xylose, lactose, sucrose, glucose, glucosamine, mannose, glycerol, gluconate, fructose and inulin;

organic acids and derivatives thereof, preferably selected from the group consisting of monocarboxylic acids, preferably formic acid, acetic acid, propionic acid, butyric acid, benzoic acid and salicylic acid, dicarboxylic acids, preferably oxalic acid, malonic acid, succinic acid, glutaric acid, adipic acid and maleic acid, fatty acids, keto acids, preferably pyruvic acid and acetoacetic acid, fruit acids, preferably malic acid and tartaric acid, hydroxy acids, preferably lactic acid, alpha hydroxy acids and beta hydroxy acids, tricarboxylic acids, preferably citric acid, more preferably salts, carboxylates and esters of the before mentioned;

amino acids and derivatives thereof, preferably selected from the group consisting of alanine, aspartate, arginine, threonine, glycine, lysine, glutamine, glutamate, methionine, methylglycine diacetic acid and non-proteinogenic amino acids, preferably esters and amides thereof;

(b) (bio)polymers selected from the group consisting of

cellulose and derivatives thereof, preferably cellulose esters, cellulose ethers and cellulose carboxylates;

starch and derivatives thereof, preferably starch ethers, starch esters, starch carboxylates, cold swelling starches and hot swelling starches;

lignin and derivatives thereof, preferably lignin sulfonates, kraft-lignins and lignin carboxylates, most preferably calcium lignosulfonate, magnesium lignosulfonate, sodium lignosulfonate, and ammonium lignosulfonate;

pectins and derivatives thereof;

xanthan and derivates thereof;

guar ethers and derivatives thereof;

chitin and derivatives thereof;

algin and derivatives thereof, preferably alginate;

chitosan and derivatives thereof;

cylcodextrins and derivatives thereof;

dextrins and derivatives thereof;

natural glues, hydrogel formers, plant lime, latex, rubber and derivatives thereof;

proteins and peptides, preferably comprising one or more of the amino acids selected from the group consisting of alanine, glycine, lysine, asparagine, glutamine, glutamate, methionine, and non-proteinogenic amino acids;

industrial by-products, preferably from yeast production, polymer production, meat production, fruit production, fisheries, aquaculture, vegetable production, egg production, dairy industry and paper making, preferably corn steep liquor, lactose mother liquor, protein lysates, molasses, more preferably sugar beet molasse and sugar cane molasse, vegetable meals, preferably corn gluten meal, pea meal, fruit meals and protein wastes;liquid or dried polymer dispersions or polymers comprising organic acids, preferably sulfonic acids, carboxylic acids, peroxy carboxylic acids, thio carboxylic acids and salts thereof, sulfoxides, sulfides, cyanates, thiocyanates, esters, ethers, thioethers, oxides, thio oxides, amines, imines, hydrazines, hyrazones, amides, sulfates, nitriles, aldehydes, thio aldehydes, ketones, thioketones, oximes, alcohols, thiols, radicals, halogens, silanes, siloxanes, phosphates, phosponates, alkyls, allyls, aryls and derivatives thereof, preferably wherein the polymer(s) is/are biodegradable;

polysaccharides and derivatives thereof, preferably selected from the group consisting of polysaccharides comprising or consisting of mannose, xylose, ribose, maltose, galactose, xylose, lactose, glucose, fructose, sucrose and/or galactose and/or of derivatives of the before mentioned, and microbial exopolysaccharides, preferably comprising or consisting of mannose, xylose, ribose, maltose, galactose, xylose, lactose, sucrose, glucose, glucosamine, mannose, glycerol, gluconate, fructose and/or inulin and/or derivatives of the before mentioned;

(c) substances having an affinity towards the particle surface;

(d) emulsifiers; thixotropic agents;

(e) chemical and natural fungicides, molluscicides, and insecticides.

Preferably, the liquid or dried polymer dispersions or the liquid or dried polymers as defined above comprise polymers or copolymers containing one or more monomer(s) from the following list of monomers or are composed of two or more different monomers of the following list of monomers: Ethylene, propene, butadiene, butene, styrene, isoprene (and also further allylic and arylic monomers), acrylic acid and salts thereof, preferably carboxylates and esters thereof, vinyl monomers, such as vinyl acetate, vinyl chloride, vinyl neodecanoate, vinylpyrrolidone and vinylimidazole and each of their derivatives, isocyanic acid and salts thereof, more preferably cyanates, especially mono-, di- and polyisocyanates, alcohols, preferably polyhydric alcohols, more preferably diols, triols and tetraols, amines, preferably polyfunctional amines, more preferably diamines, triamines, tetraamines, especially diaminobenzene, ethylenediamine and diethylenetriamine, epichlorohydrin, bisphenols, preferably bisphenol A and bisphenol F, 2-ethyl-2-oxazoline, ethylene oxide, propylene oxide, urea, melamine, phenol, formaldehyde, siloxane, tetramethylsilane, trimethylchlorosilane, dimethyldichlorosilane, methyltrichlorosilane, tetrachlorosilane, acrylonitrile, maleic acid, hydroxy acids, preferably hydroxy fatty acids, dicarboxylic acids, preferably oxalic acid, malonic acid, succinic acid, glutaric acid, adipic acid, pimelic acid, suberic acid, azelaic acid, sebacic aid and terephthalic acid, acrylamide, amino acids, non-proteinogenic amino acids, monosaccharides, disaccharides, oligosaccharides, and also derivatives of the before mentioned.

Preferably, component (iv) of the particles as defined herein, if present, comprises or consists of chemical and natural fungicides, molluscicides, insecticides, emulsifiers and/or thixotropic agents.

Most preferably, component (iv) is present in the particles as defined herein and the, one, several or all of the organic substance(s) is/are selected from the group consisting of polyarylic ether, polycarboxylate ether, poly acrylic acid, polyamino acids, amino acids, disodium tartrate, sucrose, sucrose, glucose, glucosamine, mannose, glycerin, lactose, xylose, ethylenediaminetetraacetic acid (EDTA), malic acid, trisodium citrate, L-glutamine, glutamine, L-glycine, glycine, sodium gluconate, tris(hydroxymethyl)aminomethane (TRIS), sodium salicylate, disodium maleate, L-alanine, DL-alanine, trehalose, fructose, sodium salicylate, L-glutamine, glycine, trilon M, methylglycine diacetic acid, sodium potassium tartrate, potassium hydrogen tartrate, fumaric acid, disodium oxalate, glucose, sodium gluconate, cold swelling starch, hot swelling starch, ethoxylated starch, propoxylated starch, and maleic acid.

According to a preferred embodiment of the use according to the invention, the composition as defined herein is biodegradable.

According to another preferred embodiment of the use according to the invention, the plurality of particles contained in the composition as defined herein is biodegradable.

According to another preferred embodiment of the use according to the invention, the organic substance(s) contained in the particles as defined herein (cf. optional component (iv)), if present, is/are biodegradable.

Biodegradable in the context of the present text means that the composition or substance(s), respectively, fulfil(s) at least one requirement in accordance with DIN EN 13432, ASTM D6400 and/or AS4736. Biodegradability of a composition or substance can also be proven by not being a PBT-substance and not being a vPvB-substance with respect to REACH [VO (EU) 2020/878].

The organic substances (component (iv) of the particles as defined herein), if present, preferably exhibit an affinity towards the surface of the particles as defined herein *via* chemical interactions (preferably as mentioned herein but not limited to these interactions). Since organic substances are usually subject to adsorption and desorption equilibria, standard separation techniques such as (membrane) filtration as well as centrifugation techniques and isothermal titration calorimetry (ITC) can be used to separate the organic substances from the inorganic part of a/the particle(s) (preferably consisting of components (i), (ii), and optionally (iii), of the particles as defined herein). The number of organic substances separated from the inorganic part of a/the particle(s) by one of these techniques under defined conditions (e.g. dilution media, concentrations, dilution time) can provide information on the binding affinities of said organic substances towards the particle surfaces.

Preferred is a use according to the invention, wherein the average ratio of the total number of alkaline earth cations (cf. component (i) of the particles as defined herein) to the total number of inorganic anions (cf. component (ii) of the particles as defined herein) in the plurality of particles is in a range of from more than 0.01 to less than 20, preferably from more than 0.1 to less than 17.5, more preferably from more than 0.25 to less than 15, more preferably from more than 0.5 to less than 10, more preferably from more than 0.6 to less than 5, more preferably from more than 0.7 to less than 2.5, most preferably from more than 0.75 to less than 2. Non-stoichiometric particles can exhibit certain (colloidal) stability improvements with respect to stoichiometric particles.

Preferably, the ratio of the total number of alkaline earth cations to the total number of inorganic anions in each particle is in a range of from more than 0.01 to less than 20, preferably from more than 0.1 to less than 17.5, more preferably from more than 0.25 to less than 15, more preferably from more than 0.5 to less than 10, more preferably from more than 0.6 to less than 5, more preferably from more than 0.7 to less than 2.5, most preferably from more than 0.75 to less than 2.

Preferred is a use according to the invention, wherein the average ratio of the total number of magensium cations (cf. component (i) of the particles as defined herein) to the total number of calcium cations (cf. component (i) of the particles as defined herein) in the plurality of particles is in a range of from more than 0.0001 to less than 2000, preferably from more than 0.001 to less than 1750, preferably from more than 0.0025 to less than 1500, preferably from more than 0.005 to less than 1000, preferably from more than 0.006 to less than 500, preferably from more than 0.007 to less than 250, preferably from more than 0.0075 to less than 200, preferably from more than 0.01 to less than 150, preferably from more than 0.05 to less than 150, preferably from more than 0.05 to less than 125, preferably from more than 0.05 to less than 100, preferably from more than 0.05 to less than 50, preferably from more than 0.07 to less than 25, preferably from more than 0.075 to less than 20, preferably from more than 0.1 to less than 17.5, preferably from more than 0.25 to less than 15, preferably from more than 0.5 to less than 10, preferably from more than 0.6 to less than 5, more preferably from more than 0.7 to less than 2.5, most preferably from more than 0.75 to less than 2.

Preferably, the ratio of the total number of magnesium cations to the total number of calcium cations in each particle is in a range of from more than 0.0001 to less than 2000, preferably from more than 0.001 to less than 1750, preferably from more than 0.0025 to less than 1500, preferably from more than 0.005 to less than 1000, preferably from more than 0.006 to less than 500, preferably from more than 0.007 to less than 250, preferably from more than 0.0075 to less than 200, preferably from more than 0.01 to less than 150, preferably from more than 0.05 to less than 150, more preferably from more than 0.05 to less than 125, preferably from more than 0.05 to less than 100, preferably from more than 0.05 to less than 50, preferably from more than 0.07 to less than 25, preferably from more than 0.075 to less than 20, preferably from more than 0.1 to less than 17.5, preferably from more than 0.25 to less than 15, preferably from more than 0.5 to less than 10, preferably from more than 0.6 to less than 5, more preferably from more than 0.7 to less than 2.5, most preferably from more than 0.75 to less than 2.

Most preferably, the calcium content in the plurality of particles is higher than the magnesium content.

Most preferred is a use according to the invention, wherein the average ratio of the total number of calcium cations (cf. component (i) of the particles as defined herein) to the total number of magnesium cations (cf. component (i) of the particles as defined herein) in the plurality of particles is in a range of from more than 1 to less than 100000, preferably from more than 1 to less than 10000, preferably from more than 1 to less than 1000, preferably from more than 1 to less than 100, preferably from more than 1 to less than 75, more preferably from more than 1 to less than 50, most preferably from more than 1 to less than 25.

Preferably, the ratio of the total number of calcium cations to the total number of magnesium cations in each particle is in a range of from more than 1 to less than 100000, preferably from more than 1 to less than 10000, preferably from more than 1 to less than 1000, preferably from more than 1 to less than 100, preferably from more than 1 to less than 75, more preferably from more than 1 to less than 50, most preferably from more than 1 to less than 25.

Within the framework of the present text, the term "each particle" means substantially each particle, preferably means in more than 80% of the plurality of particles, more preferably in more than 90% of the plurality of particles, more preferably in more than 95% of the plurality of particles, most preferably in more than 99% of the plurality of particles, contained in the composition used according to the invention.

In case the number of silicate anions contained in the plurality of particles or contained in each particle cannot be determined, e.g. due to the presence of various different silicates, the amount of silicon atoms contained in the plurality of particles or the amount of silicon atoms contained in each particle, respectively, preferably shall be used instead. In this case, the amount of silicon atoms contained in the plurality of particles or contained in each particle, respectively, equals the amount of silicates to be used for calculations.

Preferably, the total number of inorganic anions contained in the plurality of particles is determined by, i.e. equals, the total number of silicon and phosphorous atoms contained in the plurality of particles.

Preferably, the total number of inorganic anions contained in each particle is determined by, i.e. equals, the total number of silicon and phosphorous atoms contained in each particle.

Thus, according to a preferred embodiment of the use according to the invention, the average ratio of the total number of alkaline earth cations, preferably of the total number of calcium and magnesium ions, to the total number of the silicon and phosphorous atoms in the plurality of particles is in a range of from more than 0.01 to less than 20, preferably from more than 0.1 to less than 17.5, more preferably from more than 0.25 to less than 15, more preferably from more than 0.5 to less than 10, more preferably from more than 0.6 to less than 5, more preferably from more than 0.7 to less than 2.5, most preferably from more than 0.75 to less than 2.

More preferably, the ratio of the total number of alkaline earth cations, preferably of the total number of calcium and magnesium ions, to the total number of the silicon and phosphorous atoms in each particle is in a range of from more than 0.01 to less than 20, preferably from more than 0.1 to less than 17.5, more preferably from more than 0.25 to less than 15, more preferably from more than 0.5 to less than 10, more preferably from more than 0.6 to less than 5, more preferably from more than 0.7 to less than 2.5, most preferably from more than 0.75 to less than 2.

According to another preferred embodiment of the use according to the invention, the average ratio of the total number of alkaline earth cations to the total number of inorganic anions in the plurality of particles is in a range of from more than 0.01 to less than 20, preferably from more than 0.1 to less than 17.5, more preferably from more than 0.25 to less than 15, more preferably from more than 0.5 to less than 10, more preferably from more than 0.6 to less than 5, more preferably from more than 0.7 to less than 2.5, most preferably from more than 0.75 to less than 2, and the ratio of the total number of alkaline earth cations to the total number of inorganic anions in each particle is in a range of from more than 0.01 to less than 20, preferably from more than 0.1 to less than 17.5, more preferably from more than 0.25 to less than 15, more preferably from more than 0.5 to less than 10, more preferably from more than 0.6 to less than 5, more preferably from more than 0.7 to less than 2.5, most preferably from more than 0.75 to less than 2.

Preferably, the, one, several or all of the inorganic anion(s) of component (ii) of the particles as defined herein is/are (a) silicate anion(s).

More preferably, the particles contained in the composition as defined herein consist of silicate(s), preferably of calcium and/or magnesium silicate(s), more preferably of calcium and/or magnesium silicate hydrates.

More preferably, the particles contained in the composition as defined herein consist of phosphate(s), preferably of calcium and/or magnesium phosphate(s), more preferably of calcium and/or magnesium phosphate hydrates.

Most preferably, the composition used according to the invention consists of silicate(s), preferably of calcium and/or magnesium silicate(s), more preferably of calcium and/or magnesium silicate hydrates.

Most preferably, the composition used according to the invention consists of phosphates(s), preferably of calcium and/or magnesium phosphate(s), more preferably of calcium and/or magnesium phosphate hydrates.

A further embodiment of the invention relates to the use of inorganic hydrates as herbicides.

Another preferred embodiment of the invention relates to the use of a composition comprising or consisting of a plurality of particles, wherein the particles comprise or consist of inorganic hydrates, as herbicide.

Inorganic hydrates comprise bound water, e.g. structural water and/or water(s) of hydration and/or crystal water, the latter being water found in the crystalline framework.

Thus, another preferred embodiment of the invention relates to the use of a composition comprising or consisting of a plurality of particles, wherein the particles comprise or consist of the following components

(i) one or more alkaline earth cation(s), preferably calcium and/or magnesium ions, and

(ii) one or more inorganic anion(s) selected from the group consisting of silicate and phosphate anion(s), and

(iii) bound water, preferably crystal water, and

(iv) optionally one or more organic substance(s),

as herbicide,
wherein the plurality of particles contained in the composition is applied in an amount of from 0.1 to 100 g/m$^2$.

Herein generally described is also the use of a composition comprising or consisting of a plurality of particles, wherein the particles comprise or consist of the following components

(i) one or more alkaline earth cation(s), preferably calcium and/or magnesium ions, and

(ii) one or more inorganic anion(s) selected from the group consisting of silicate and phosphate anion(s), and

(iii) bound water, preferably crystal water, and

(iv) optionally one or more organic substance(s),

as herbicide.

According to another preferred embodiment of the use according to the invention, the particles comprise or consist of the following components

(i) one or more calcium cation(s), and

(ii) one or more silicate anion(s), and

(iii) bound water, preferably crystal water, and

(iv) optionally one or more organic substance(s).

Within the framework of the present text, the term "the particles" means substantially all particles, preferably all particles, contained in the composition used according to the invention. Preferably, the term "the particles" means more than 80% of the plurality of particles, more preferably more than 90% of the plurality of particles, more preferably more than 95% of the plurality of particles, most preferably more than 99% of the plurality of particles, contained in the composition used according to the invention.

According to another preferred embodiment of the use according to the invention, the particles comprise or consist of calcium silicate hydrate and/or calcium silicate phosphate and/or calcium silicate hydrate phosphate.

Preferably, the particles contained in the composition used according to the present invention comprise calcium silicate hydrate. More preferably, they consist of calcium silicate hydrate.

Preferably, the composition used according to the present invention comprises calcium silicate hydrate. More preferably, the composition used according to the present invention consists of calcium silicate hydrate.

Preferably, the particles contained in the composition used according to the present invention comprise calcium silicate phosphate. More preferably, they consist of calcium silicate phosphate.

Preferably, the composition used according to the present invention comprises calcium silicate phosphate. More preferably, the composition used according to the present invention consists of calcium silicate phosphate.

Preferably, the particles contained in the composition used according to the present invention comprise calcium silicate hydrate phosphate. More preferably, they consist of calcium silicate hydrate phosphate.

Preferably, the composition used according to the present invention comprises calcium silicate hydrate phosphate. More preferably, the composition used according to the present invention consists of calcium silicate hydrate phosphate.

Calcium silicate hydrate, calcium silicate phosphate, and calcium silicate hydrate phosphate are commercially available. To date, said substances have been used as particulate cement modifiers, in particular as particulate cement accelerators. It was thus particularly surprising to find that they are able to exert a herbicidal effect on unwanted plants and/or seeds thereof.

The particles contained in the composition used according to the present invention may comprise or consist of amorphous and/or crystalline and/or mixed-crystalline phase(s). The respective phases are characterised by their crystal structure, semi-crystalline structure and/or their elementary cell(s). In case of amorphous substances, the local order of the substance can be determined using X-ray diffraction, X-ray absorption spectroscopy and/or infrared spectroscopy.

According to another embodiment, compositions comprising or consisting of a plurality of particles (as defined herein), wherein the particles comprise or consist of substances described by one or more of the following subgroups (from H. Strunz and E.H. Nickel, Strunz Mineralogical Tables, 2001, 9th edition), can be used as herbicides, particularly if the size and/or shape requirements of the particles as defined herein are fulfilled. More preferred is the use of a composition comprising or consisting of a plurality of particles (as defined herein), wherein the particles comprise or consist of inorganic hydrates, more preferably inorganic particulate hydrates of the following subgroups, as herbicide:

(ii) sulfides and sulfo salts (including all subgroups), e.g., but not exclusively: chalcopyrite, galenite, pyrite;

(iii) halides (including all subgroups), e.g., but not exclusively: fluorite;

(iv) oxides and hydroxides (including all subgroups), e.g., but not exclusively: calcium oxide, magnesium oxide, cassiterite, magnetite, haematite, ilmenite;

(v) carbonates and nitrates (including all subgroups), e.g., but not exclusively: calcite, hydrotalcite;

(vi) borates (including all subgroups), e.g., but not exclusively: borax boracite, ulexite;

(vii) sulfates, chromates, molybdates, tungstates (including all subgroups), e.g., by not exclusively: langbeinite, anhydrite, kieserite, gypsum;

(viii) phosphates, arsenates, vanadates (including all subgroups), e.g., but not exclusively: monazite, turquoise, apatite, hydoxyapatite, carbonate-apatite, fluorapatite, variscite, triphylite, vivianite, pyromorphite, amblygonite, lazulite;

(ix) silicates, germanates (including all subgroups), e.g., but not exclusively: olivine, garnet, zircon, kyanite, epidote, zoisite, tourmaline, pyroxenes, wollastonite, mica, amphiboles, serpentine, chlorite, topaz, muscovite, talc, afwillite, grolyte, jennite, thaumasite, tobermorite, hydrogarnite, klinotobermorit, diopside, xonotlite, foshagite, feldspar, albite, oligoclase, andesine, labradorite, bytownite, anorthite, andalusite.

According to a preferred embodiment of the use according to the invention, the average ratio of the total number of alkaline earth cations to the total number of inorganic anions, preferably silicate anions, in the plurality of particles is in a range of from more than 0.25 to less than 10, preferably from more than 0.5 to less than 5, more preferably from more than 0.6 to less than 3, most preferably from more than 0.7 to less than 2.5.

Preferably, the ratio of the total number of alkaline earth cations to the total number of inorganic anions, preferably silicate anions, in each particle is in a range of from more than 0.25 to less than 10, preferably from more than 0.5 to less than 5, more preferably from more than 0.6 to less than 3, most preferably from more than 0.7 to less than 2.5.

Most preferably, the average ratio of the total number of alkaline earth cations to the total number of inorganic anions, preferably silicate anions, in the plurality of particles is in a range of from more than 0.25 to less than 10, preferably from more than 0.5 to less than 5, more preferably from more than 0.6 to less than 3, most preferably from more than 0.7 to less than 2.5, and the ratio of the total number of alkaline earth cations to the total number of inorganic anions, preferably silicate anions, in each particle is in a range of from more than 0.25 to less than 10, preferably from more than 0.5 to less than 5, more preferably from more than 0.6 to less than 3, most preferably from more than 0.7 to less than 2.5.

Preferably, the ratio of the total number of bound water molecules, more preferably of the crystal water molecules, if present, to the total number of silicon atoms in each particle is in a range of from more than 0.25 to less than 10, preferably from more than 0.5 to less than 8, most preferably from more than 1 to less than 6.

More preferably, the average ratio of the total number of bound water molecules, more preferably of the crystal water molecules, to the total number of silicon atoms in the plurality of particles is in a range of from more than 0.25 to less than 10, preferably from more than 0.5 to less than 8, most preferably from more than 1 to less than 6.

Most preferably, the ratio of the total number of bound water molecules, more preferably of the crystal water molecules, to the total number of silicon atoms in each particle is in a range of from more than 0.25 to less than 10, preferably from more than 0.5 to less than 8, most preferably from more than 1 to less than 6, and the average ratio of the total number of bound water molecules more preferably of the crystal water molecules, to the total number of silicon atoms in the plurality of particles is in a range of from more than 0.25 to less than 10, preferably from more than 0.5 to less than 8, most preferably from more than 1 to less than 6.

Preferred is a use of a composition according to the invention (as defined herein), wherein the average aspect ratio of the plurality of particles, preferably of their inorganic parts (as defined above), is in a range of from 1.0 to 20, preferably from 1.01 to 19, preferably from 1.02 to 18, preferably from 1.03 to 17, preferably from 1.04 to 16, preferably from 1.05 to 15, preferably from 1.075 to 14, preferably from 1.1 to 13, preferably from 1.2 to 10, preferably from 1.3 to 9, more preferably from 1.4 to 8, more preferably from 1.5 to 7, most preferably from 2 to 6, and preferably wherein the average aspect ratio is the ratio of the average length to the average width of the plurality of particles.

Further preferred is a use of a composition according to the invention (as defined herein), wherein the aspect ratio of each particle, preferably of its inorganic part, is in a range of from 1.0 to 20, preferably from 1.01 to 19, preferably from 1.02 to 18, preferably from 1.03 to 17, preferably from 1.04 to 16, preferably from 1.05 to 15, preferably from 1.075 to 14, preferably from 1.1 to 13, preferably from 1.2 to 10, preferably from 1.3 to 9, more preferably from 1.4 to 8, more preferably from 1.5 to 7, most preferably from 2 to 6, and preferably wherein the aspect ratio is the ratio of the length to the width of a particle.

The aspect ratio of a particle, preferably of its inorganic part, can be determined by its lateral expansion using transmission electron microscopy (TEM). If the particle is irregularly shaped (e.g. not spherical), the martin diameter of the largest lateral expansion shall be used as the length of particle dimension I (W.H. Walton, Feret's Statistical Diameter as a Measure of Particle Size, Nature 1948, 162). Rectangular to said martin diameter stretches dimension II. The martin diameter of dimension II is the length of particle dimension II. Thus, dimension I is larger than dimension II. The ratio of the length of dimension I to the length of dimension II is the aspect ratio of said particle, preferably of its inorganic part. If the aspect ratio of said particle, preferably of its inorganic part, is larger than 1.05, said particle is elongated. The average of the length of dimension I, of dimension II and of the aspect ratio of a plurality of particles can be determined by measuring at least 100 particles of said plurality of particles and calculating the average of the length of dimension I (average length), the average of the length of dimension II (average width) and the average of the aspect ratios (average aspect ratio).

Further preferred is the use of a composition according to the invention (as defined herein), wherein each particle in the composition is elongated, more preferably wherein more than 80%, 90%, 95%, 98%, or 99% of the particles in the composition are elongated.

An alternative embodiment of the invention relates to the use of a composition as defined herein, wherein the composition further comprises one or more molecular herbicides, preferably one or more molecular herbicides as defined herein.

Preferably, the plurality of particles (as defined herein), more preferably the composition (as defined herein), is a particulate cement modifier, preferably is a particulate cement accelerator or a particulate cement retarder.

According to a particularly preferred embodiment of the use according to the invention, the inorganic part of the plurality of particles (preferably consisting of components (i), (ii), and optionally (iii), of the particles as defined herein) is a particulate cement modifier, preferably is a particulate cement accelerator or a particulate cement retarder.

Whether a composition, or preferably a plurality of particles, or more preferably an inorganic part of a plurality of particles, is a particulate cement modifier can be tested using DIN EN 480-2:2006-11 and/or DIN EN 196-3 and/or ASTM C1679 - 17. Preferred is the isothermal calorimetry measurement ASTM C1679 - 17. A composition, or preferably a plurality of particles, or more preferably an inorganic part of a plurality of particles, leading to faster reaction of cement, especially accelerating the hydration kinetics and/or accelerating the setting in Vicat-Testing, is a cement accelerator. A composition, or preferably a plurality of particles, or more preferably an inorganic part of a plurality of particles, leading to slower reaction of cement, especially retarding the hydration kinetics and/or leading to retardation of setting in Vicat-Testing, is a cement retarder.

Special note has to be taken if one or more organic substance(s) is/are present on/in the particles to control the particle properties, which are themselves cement retarders (e.g. sugars; cf. optional component (iv) of the particles as defined herein). In this case, the freely bound one or more organic substance(s) and the inorganic part of a/the particle(s) (preferably consisting of components (i), (ii), and optionally (iii), of the particle(s) as defined herein) can be separated with adequate separation techniques, e.g. membrane filtration or further separation techniques described herein, and the cement modifying ability of the inorganic part of a/the particle(s) and of the one or more organic substance(s) (optional component (iv) of the particles as defined herein) can be investigated separately.

A second aspect of the present invention relates to the use of a particulate cement modifier, preferably of a particulate cement accelerator, more preferably of an inorganic particulate cement accelerator, as herbicide, wherein the particulate cement modifier, preferably the particulate cement accelerator, more preferably of the inorganic particulate cement accelerator, is applied in an amount of from 0.1 to 100 g/m$^2$.

The particulate cement modifier, preferably the particulate cement accelerator, more preferably the inorganic particulate cement accelerator, can be applied to a substrate from which the unwanted plants already surfaced (post-emergence herbicide) or will surface (pre-emergence herbicide), and/or to unwanted plants and/or to the seeds thereof.

The application amount in g/m$^2$ as defined herein thus relates to the amount of particulate cement modifier, preferably the particulate cement accelerator, more preferably of the inorganic particulate cement accelerator, in grams that is applied to the sum of the total surface area of the substrate (on/in which one or more (unwanted) plant(s) and/or seed(s) thereof are located) that is treated with the particulate cement modifier, preferably the particulate cement accelerator, more preferably the inorganic particulate cement accelerator, if applicable, and of the total surface area of the plants and/or seeds thereof that are treated with the particulate cement modifier, preferably the particulate cement accelerator, more preferably the inorganic particulate cement accelerator, if applicable.

Thus, if only a substrate is treated with a particulate cement modifier, preferably a particulate cement accelerator, more preferably an inorganic particulate cement accelerator, the application amount in g/m$^2$ as defined herein relates to the amount of particulate cement modifier, preferably the particulate cement accelerator, more preferably of the inorganic particulate cement accelerator, in grams that is applied to the total surface area of the substrate (on/in which one or more (unwanted) plant(s) and/or seed(s) thereof are located) that is treated with the particulate cement modifier, preferably the particulate cement accelerator, more preferably the inorganic particulate cement accelerator.

If only unwanted plants and/or seeds thereof are treated with a particulate cement modifier, preferably a particulate cement accelerator, more preferably an inorganic particulate cement accelerator, the application amount in g/m$^2$ as defined herein relates to the amount of particulate cement modifier, preferably the particulate cement accelerator, more preferably of the inorganic particulate cement accelerator, in grams that is applied to the total surface area of the plants and/or seeds thereof that are treated with the particulate cement modifier, preferably the particulate cement accelerator, more preferably the inorganic particulate cement accelerator.

Preferably, the particulate cement modifier, preferably the particulate cement accelerator, more preferably the inorganic particulate cement accelerator, is applied to a substrate (on/in which one or more (unwanted) plant(s) and/or seed(s) thereof are located) in an amount of from 0.1 to 100 g, preferably from 0.25 to 100 g, preferably from 0.5 to 90 g, more preferably from 1 to 75 g, more preferably from 1 to 50 g, most preferably from 2 to 50 g, per m$^2$ of the total surface of said substrate.

Preferably, the particulate cement modifier, preferably the particulate cement accelerator, more preferably the inorganic particulate cement accelerator, is applied to plants and/or seeds thereof (whose growth is supposed to be reduced or prevented) in an amount of from 0.25 to 200 g, preferably from 0.5 to 100 g, preferably from 0.5 to 90 g, more preferably from 1 to 75 g, more preferably from 1 to 50 g, most preferably from 2 to 50 g, per m$^2$ of the total surface of said plants and/or seeds thereof.

Also generally described herein is the use of a particulate cement modifier, preferably of a particulate cement accelerator, more preferably of an inorganic particulate cement accelerator, as herbicide.

According to a preferred embodiment, the particulate cement modifier, preferably the particulate cement accelerator, more preferably of the inorganic particulate cement accelerator, is applied in an amount of 0.25 to 100 g/m$^2$,

preferably from 0.5 to 90 g/m², more preferably from 1 to 75 g/m², more preferably from 1 to 50 g/m², most preferably from 2 to 50 g/m².

According to a preferred embodiment, the particulate cement modifier, preferably the particulate cement accelerator, more preferably of the inorganic particulate cement accelerator, is applied in an amount of from 0.1 to 90 g/m², preferably from 0.1 to 80 g/m², more preferably from 0.1 to 75 g/m², more preferably from 0.1 to 50 g/m², more preferably from 0.1 to 40 g/m², more preferably from 0.1 to 30 g/m², most preferably from 0.1 to 25 g/m².

According to another preferred embodiment, the particulate cement modifier, preferably the particulate cement accelerator, more preferably of the inorganic particulate cement accelerator, is applied in an amount of 0.25 to 100 g/m², preferably from 0.25 to 75 g/m², preferably from 0.25 to 50 g/m², preferably from 0.25 to 40 g/m², most preferably from 0.25 to 30 g/m².

According to another preferred embodiment, the particulate cement modifier, preferably the particulate cement accelerator, more preferably of the inorganic particulate cement accelerator, is applied in an amount of from 0.5 to 100 g/m², preferably from 0.5 to 75 g/m², preferably from 0.5 to 50 g/m², preferably from 0.5 to 40 g/m², most preferably from 0.5 to 30 g/m².

According to another preferred embodiment, the particulate cement modifier, preferably the particulate cement accelerator, more preferably of the inorganic particulate cement accelerator, is applied in an amount of from 1 to 75 g/m², preferably from 1 to 50 g/m², preferably from 1 to 40 g/m², most preferably from 1 to 30 g/m².

According to another preferred embodiment, the particulate cement modifier, preferably the particulate cement accelerator, more preferably of the inorganic particulate cement accelerator, used according to the invention does not prevent or reduce the growth of unwanted plants and/or seeds thereof on/in a substrate by hardening said substrate.

According to another preferred embodiment, the particulate cement modifier, preferably the particulate cement accelerator, more preferably of the inorganic particulate cement accelerator, used according to the invention does not harden a substrate it is applied to and/or introduced into to prevent or reduce the growth of unwanted plants and/or seeds thereof.

What is stated herein for the first aspect of the present invention also applies to the second aspect of the present invention and *vice versa*. This applies in particular to (preferred) embodiments of the first aspect of the invention which correspond to (preferred) embodiments of the second aspect of the invention or can be derived from these and *vice versa*.

A third aspect of the present invention relates to a method for preventing or reducing plant growth, preferably weed growth, on/in a substrate comprising or consisting of the following steps:

(a) Identifying a substrate to be treated on/in which plant growth, preferably weed growth, is to be prevented or reduced,

(b) providing a composition comprising or consisting of a plurality of particles as defined herein, and/or

providing a particulate cement modifier (as defined herein), preferably a particulate cement accelerator, more preferably an inorganic particulate cement accelerator,

preferably providing a composition comprising or consisting of a plurality of particles as defined herein,

(c) applying and/or introducing the composition and/or modifier provided in step (b) onto/into the substrate to be treated in an amount sufficient to prevent or reduce plant growth, preferably weed growth,

preferably applying and/or introducing the composition provided in step (b) onto/into the substrate to be treated in an amount sufficient to prevent or reduce plant growth, preferably weed growth,

wherein the plurality of particles contained in the composition provided in step (b) and/or the modifier provided in step (b) is/are applied and/or introduced onto/into the substrate in an amount of from 0.1 to 100 g/m²,

preferably wherein the plurality of particles contained in the composition provided in step (b) is applied and/or introduced onto/into the substrate in an amount of from 0.1 to 100 g/m²,

(d) optionally: verifying if plant growth, preferably weed growth, on/in the substrate has been prevented or reduced.

If both a composition comprising or consisting of a plurality of particles as defined herein and a particulate cement modifier (as defined herein) are provided in step (b) of the method, the applied and/or introduced amount of 0.1 to 100 g/m² as defined in step (c) refers to the total amount of the composition and particulate cement modifier applied and/or introduced onto/into the substrate in step (c).

Herein generally described is also a method for preventing or reducing plant growth, preferably weed growth, on/in a substrate comprising or consisting of the following steps:

(a) Identifying a substrate to be treated on/in which plant growth, preferably weed growth, is to be prevented or reduced,

(b) providing a composition comprising or consisting of a plurality of particles as defined herein, and/or

providing a particulate cement modifier (as defined herein), preferably a particulate cement accelerator, more preferably an inorganic particulate cement accelerator,
preferably providing a composition comprising or consisting of a plurality of particles as defined herein,

(c) applying and/or introducing the composition and/or modifier provided in step (b) onto/into the substrate to be treated in an amount sufficient to prevent or reduce plant growth, preferably weed growth,
preferably applying and/or introducing the composition provided in step (b) onto/into the substrate to be treated in an amount sufficient to prevent or reduce plant growth, preferably weed growth,

(d) optionally: verifying if plant growth, preferably weed growth, on/in the substrate has been prevented or reduced.

According to a preferred embodiment, the composition is used to prevent weed growth on/in a substrate (e.g. an agricultural soil), where one or more wanted plant(s) is/are already present without harming the growth and/or viability of the wanted plant(s). Thus, preferably the composition used according to the invention does not exhibit any toxicity towards wanted plants. Not exhibiting any toxicity towards wanted plants can be achieved by e.g. selectively sowing the wanted plant seeds in a depth where any contact with the composition used according to the invention is avoided. Also, not exhibiting any toxicity towards wanted plants can be achieved by selective application of the composition used according to the invention to the substrate and/or weed (e.g. by automated detection of the wanted plant(s) and adjustment of the spray direction). Also, not exhibiting any effects on wanted plants can be achieved by futher methods as defined herein (e.g., but not limited to, by protective seed coating and/or plant modification).

According to another embodiment of the method, the substrate is not removed from the place where it is identified in step (a) prior to applying and/or introducing the composition or modifier provided in step (b) onto/into the substrate.

According to another embodiment, the composition, i.e. also the particles, provided in step (b) of the method according to the invention does/do not comprise any cement.

According to another embodiment, the composition, i.e. also the particles, provided in step (b) of the method according to the invention does/do not comprise any molecular herbicides (as defined above).

According to another embodiment, the plant growth, preferably weed growth, on/in the substrate is not prevented or reduced by hardening of the substrate (i.e. the hardness of the treated substrate is not increased by the methods according to the invention as described herein to such an extent that it prevents or reduces any plant growth, preferably weed growth).

As stated above, within the framework of the present text, the herbicidal effect is caused by the contact of the composition as provided in step (b) and/or of the particulate cement modifier, preferably particulate cement accelerator, more preferably inorganic particulate cement accelerator, as provided in step (b) with an unwanted plant and/or seed thereof. The herbicidal effect reduces the growth of said unwanted plant and/or reduces or inhibits sprouting of the seeds of said unwanted plant.

According to another embodiment of the method, the plants, preferably weeds, have not yet emerged from the substrate to be treated (as identified in step (a)) before applying and/or introducing the composition provided in step (b) onto/into the substrate to be treated in an amount sufficient to prevent or reduce plant growth, preferably weed growth. In this case, the composition comprising or consisting of a plurality of particles as defined herein acts as a pre-emergence herbicide.

According to another embodiment of the method, the plants, preferably weeds, have already emerged from the substrate to be treated (as identified in step (a)) before applying and/or introducing the composition provided in step (b) onto/into the substrate to be treated in an amount sufficient to prevent or reduce plant growth, preferably weed growth. In this case, the composition comprising or consisting of a plurality of particles as defined herein acts as a post-emergence herbicide.

Preferably, the average particle size of the plurality of particles contained in the composition provided in step (b) and/or of the modifier provided in step (b) of the method according to the invention is in a range of from 0.001 to 2 $\mu$m, preferably from 0.001 $\mu$m to 1 $\mu$m, preferably from 0.002 $\mu$m to 0.900 $\mu$m, more preferably from 0.003 to 0.800 $\mu$m, more preferably from 0.005 to 0.700 $\mu$m, more preferably from 0.010 to 0.600 $\mu$m, more preferably from 0.015 to 0.500 µm, more preferably from 0.020 to 0.400 µm, more preferably from 0.025 to 0.350 µm, more preferably from 0.030 to 0.300 µm, more preferably from 0.035 to 0.250 µm, more preferably from 0.040 to 0.225 µm, more preferably from 0.045 to 0.200 µm, more preferably from 0.050 to 0.175 µm, more preferably from 0.055 to 0.160 µm, most preferably from 0.060 to 0.150 µm.

Preferably, the average particle size of the plurality of particles contained in the composition provided in step (b) and/or of the modifier provided in step (b) of the method according to the invention is in a range of from 0.001 to 2 µm, preferably from 0.001 µm to 1 µm, preferably from 0.002 µm to 0.900 µm, preferably from 0.002 µm to 0.800 µm, preferably from 0.002 µm to 0.700 µm, preferably from 0.002 µm to 0.600 µm, preferably from 0.002 µm to 0.500 µm, preferably from 0.002 µm to 0.400 µm, preferably from 0.002 µm to 0.300 µm, preferably from 0.002 to 0.200 µm, more preferably from 0.002 to 0.190 µm, more preferably from 0.002 to 0.170 µm, more preferably from 0.002 to 0.160 µm, more preferably from 0.002 to 0.150 µm, more preferably from 0.002 to 0.140 µm, more preferably from 0.002 to 0.130 µm, more preferably from 0.002 to 0.120 µm.

Preferably, the average particle size of the plurality of particles contained in the composition provided in step (b) and/or of the modifier provided in step (b) of the method according to the invention is in a range of from 0.001 to 2 µm, preferably from 0.001 µm to 1 µm, preferably from 0.005 µm to 0.900 µm, preferably from 0.005 µm to 0.800 µm, preferably from 0.005 µm to 0.700 µm, preferably from 0.005 µm to 0.600 µm, preferably from 0.005 µm to 0.500 µm, preferably from 0.005 µm to 0.400 µm, preferably from 0.005 µm to 0.300 µm, preferably from 0.005 to 0.200 µm, more preferably from 0.005 to 0.190 µm, more preferably from 0.005 to 0.170 µm, more preferably from 0.005 to 0.160 µm, more preferably from 0.005 to 0.150 µm, more preferably from 0.005 to 0.140 µm, more preferably from 0.005 to 0.130 µm, more preferably from 0.005 to 0.120 µm.

Preferably, the average particle size of the plurality of particles contained in the composition provided in step (b) and/or of the modifier provided in step (b) of the method according to the invention is in a range of from 0.010 to 2 µm, preferably from 0.010 µm to 1 µm, preferably from 0.010 µm to 0.900 µm, preferably from 0.010 µm to 0.800 µm, preferably from 0.010 µm to 0.700 µm, preferably from 0.010 µm to 0.600 µm, preferably from 0.010 µm to 0.500 µm, preferably from 0.010 µm to 0.400 µm, preferably from 0.010 µm to 0.300 µm, preferably from 0.010 to 0.200 µm, more preferably from 0.010 to 0.190 µm, more preferably from 0.010 to 0.170 µm, more preferably from 0.010 to 0.160 µm, more preferably from 0.010 to 0.150 µm, more preferably from 0.010 to 0.140 µm, more preferably from 0.010 to 0.130 µm, more preferably from 0.010 to 0.120 µm.

Preferably, the average particle size of the plurality of particles contained in the composition provided in step (b) and/or of the modifier provided in step (b) of the method according to the invention is in a range of from 0.025 to 2 µm, preferably from 0.025 µm to 1 µm, preferably from 0.025 µm to 0.900 µm, preferably from 0.025 µm to 0.800 µm, preferably from 0.025 µm to 0.700 µm, preferably from 0.025 µm to 0.600 µm, preferably from 0.025 µm to 0.500 µm, preferably from 0.025 µm to 0.400 µm, preferably from 0.025 µm to 0.300 µm, preferably from 0.025 to 0.200 µm, more preferably from 0.025 to 0.190 µm, more preferably from 0.025 to 0.170 µm, more preferably from 0.025 to 0.160 µm, more preferably from 0.025 to 0.150 µm, more preferably from 0.025 to 0.140 µm, more preferably from 0.025 to 0.130 µm, more preferably from 0.025 to 0.120 µm.

Preferably, the average particle size of the plurality of particles contained in the composition provided in step (b) and/or of the modifier provided in step (b) of the method according to the invention is in a range of from 0.050 to 2 µm, preferably from 0.050 µm to 1 µm, preferably from 0.050 µm to 0.900 µm, preferably from 0.050 µm to 0.800 µm, preferably from 0.050 µm to 0.700 µm, preferably from 0.050 µm to 0.600 µm, preferably from 0.050 µm to 0.500 µm, preferably from 0.050 µm to 0.400 µm, preferably from 0.050 µm to 0.300 µm, preferably from 0.050 to 0.200 µm, more preferably from 0.050 to 0.190 µm, more preferably from 0.050 to 0.170 µm, more preferably from 0.050 to 0.160 µm, more preferably from 0.050 to 0.150 µm, more preferably from 0.050 to 0.140 µm, more preferably from 0.050 to 0.130 µm, more preferably from 0.050 to 0.120 µm.

Preferably, the average particle size of the plurality of particles contained in the composition provided in step (b) and/or of the modifier provided in step (b) of the method according to the invention is in a range of from 0.075 to 2 µm, preferably from 0.075 µm to 1 µm, preferably from 0.075 µm to 0.900 µm, preferably from 0.075 µm to 0.800 µm, preferably from 0.075 µm to 0.700 µm, preferably from 0.075 µm to 0.600 µm, preferably from 0.075 µm to 0.500 µm, preferably from 0.075 µm to 0.400 µm, preferably from 0.075 µm to 0.300 µm, preferably from 0.075 to 0.200 µm, more preferably from 0.075 to 0.190 µm, more preferably from 0.075 to 0.170 µm, more preferably from 0.075 to 0.160 µm, more preferably from 0.075 to 0.150 µm, more preferably from 0.075 to 0.140 µm, more preferably from 0.075 to 0.130 µm, more preferably from 0.075 to 0.120 µm.

Preferably, the plurality of particles contained in the composition provided in step (b) and/or the modifier provided in step (b) is/are applied and/or introduced onto/into the substrate in an amount of from 0.25 to 100 g/m$^2$, preferably from 0.5 to 90 g/m$^2$, more preferably from 1 to 75 g/m$^2$, more preferably from 1 to 50 g/m$^2$, most preferably from 2 to 50 g/m$^2$, in step (c) of the method according to the invention.

Further preferred, the plurality of particles contained in the composition provided in step (b) and/or the modifier provided in step (b) is/are applied and/or introduced onto/into the substrate in an amount of from 0.1 to 90 g/m$^2$, preferably

from 0.1 to 80 g/m$^2$, more preferably from 0.1 to 75 g/m$^2$, more preferably from 0.1 to 50 g/m$^2$, more preferably from 0.1 to 40 g/m$^2$, more preferably from 0.1 to 30 g/m$^2$, most preferably from 0.1 to 25 g/m$^2$, in step (c) of the method according to the invention.

More preferably, the plurality of particles contained in the composition provided in step (b) and/or the modifier provided in step (b) is/are applied and/or introduced onto/into the substrate in an amount of from 0.5 to 75 g/m$^2$, preferably from 0.5 to 50 g/m$^2$, preferably from 0.5 to 40 g/m$^2$, most preferably from 0.5 to 30 g/m$^2$, in step (c) of the method according to the invention.

Most preferably, the plurality of particles contained in the composition provided in step (b) and/or the modifier provided in step (b) is/are applied and/or introduced onto/into the substrate in an amount of from 1 to 75 g/m$^2$, preferably from 1 to 50 g/m$^2$, preferably from 1 to 40 g/m$^2$, most preferably from 1 to 30 g/m$^2$, in step (c) of the method according to the invention.

In step (d) of the method according to the invention, it may be verified if plant growth, preferably weed growth, on/in the substrate has been prevented or reduced. Said verification may be carried out as described in the examples below. Step (d) of the method according to the invention, if present, may be repeated at regular intervals, if needed, e.g. every 24 or 48 hours, depending on the environmental parameters and dosage of the applications.

Preferably, the substrate to be treated (as identified in step (a)) comprises one or more material(s) selected from the group consisting of sand, soil, humus, crushed stone, gravel, clay, silt, sawdust, paper, cardboard, chipboard, softwood, limestone and coal.

Preferably, the substrate to be treated is an area of land selected from the group consisting of a garden area, a joint area of paving blocks and stones, arable land, agricultural land, an orchard, a vineyard area, a tree nursery area, a park, a part of a developed land or urban area, an unpaved road, a paved road, an unpaved footpath, a paved footpath, a railway line, a railway track bed, a rescue site, a rescue way, an industrially used area and/or an area between or before said areas of land.

Preferably, the lateral dimensions of the substrate to be treated are greater than 0.5 cm, preferably greater than 1 cm, more preferably greater than 2 cm, most preferably greater than 5 cm, respectively.

Within the context of the present text, the term lateral dimensions refers to the length and the width of the substrate area, respectively. Thus, both the length and the width of the substrate have to fulfill the size criteria defined above.

Most preferably, the lateral dimensions of the substrate to be treated are greater than 10 cm, preferably greater than 50 cm, more preferably greater than 1 m, more preferably greater than 5 m, most preferably greater than 10 m, respectively.

A method as described herein is preferred, wherein the plant or weed is selected from the group consisting of dicotyls of the genera: *Abutilon, Aegopodium, Aethusa, Amaranthus, Ambrosia, Anchusa, Anagallis, Anoda, Anthemis, Aphanes, Arabidopsis, Atriplex, Barbarea, Bellis, Bidens, Bunias, Capsella, Carduus, Cassia, Centaurea, Chenopodium, Chrysanthemum, Cirsium, Conium, Conyza, Consolida, Convolvulus, Datura, Descurainia, Desmodium, Emex, Equisetum, Erigeron, Erodium, Erysimum, Euphorbia, Fumaria, Galeopsis, Galinsoga, Galium, Geranium, Heracleum, Hibiscus, Ipomoea, Kochia, Lamium, Lapsana, Lathyrus, Lepidium, Lithospermum, Linaria, Lindernia, Lycopsis, Malva, Matricaria, Mentha, Mercurialis, Mollugo, Myosotis, Papaver, Pharbitis, Plantago, Polygonum, Portulaca, Ranunculus, Raphanus, Rorippa, Rotala, Rumex, Salsola, Senecio, Sesbania, Sida, Sinapis, Sisymbrium, Solanum, Sonchus, Sphenoclea, Stachys, Stellaria, Taraxacum, Thlaspi, Trifolium, Tussilago, Urtica, Veronica, Viola, Xanthium;* crops of the genera: *Arachis, Beta, Brassica, Cucumis, Cucurbita, Helianthus, Daucus, Glycine, Gossypium, Ipomoea, Lactuca, Linum, Lycopersicon, Nicotiana, Phaseolus, Pisum, Solanum, Vicia;* monocotyls of the genera: *Aegilops, Agropyron, Agrostis, Alopecurus, Apera, Avena, Brachiaria, Bromus, Cenchrus, Commelina, Cynodon, Cyperus, Dactyloctenium, Digitaria, Echinochloa, Eleocharis, Eleusine, Eragrostis, Eriochloa, Festuca, Fimbristylis, Heteranthera, Imperata, Ischaemum, Juncus, Leptochloa, Lolium, Monochoria, Panicum, Paspalum, Phalaris, Phleum, Poa, Rottboellia, Sagittaria, Scirpus, Setaria, Sorghum; and* crops of the genera: *Allium, Ananas, Asparagus, Avena, Hordeum, Oryza, Panicum, Saccharum, Secale, Sorghum, Triticale, Triticum, Zea; mosses of the lineages liverworts* (Marchentiophyta), *hornworts* (Anthocerotophyta), *mosses* (Bryophyta) and their respective plant parts, seeds, seedlings and rhizomes.

According to another preferred embodiment of a method according to the invention, the, one, several or all of the plants are one or more liverwort(s) selected from the group consisting of the genera: *Acolea, Acrobolbus, Acrochila, Acromastigum, Acroscyphella, Acroscyphus, Acrostolia, Adelocolia, Aitchisoniella, Alicularia, Allisonia, Allisoniella, Alobiella, Alobiellopsis, Amazoopsis, Amphicephalozia, Amphilophocolea, Andrewsianthus, Aneura, Anomacaulis, Anomoclada, Anomylia, Anthelia, Anthelis, Aphanolejeunea, Aplozia, Apomarsupella, Apometzgeria, Apotreubia, Arachniopsis, Arctoscyphus, Arnellia, Ascidiota, Asterella, Athalamia, Austrofossombronia, Austrolembidium, Austrolophozia, Austrometzgeria, Austroscyphus, Balantiopsis, Bazzania, Blasia, Blepharidophyllum, Blepharostoma, Brevianthus, Calycularia, Calypogeia, Calyptrocolea, Campanocolea, Castanoclobos, Cavicularia, Cephalojonesia, Cephalolobus, Cephalomitrion, Cephalozia, Cephaloziella, Cephaloziopsis, Ceratolejeunea, Cesius, Chaetophyllopsis, Chiastocaulon, Chiloscyphus, Chloranthelia, Chonecolea, Cladomastigum, Cladopodiella, Clandarium, Clasmatocolea, Cololejeunea, Colura,*

*Conocephalum, Conoscyphus, Corsinia, Cronisia, Crossogyna, Cryptochila, Cryptocolea, Cryptocoleopsis, Cryptomitrium, Cryptostipula, Cryptothallus, Cuspidatula, Cyanolophocolea, Cyathodium, Cylindrocolea, Delavayella, Dendrobazzania, Dendromastigophora, Denotarisia, Dichiton, Dinckleria, Diplocolea, Diplophyllum, Douinia, Drepanolejeunea, Drucella, Dumortiera, Dumortieropsis, Enigmella, Eocalypogeia, Eoisotachis, Eopleurozia, Eotrichocolea, Eremonotus, Eucalyx, Evansia, Evansianthus, Exormotheca, Fossombronia, Frullania, Fuscocephaloziopsis, Gackstroemia, Geocalyx, Geothallus, Gerhildiella, Goebeliella, Goebelobryum, Gongylanthus, Gottschea, Gottschelia, Greeneothallus, Grollea, Gymnanthe, Gymnocoleopsis, Gymnomitrion, Gymnoscyphus, Gyrothyra, Haesselia, Haplomitrium, Harpalejeunea, Harpanthus, Hattoria, Hattorianthus, Hattoriella, Hepatostolonophora, Herbertus, Herpetium, Herpocladium, Herzogianthus, Herzogobryum, Heterogemma, Heteroscyphus, Horikawaella, Hyalolepidozia, Hygrobiellalwatsukia, Hygrolembidium, Hygrophila, Hymenophyton, Hypoisotachis, Isolembidium, Isotachis, Jamesoniella, Jensenia, Jubula, Jubulopsis, Jungermannia, Jungermannites, Krunodiplophyllum, Kurzia, Kymatocalyx, Lamellocolea, Leiocolea, Leiomitra, Leiomylia, Leioscyphus, Lejeunea, Lembidium, Lepidogyna, Lepidolaena, Lepidozia, Leptolejeunea, Leptophyllopsis, Leptoscyphopsis, Leptoscyphus, Lethocolea, Liochlaena, Lobatiriccardia, Lophocolea, Lophonardia, Lophozia, Lophoziopsis, Lunularia, Macrodiplophyllum, Maculia, Makinoa, Mannia, Marchantia, Marchesinia, Marsupella, Marsupidium, Massula, Massularia, Mastigobryum, Mastigopelma, Mastigophora, Mastigopsis, Mesoptychia, Metacalypogeia, Metahygrobiella, Metzgeria, Metzgeriopsis, Micrisophylla, Microlejeunea, Microlepidozia, Micropterygium, Mizutania, Mnioloma, Moerckia, Monocarpus, Monoclea, Monodactylopsis, Monosolenium, Mytilopsis, Nanomarsupella, Nardia, Neesioscyphus, Neogrollea, Neohodgsonia, Neotrichocolea, Noteroclada, Nothogymnomitrion, Nothostrepta, Notoscyphus, Nowellia, Obtusifolium, Odontolejeunea, Odontoschisma, Oleolophozia, Oxymitra, Pachyglossa, Pachyschistochila, Pallavicinia, Paracromastigum, Paraschistochila, Patarola, Pedinophyllopsis, Pedinophyllum, Pellia, Peltolepis, Perdusenia, Perssoniella, Petalophyllum, Phycolepidozia, Phyllothallia, Physiotium, Physotheca, Pisanoa, Plagiochasma, Plagiochila, Plagiochilidium, Plagiochilion, Platycaulis, Plectocolea, Pleuranthe, Pleuroclada, Pleurocladopsis, Pleurocladula, Pleurozia, Podanthe, Podomitrium, Porella, Prasanthus, Preissia, Prionolobus, Protolophozia, Protomarsupella, Protosyzgiella, Protosyzygiella, Pseudocephalozia, Pseudocephaloziella, Pseudolophocolea, Pseudolophozia, Pseudomarsupidium, Pseudoneura, Pseudotritomaria, Psiloclada, Pteropsiella, Ptilidium, Radula, Reboulia, Rhizocaulia, Rhodoplagiochila, Riccardia, Riccia, Ricciella, Ricciocarpos, Riella, Roivainenia, Ruizanthus, Ruttnerella, Saccobasis, Saccogyna, Sandeothallus, Sarcocyphos, Sarcomitrium, Sauteria, Scapania, Scaphophyllum, Schiffneria, Schisma, Schistochila, Schistochilaster, Schistochilopsis, Schofieldia, Sendtnera, Seppeltia, Sewardiella, Simodon, Solenostoma, Southbya, Sphaerocarpos, Sphagnoecetis, Sprucella, Steereella, Steereocolea, Stenorrhipis, Stephandium, Stephaniella, Stephaniellidium, Stephensoniella, Symphyogyna, Symphyogynopsis, Symphyomitra, Synhymenium, Syzygiella, Taeniolejeunea, Targionia, Tegulifolium, Telaranea, Thallocarpus, Treubia, Triandrophyllum, Trichocolea, Trichocoleopsis, Trichostylium, Trichotemnoma, Trilophozia, Tritomaria, Tylimanthus, Vanaea, Vandiemenia, Verdoomia, Vetaforma, Wettsteinia, Wiesnerella, Xenochila, Xenothallus, Zoopsidella, Zoopsis* and their respective plant parts, spores, and prothalla.

According to a further preferred embodiment of a method according to the invention, the, one, several or all of the plants are one or more moss(es) selected from the group consisting of the genera: *Abietinella, Acanthocladiella, Acanthocladium, Acanthodium, Acanthorrhynchium, Acaulon, Acaulonopsis, Achrophyllum, Acidodontium, Acrocladium, Acroporium, Acroschisma, Actinodontium, Actinothuidium, Adelothecium, Aequatoriella, Aerobryidium, Aerobryopsis, Aerobryum, Aerolindigia, Algaria, Aligrimmia, Alleniella, Allioniellopsis, Aloina, Aloinella, Alophosia, Alsia, Amblyodon, Amblyodum, Amblystegiella, Amblystegium, Amblytropis, Ambuchanania, Amphidium, Amphoridium, Amphoritheca, Anacalypta, Anacamptodon, Anacolia, Ancistrodes, Andoa, Andreaea, Andreaeobryum, Anictangium, Anisothecium, Anodon, Anodontium, Anoectangium, Anomobryum, Anomodon, Antitrichia, Aongstroemia, Aongstroemiopsis, Apalodium, Aphanorrhegma, Apiocarpa, Aplodon, Apterygium, Aptychella, Aptychopsis, Aptychus, Arbuscula, Arbusculohypopterygium, Archephemeropsis, Archidium, Arctoa, Argyrobryum, Arthrocormus, Aschisma, Aschistodon, Asteriscium, Astomiopsis, Astomum, Astrodontium, Astrophyllum, Atractylocarpus, Atrichopsis, Atrichum, Aulacomitrium, Aulacomnium, Aulacopilum, Austinella, Austrohondaella, Austrophilibertiella, Baldwiniella, Barbella, Barbellopsis, Barbula, Bartramia, Bartramiopsis, Beeveria, Bellibarbula, Benitotania, Bestia, Bissetia, Blindia, Boulaya, Brachelyma, Brachydontium, Brachymenium, Brachymitrion, Brachyodus, Brachysteleum, Brachytheciastrum, Brachytheciella, Brachythecium, Brachytrichum, Braithwaitea, Braunfelsia, Braunia, Breidleria, Breutelia, Brothera, Brotherella, Brotherobryum, Bruchia, Bryhnia, Brymela, Bryoandersonia, Bryobeckettia, Bryobrittonia, Bryobrothera, Bryoceuthospora, Bryochenea, Bryocrumia, Bryodixonia, Bryodusenia, Bryoerythrophyllum, Bryohaplocladium, Bryohumbertia, Bryomaltaea, Bryomanginia, Bryomnium, Bryonoguchia, Bryonorrisia, Bryophixia, Bryosedgwickia, Bryostreimannia, Bryotestua, Bryum, Buckiella, Bucklandiella, Burnettia, Buxbaumia, Callialaria, Callicladium, Callicosta, Callicostella, Callicostellopsis, Calliergidium, Calliergon, Calohypnum, Calymperastrum, Calymperes, Calymperidium, Calymperopsis, Calyptopogon, Calyptothecium, Calyptrochaeta, Camptochaete, Camptodontium, Camptothecium, Campyliadelphus, Campylidium, Campylium, Campylodontium, Campylophyllum, Campylopodiella, Campylopodium, Campylopus, Campylostelium, Canalohypopterygium, Cardotia, Cardotiella, Caribaeohypnum, Catagoniopsis, Catagonium, Catharinea, Catharinella, Catharomnion, Catoscopium, Cecalyphum, Ceratodon, Ceuthospora, Ceuthotheca, Chaetomitrella, Chaetomitriopsis, Cha-*

etomitrium, Chaetophora, Chamaebryum, Chamberlainia, Chameleion, Cheilothela, Chenia, Chileobryon, Chionoloma, Chionostomum, Chorisodontium, Chryso-hypnum, Chrysoblastella, Chrysocladium, Chrysohypnum, Cinclidium, Circulifolium, Cirriphyllum, Cladastomum, Cladomnion, Cladophascum, Cladopodanthus, Cladopodanthus, Claopodium, Clasmatodon, Clastobryella, Clastobryophilum, Clastobryopsis, Clastobryum, Clavitheca, Cleistocarpidium, Cleistostoma, Climacium, Cnestrum, Codonoblepharon, Codonoblepharum, Codriophorus, Coelidium, Coleochaetium, Colobodontium, Conardia, Conomitrium, Conostomum, Coscinodon, Coscinodontella, Costesia, Craspedophyllum, Cratoneurella, Cratoneuron, Cratoneuropsis, Crosbya, Crossidium, Crossomitrium, Crumia, Crumuscus, Cryhphaea, Cryphaeadelphus, Cryptocarpon, Cryptodicranum, Cryptogonium, Cryptoleptodon, Cryptopapillaria, Cryptopodia, Cryptopodium, Cryptotheca, Ctenidiadelphus, Ctenidium, Ctenium, Cupressina, Curvicladium, Curviramea, Cyathophorella, Cyathophorum, Cyclodictyon, Cygniella, Cylicocarpus, Cynodon, Cynodontiella, Cynodontium, Cynontodium, Cyrto-hypnum, Cyrtomnium, Cyrtopodendron, Daltonia, Dasymitrium, Dawsonia, Dendro-hypnum, Dendroalsia, Dendrocyathophorum, Dendrohypopterygium, Dendroligotrichum, Dermatodon, Desmatodon, Desmotheca, Dialytrichia, Diaphanophyllum, Dichelodontium, Dichelyma, Dichodontium, Dicladiella, Dicnemoloma, Dicranella, Dicranodon, Dicranodontium, Dicranoloma, Dicranoweisia, Dicranum, Didymodon, Dimerodontium, Dimorphocladon, Diobelon, Diobelonella, Diphascum, Diphyscium, Diplocomium, Diploneuron, Diplostichum, Discelium, Discophyllum, Dissodon, Distichia, Distichium, Distichophyllidium, Distichophyllum, Ditrichopsis, Ditrichum, Dixonia, Dolichomitra, Dolichomitriopsis, Dolotortula, Donnellia, Donrichardsia, Dorcadion, Dozya, Drepanium, Drepano-hypnum, Drepanocladus, Drepanophyllaria, Drepanophyllum, Drummondia, Dryptodon, Dusenia, Duthiella, Eccremidium, Echinodiopsis, Echinodium, Echinophyllum, Ectropotheciella, Ectropotheciopsis, Ectropothecium, Eleutera, Elharveya, Elmeriobryum, Elodium, Encalypta, Endotrichella, Endotrichellopsis, Endotrichum, Entodon, Entosthodon, Entosthymenium, Eobruchia, Eohypopterygiopsis, Eoleucodon, Eosphagnum, Ephemerella, Ephemeridium, Ephemeropsis, Ephemerum, Epipterygium, Eremodon, Eriodon, Eriopus, Erpodium, Erythrobarbula, Erythrodontium, Erythrophyllastrum, Erythrophyllopsis, Erythrophyllum, Esenbeckia, Eucamptodontopsis, Eucatagonium, Eucladium, Euephemerum, Eumyurium, Euptychium, Eurhynchiadelphus, Eurhynchiastrum, Eurhynchiella, Eurhynchium, Eurohypnum, Eustichia, Euzygodon, Exodictyon, Exostratum, Exsertotheca, Fabroleskea, Fabronialschyrodon, Fabronidium, Fallaciella, Fauriella, Felipponea, Fiedleria, Fifealsotheciadelphus, Fissidens, Flabellidium, Fleischerobryum, Floribundaria, Florschuetziella, Flowersia, Fontinalis, Foreauella, Forsstroemia, Frahmiella, Funaria, Funariella, Gammiella, Ganguleea, Garckea, Garovaglia, Gasterogrimmia, Geheebia, Gemmabryum, Georgia, Gertrudia, Gertrudiella, Gigaspermum, Giraldiella, Globulina, Globulinella, Glossadelphus, Glyphomitrium, Glyphomitrium, Glyphothecium, Glyptothecium, Gollania, Gongronia, Goniobryum, Goniomitrium, Gradsteinia, Grimmia, Groutiella, Guembelia, Guerramontesia, Gymnostomiella, Gymnostomum, Gyroweisia, Habrodon, Habrodonlshibaealwatsukiella, Hageniella, Hamatocaulis, Hampeella, Hampeohypnum, Handeliobryum, Haplocladium, Haplodon, Haplodontium, Haplohymenium, Haptymenium, Harpidium, Harpophyllum, Harrisonia, Harveya, Hebantialtatiella, Hedenaesia, Hedenasiastrum, Hedwigia, Hedwigidium, Helicoblepharum, Helicodontiadelphus, Helicodontium, Heliconema, Helicophyllum, Helodium, Hemiragis, Henicodium, Hennediella, Herpetineuron, Herzogiella, Heterocladium, Heterodon, Heterophyllium, Hildebrandtiella, Hilpertia, Himantocladium, Holoblepharum, Holodontium, Holomitriopsis, Holomitrium, Homalia, Homaliadelphus, Homaliodendron, Homaliopsis, Homalotheciella, Homalothecium, Homomallium, Hondaella, Hookeria, Hookeriopsis, Horikawaea, Horridohypnum, Husnotiella, Hyalophyllum, Hydrocryphaealsodrepanium, Hydrogonium, Hydropogon, Hydropogonella, Hygroamblystegium, Hygrodicranum, Hygrohypnella, Hygrohypnum, Hylocomiadelphus, Hylocomiastrum, Hylocomiopsis, Hylocomium, Hymenodon, Hymenodontopsis, Hymenoloma, Hymenostomum, Hymenostyliella, Hymenostylium, Hyocomium, Hyophila, Hyophiladelphus, Hyophilopsis, Hypnella, Hypnites, Hypnobartlettia, Hypnodendron, Hypnum, Hypodontium, Hypopterygium, Imbribryum, Indopottia, Indothuidium, Indusiella, Inouethuidium, Isopterygiopsis, Isopterygium, Isotheciopsis, Isothecium, Jaegerina, Jaegerinopsis, Jaflueliobryum, Juratzkaeella, Kiaeria, Kindbergia, Kingiobryum, Kleioweisiopsis, Koponenia, Kurohimehypnum, Lamprophyllum, Leersia, Leiodontium, Leiomela, Leiomitrium, Leiotheca, Lembophyllum, Lepidopilidium, Lepidopilum, Leptangium, Leptobarbula, Leptobryum, Leptocladiella, Leptocladium, Leptodictyum, Leptodontiella, Leptodontiopsis, Leptodontium, Leptohymenium, Leptophascum, Leptopterigynandrum, Leptostomopsis, Leptostomum, Leptotheca, Leptotrichella, Leptotrichum, Lepyrodon, Lepyrodontopsis, Leratia, Leratiella, Lescuraea, Leskea, Leskeadelphus, Leskeella, Leskeodon, Leskeodontopsis, Lesquereuxia, Leucobryum, Leucodon, Leucodontella, Leucolepis, Leucoloma, Leucomium, Leucoperichaetium, Leucophanella, Leucophanes, Levierella, Limbella, Limnobium, Limprichtia, Lindbergia, Lindigia, Loeskeobryum, Loeskypnum, Loiseaubryum, Looseria, Lophiodon, Lopidium, Lorentzia, Lorentziella, Loxotis, Ludorugbya, Luisierella, Lyellia, Macgregorella, Macouniella, Macrocoma, Macrodictyum, Macrohymenium, Macromitrium, Macrosporiella, Macrothamniella, Macrothamnium, Mamillariella, Mandoniella, Maschalanthus, Maschalocarpus, Mastopoma, Matteria, Meesia, Meiotheciella, Meiotheciopsis, Meiothecium, Meiotrichum, Merceya, Merceyopsis, Mesochaete, Mesonodon, Mesotus, Metadistichophyllum, Metaneckera, Meteoridium, Meteoriella, Meteoriopsis, Meteorium, Metzlerella, Metzleria, Micralsopsis, Microbryum, Microcampylopus, Microcrossidium, Microctenidium, Microdus, Microeurhynchium, Micromitrium, Micropoma, Microthamnium, Microtheciella, Microthuidium, Miehea, Mielichhoferia, Mildea, Mildeella, Mironia, Mitrobryum, Mittenia, Mittenothamnium, Mitthyridium, Miyabea, Mniadelphus, Mniobryum, Mniodendron, Mniomalia, Mnium, Moenkemeyera, Molendoa, Mollia, Morinia, Moseniella, Muelleriella, Muellerobryum, Musco-

*florschuetzia, Muscoherzogia, Myrinia, Myurella, Myuriopsis, Myurium, Myuroclada, Nanobryum, Nanomitriopsis, Nanomitrium, Neckera, Neckeradelphus, Neckerites, Neckeropsis, Nematocladia, Neobarbella, Neocardotia, Neodicladiella, Neodolichomitra, Neohyophila, Neolescuraea, Neolindbergia, Neomacounia, Neomeesia, Neonoguchia, Neophoenix, Neorutenbergia, Neosharpiella, Niphotrichum, Nobregaea, Nogopterium, Noguchiodendron, Notoligotrichum, Ochiobryum, Ochrobryum, Ochyraea, Octodiceras, Oedicladium, Oedipodiella, Oedipodium, Okamuraea, Oligotrichum, Oncophorus, Oreas, Oreoweisia, Orontobryum, Orthoamblystegium, Orthodicranum, Orthodon, Orthodontium, Orthodontopsis, Orthogrimmia, Orthomitrium, Orthomnion, Orthomniopsis, Orthopus, Orthopyxis, Orthorrhynchidium, Orthorrhynchium, Orthostichella, Orthostichidium, Orthostichopsis, Orthotheciella, Orthothecium, Orthothecium, Orthothuidium, Orthotrichum, Osterwaldiella, Oticodium, Oxyrrhynchium, Oxystegus, Pachyneuropsis, Pachyneurum, Palaeocampylopus, Palamocladium, Palisadula, Paludella, Palustriella, Panckowia, Pancovia, Papillaria, Papillidiopsis, Paraleucobryum, Paramyurium, Pararhacocarpus, Parisia, Pelekium, Pendulothecium, Pentastichella, Penzigiella, Peromnion, Pharomitrium, Phasconica, Phascopsis, Phascum, Philibertiella, Philonotis, Philophyllum, Photinophyllum, Phyllodon, Phyllodrepanium, Phyllogonium, Physcomitrella, Physcomitrium, Physedium, Picobryum, Pictus, Piloecium, Pilopogon, Pilopogonella, Piloseriopus, Pilotrichella, Pilotrichidium, Pilotrichum, Pinnatella, Pirea, Pireella, Plagiobryoides, Plagiobryum, Plagiomnium, Plagiopus, Plagioracelopus, Plagiothecium, Plasteurhynchium, Platydictya, Platygyriella, Platygyrium, Platyhypnidium, Platyhypnum, Platyloma, Platylomella, Platyneuron, Plaubelia, Pleuriditrichum, Pleuridium, Pleurochaete, Pleurophascum, Pleuropus, Pleurorthotrichum, Pleuroweisia, Pleurozium, Pleurozygodon, Pocsiella, Podperaea, Poecilophyllum, Pogonatum, Pohlia, Polla, Polymerodon, Polypodiopsis, Polytrichadelphus, Polytrichastrum, Polytrichites, Polytrichum, Porothamnium, Porotrichella, Porotrichodendron, Porotrichopsis, Porotrichum, Potamium, Pottia, Pottiopsis, Powellia, Powelliopsis, Pringleella, Prionidium, Prionodon, Pseudatrichum, Pseudephemerum, Pseudisothecium, Pseudoamblystegium, Pseudobarbella, Pseudobraunia, Pseudobryum, Pseudocalliergon, Pseudocampylium, Pseudochorisodontium, Pseudocrossidium, Pseudodimerodontium, Pseudodistichium, Pseudoditrichum, Pseudohygrohypnum, Pseudohyophila, Pseudohypnella, Pseudoleskea, Pseudoleskeella, Pseudoleskeopsis, Pseudopiloecium, Pseudopilotrichum, Pseudopleuropus, Pseudopohlia, Pseudopterobryum, Pseudoracelopus, Pseudorhynchostegiella, Pseudoscleropodium, Pseudosymblepharis, Pseudotimmiella, Pseudotrismegistia, Psilopilum, Pterigynandrum, Pterobryella, Pterobryidium, Pterobryon, Pterobryopsis, Pterogoniadelphus, Pterogonidium, Pterogoniella, Pterogonium, Pterygoneurum, Pterygophyllum, Ptilium, Ptychodium, Ptychomitriopsis, Ptychomitrium, Ptychomniella, Ptychomnion, Ptychostomum, Puiggaria, Puiggariella, Puiggariopsis, Pulchrinodus, Pungentella, Pursellia, Pylaisia, Pylaisiadelpha, Pylaisiella, Pylaisiobryum, Pyramidula, Pyramitrium, Pyromitrium, Pyrrhobryum, Quaesticula, Racelopodopsis, Racelopus, Racomitrium, Racopilum, Radulina, Raineria, Rauia, Rauiella, Regmatodon, Reimersia, Remyella, Renauldia, Rhabdodontium, Rhabdoweisia, Rhacocarpus, Rhacopilopsis, Rhamphidium, Rhaphidorrhynchium, Rhaphidostegium, Rhaphidostichum, Rhexophyllum, Rhizofabronia, Rhizogonium, Rhizohypnum, Rhizomnium, Rhizopelma, Rhodobryum, Rhyncho-hypnum, Rhynchostegiella, Rhynchostegiopsis, Rhynchostegium, Rhystophyllum, Rhytidiadelphus, Rhytidiastrum, Rhytidiopsis, Rhytidium, Richardsiopsis, Rigodiadelphus, Roellia, Rosulabryum, Rottleria, Rutenbergia, Saelania, Sagenotortula, Sainthelenia, Saitoa, Saitobryum, Saitoella, Sanionia, Saproma, Sarconeurum, Sarmentypnum, Sasaokaea, Sauloma, Scabridens, Schimperella, Schimperobryum, Schistidium, Schistomitrium, Schistophyllum, Schistostega, Schizomitrium, Schizymenium, Schliephackea, Schlotheimia, Schraderobryum, Schwetschkea, Schwetschkeopsis, Sciadocladus, Sciaromiella, Sciaromiopsis, Sciaromium, Sciuro-hypnum, Sclerodontium, Sclerohypnum, Scleropodiopsis, Scleropodium, Scopelophila, Scorpidium, Scorpiurium, Scouleria, Scytalina, Sebillea, Sehnemobryum, Sekra, Seligeria, Sematophyllites, Sematophyllum, Semibarbula, Serpoleskea, Serpotortella, Sharpiella, Shevockia, Sigmatella, Simophyllum, Simplicidens, Sinocalliergon, Sinskea, Skitophyllum, Skottsbergia, Solmsia, Solmsiella, Sorapilla, Sphaerangium, Sphaerocephalus, Sphaerothecium, Sphagnum, Spiridentopsis, Spirula, Splachnum, Sporledera, Spruceella, Squamidium, Stableria, Steerecleus, Steereobryon, Stegonia, Stellariomnium, Stenocarpidiopsis, Stenodesmus, Stenodictyon, Stenotheciopsis, Stenothecium, Steppomitra, Stereodon, Stereodontopsis, Stereohypnum, Steyermarkiella, Stokesiella, Stonea, Stoneobryum, Straminergon, Straminergon, Streblopilum, Streblotrichum, Streimannia, Strephedium, Streptocalypta, Streptocolea, Streptopogon, Streptotrichum, Stroemia, Strombulidens, Struckia, Struckia, Stylocomium, Swartzia, Symblepharis, Symphyodon, Symphysodon, Symphysodontella, Syntrichia, Syrrhopodon, Systegium, Taiwanobryum, Takakia, Tamariscella, Taxicaulis, Taxiphyllum, Taxithelium, Tayloria, Teichodontium, Teniolophora, Teretidens, Terrestria, Tetracoscinodon, Tetraphidopsis, Tetraphis, Tetraplodon, Tetrapterum, Tetrastichium, Tetrodontium, Thamniella, Thamniopsis, Thamnium, Thamnobryum, Thamnomalia, Thelia, Thiemea, Thuidiopsis, Thuidium, Thyridium, Thysanomitrion, Timmia, Timmiella, Timokoponenia, Toloxis, Tomentypnum, Tortella, Tortula, Touwia, Touwiodendron, Trachybryum, Trachycarpidium, Trachycladiella, Trachycystis, Trachyloma, Trachymitrium, Trachyodontium, Trachyphyllum, Trachythecium, Trachyxiphium, Trematodum, Trichodon, Trichodontium, Tricholepis, Trichosteleum, Trichostomopsis, Trichostomum, Tridontium, Trigonodictyon, Tripterocladium, Triquetrella, Trismegistia, Tristichium, Tuerckheimia, Uleastrum, Uleobryum, Ulota, Unclejackia, Valdonia, Venturiella, Verrucidens, Vesicularia, Vesiculariopsis, Vetiplanaxis, Viridivellus, Vittia, Voitia, Vrolijkheidia, Warburgiella, Wardia, Warnstorfia, Webera, Weisiodon, Weisiopsis, Weissia, Weissiodicranum, Werneriobryum, Weymouthia, Wijkia, Wildia, Willia, Wilsoniella, Yunnanobryon, Zelometeorium, Zygodon, Zygotrichia* and their respective plant parts, spores, and prothalla.

According to another preferred embodiment of a method according to the invention, the, one, several or all plants are one or more hornwort(s) selected from the group consisting of the genera: *Anthoceros, Dendroceros, Folioceros, Hattorioceros, Leiosporoceros, Megaceros, Mesoceros, Nothoceros, Notothylas, Paraphymatoceros, Phaeoceros, Phaeomegaceros, Phymatoceros, Sphaerosporoceros* and their respective plant parts, spores, gametophytes, and sporophytes.

According to another preferred embodiment of a method according to the invention, the, one, several or all plant(s) is/are one or more pteridophyte(s) selected from the group consisting of the genera: *Adiantum, Asplenium, Azolla, Dryopteris, Equisetum, Matteuccia, Polypodium, Ptendium* and their respective plant parts, spores, gametophytes, and sporophytes.

A fourth aspect of the present invention relates to a method for preventing or reducing plant growth, preferably weed growth, comprising or consisting of the following steps:

(a) Identifying one or more plants(s), preferably weed(s), and/or seed(s) thereof, whose growth is to be prevented or reduced,

(b) providing a composition comprising or consisting of a plurality of particles as defined herein, and/or

providing a particulate cement modifier (as defined herein), preferably a particulate cement accelerator, more preferably an inorganic particulate cement accelerator,

preferably providing a composition comprising or consisting of a plurality of particles as defined herein,

(c) applying the composition and/or modifier provided in step (b) to the one or more plant(s), preferably weed(s), and/or seed(s) thereof,

preferably applying the composition provided in step (b) to the one or more plant(s), preferably weed(s), and/or seed(s) thereof,

wherein the plurality of particles contained in the composition provided in step (b) and/or the modifier provided in step (b) is/are applied to the one or more plant(s), preferably weed(s), and/or seed(s) thereof in an amount of from 0.1 to 100 g/m$^2$,

preferably wherein the plurality of particles contained in the composition provided in step (b) is applied to the one or more plant(s), preferably weed(s), and/or seed(s) thereof in an amount of from 0.1 to 100 g/m$^2$,

(d) optionally: verifying if plant growth, preferably weed growth, has been prevented or reduced.

If both a composition comprising or consisting of a plurality of particles as defined herein and a particulate cement modifier (as defined herein) are provided in step (b) of the method, the applied amount of 0.1 to 100 g/m$^2$ as defined in step (c) refers to the total amount of the composition and the particulate cement modifier applied to the one or more plant(s), preferably weed(s), and/or seed(s) thereof in step (c).

Herein generally described is also a method for preventing or reducing plant growth, preferably weed growth, comprising or consisting of the following steps:

(a) Identifying one or more plants(s), preferably weed(s), and/or seed(s) thereof, whose growth is to be prevented or reduced,

(b) providing a composition comprising or consisting of a plurality of particles as defined herein, and/or

providing a particulate cement modifier (as defined herein), preferably a particulate cement accelerator, more preferably an inorganic particulate cement accelerator,

preferably providing a composition comprising or consisting of a plurality of particles as defined herein,

(c) applying the composition and/or modifier provided in step (b) to the one or more plant(s), preferably weed(s), and/or seed(s) thereof,

preferably applying the composition provided in step (b) to the one or more plant(s), preferably weed(s), and/or seed(s) thereof,

(d) optionally: verifying if plant growth, preferably weed growth, has been prevented or reduced.

According to another embodiment, the composition, i.e. also the particles, provided in step (b) of the method according to the invention does/do not comprise any cement.

According to another embodiment, the composition, i.e. also the particles, provided in step (b) of the method according to the invention does/do not comprise any molecular herbicides (as defined above).

According to another embodiment, the plant growth, preferably weed growth, is not prevented or reduced by hardening of a substrate on/in which the unwanted plants, preferably weed(s), and/or seed(s) thereof are located.

Preferably, the average particle size of the plurality of particles contained in the composition and/or of the modifier provided in step (b) of the method according to the invention is in a range of from 0.001 to 2 $\mu$m, preferably from 0.001 $\mu$m to 1 $\mu$m, preferably from 0.002 $\mu$m to 0.900 $\mu$m, more preferably from 0.003 to 0.800 $\mu$m, more preferably from 0.005 to 0.700 $\mu$m, more preferably from 0.010 to 0.600 $\mu$m, more preferably from 0.015 to 0.500 $\mu$m, more preferably from 0.020 to 0.400 $\mu$m, more preferably from 0.025 to 0.350 $\mu$m, more preferably from 0.030 to 0.300 $\mu$m, more preferably from 0.035 to 0.250 $\mu$m, more preferably from 0.040 to 0.225 $\mu$m, more preferably from 0.045 to 0.200 $\mu$m, more preferably from 0.050 to 0.175 $\mu$m, more preferably from 0.055 to 0.160 $\mu$m, most preferably from 0.060 to 0.150 $\mu$m.

Preferably, the average particle size of the plurality of particles contained in the composition provided in step (b) and/or of the modifier provided in step (b) of the method according to the invention is in a range of from 0.001 to 2 $\mu$m, preferably from 0.001 $\mu$m to 1 $\mu$m, preferably from 0.002 $\mu$m to 0.900 $\mu$m, preferably from 0.002 $\mu$m to 0.800 $\mu$m, preferably from 0.002 $\mu$m to 0.700 $\mu$m, preferably from 0.002 $\mu$m to 0.600 $\mu$m, preferably from 0.002 $\mu$m to 0.500 $\mu$m, preferably from 0.002 $\mu$m to 0.400 $\mu$m, preferably from 0.002 $\mu$m to 0.300 $\mu$m, preferably from 0.002 to 0.200 $\mu$m, more preferably from 0.002 to 0.190 $\mu$m, more preferably from 0.002 to 0.170 $\mu$m, more preferably from 0.002 to 0.160 $\mu$m, more preferably from 0.002 to 0.150 $\mu$m, more preferably from 0.002 to 0.140 $\mu$m, more preferably from 0.002 to 0.130 $\mu$m, more preferably from 0.002 to 0.120 $\mu$m.

Preferably, the average particle size of the plurality of particles contained in the composition provided in step (b) and/or of the modifier provided in step (b) of the method according to the invention is in a range of from 0.001 to 2 $\mu$m, preferably from 0.001 $\mu$m to 1 $\mu$m, preferably from 0.005 $\mu$m to 0.900 $\mu$m, preferably from 0.005 $\mu$m to 0.800 $\mu$m, preferably from 0.005 $\mu$m to 0.700 $\mu$m, preferably from 0.005 $\mu$m to 0.600 $\mu$m, preferably from 0.005 $\mu$m to 0.500 $\mu$m, preferably from 0.005 $\mu$m to 0.400 $\mu$m, preferably from 0.005 $\mu$m to 0.300 $\mu$m, preferably from 0.005 to 0.200 $\mu$m, more preferably from 0.005 to 0.190 $\mu$m, more preferably from 0.005 to 0.170 $\mu$m, more preferably from 0.005 to 0.160 $\mu$m, more preferably from 0.005 to 0.150 $\mu$m, more preferably from 0.005 to 0.140 $\mu$m, more preferably from 0.005 to 0.130 $\mu$m, more preferably from 0.005 to 0.120 $\mu$m.

Preferably, the average particle size of the plurality of particles contained in the composition provided in step (b) and/or of the modifier provided in step (b) of the method according to the invention is in a range of from 0.010 to 2 $\mu$m, preferably from 0.010 $\mu$m to 1 $\mu$m, preferably from 0.010 $\mu$m to 0.900 $\mu$m, preferably from 0.010 $\mu$m to 0.800 $\mu$m, preferably from 0.010 $\mu$m to 0.700 $\mu$m, preferably from 0.010 $\mu$m to 0.600 $\mu$m, preferably from 0.010 $\mu$m to 0.500 $\mu$m, preferably from 0.010 $\mu$m to 0.400 $\mu$m, preferably from 0.010 $\mu$m to 0.300 $\mu$m, preferably from 0.010 to 0.200 $\mu$m, more preferably from 0.010 to 0.190 $\mu$m, more preferably from 0.010 to 0.170 $\mu$m, more preferably from 0.010 to 0.160 $\mu$m, more preferably from 0.010 to 0.150 $\mu$m, more preferably from 0.010 to 0.140 $\mu$m, more preferably from 0.010 to 0.130 $\mu$m, more preferably from 0.010 to 0.120 $\mu$m.

Preferably, the average particle size of the plurality of particles contained in the composition provided in step (b) and/or of the modifier provided in step (b) of the method according to the invention is in a range of from 0.025 to 2 $\mu$m, preferably from 0.025 $\mu$m to 1 $\mu$m, preferably from 0.025 $\mu$m to 0.900 $\mu$m, preferably from 0.025 $\mu$m to 0.800 $\mu$m, preferably from 0.025 $\mu$m to 0.700 $\mu$m, preferably from 0.025 $\mu$m to 0.600 $\mu$m, preferably from 0.025 $\mu$m to 0.500 $\mu$m, preferably from 0.025 $\mu$m to 0.400 $\mu$m, preferably from 0.025 $\mu$m to 0.300 $\mu$m, preferably from 0.025 to 0.200 $\mu$m, more preferably from 0.025 to 0.190 $\mu$m, more preferably from 0.025 to 0.170 $\mu$m, more preferably from 0.025 to 0.160 $\mu$m, more preferably from 0.025 to 0.150 $\mu$m, more preferably from 0.025 to 0.140 $\mu$m, more preferably from 0.025 to 0.130 $\mu$m, more preferably from 0.025 to 0.120 $\mu$m.

Preferably, the average particle size of the plurality of particles contained in the composition provided in step (b) and/or of the modifier provided in step (b) of the method according to the invention is in a range of from 0.050 to 2 $\mu$m, preferably from 0.050 $\mu$m to 1 $\mu$m, preferably from 0.050 $\mu$m to 0.900 $\mu$m, preferably from 0.050 $\mu$m to 0.800 $\mu$m, preferably from 0.050 $\mu$m to 0.700 $\mu$m, preferably from 0.050 $\mu$m to 0.600 $\mu$m, preferably from 0.050 $\mu$m to 0.500 $\mu$m, preferably from 0.050 $\mu$m to 0.400 $\mu$m, preferably from 0.050 $\mu$m to 0.300 $\mu$m, preferably from 0.050 to 0.200 $\mu$m, more preferably from 0.050 to 0.190 $\mu$m, more preferably from 0.050 to 0.170 $\mu$m, more preferably from 0.050 to 0.160 $\mu$m, more preferably from 0.050 to 0.150 $\mu$m, more preferably from 0.050 to 0.140 $\mu$m, more preferably from 0.050 to 0.130 $\mu$m, more preferably from 0.050 to 0.120 $\mu$m.

Preferably, the average particle size of the plurality of particles contained in the composition provided in step (b) and/or of the modifier provided in step (b) of the method according to the invention is in a range of from 0.075 to 2 $\mu$m, preferably from 0.075 $\mu$m to 1 $\mu$m, preferably from 0.075 $\mu$m to 0.900 $\mu$m, preferably from 0.075 $\mu$m to 0.800 $\mu$m, preferably from 0.075 $\mu$m to 0.700 $\mu$m, preferably from 0.075 $\mu$m to 0.600 $\mu$m, preferably from 0.075 $\mu$m to 0.500 $\mu$m, preferably from 0.075 $\mu$m to 0.400 $\mu$m, preferably from 0.075 $\mu$m to 0.300 $\mu$m, preferably from 0.075 to 0.200 $\mu$m, more preferably from 0.075 to 0.190 $\mu$m, more preferably from 0.075 to 0.170 $\mu$m, more preferably from 0.075 to 0.160 $\mu$m, more preferably from 0.075 to 0.150 $\mu$m, more preferably from 0.075 to 0.140 $\mu$m, more preferably from 0.075 to 0.130 $\mu$m, more preferably from 0.075 to 0.120 $\mu$m.

Preferably, the plurality of particles contained in the composition provided in step (b) and/or the modifier provided in step (b) is/are applied to the one or more plant(s), preferably weed(s), and/or seed(s) thereof in an amount of from 0.25 to 100 g/m$^2$, preferably from 0.5 to 90 g/m$^2$, more preferably from 1 to 75 g/m$^2$, more preferably from 1 to 50 g/m$^2$, most preferably from 2 to 50 g/m$^2$, in step (c) of the method according to the invention.

Further preferred, the plurality of particles contained in the composition provided in step (b) and/or the modifier provided in step (b) is/are applied to the one or more plant(s), preferably weed(s), and/or seed(s) thereof in an amount of from 0.1 to 90 g/m$^2$, preferably from 0.1 to 80 g/m$^2$, more preferably from 0.1 to 75 g/m$^2$, more preferably from 0.1 to 50 g/m$^2$, more preferably from 0.1 to 40 g/m$^2$, more preferably from 0.1 to 30 g/m$^2$, most preferably from 0.1 to 25 g/m$^2$, in step (c) of the method according to the invention.

More preferably, the plurality of particles contained in the composition provided in step (b) and/or the modifier provided in step (b) is/are applied to the one or more plant(s), preferably weed(s), and/or seed(s) thereof in an amount of from 0.5 to 100 g/m$^2$, preferably 0.5 to 75 g/m$^2$, preferably from 0.5 to 50 g/m$^2$, preferably from 0.5 to 40 g/m$^2$, most preferably from 0.5 to 30 g/m$^2$, in step (c) of the method according to the invention.

Most preferably, the plurality of particles contained in the composition provided in step (b) and/or the modifier provided in step (b) is/are applied to the one or more plant(s), preferably weed(s), and/or seed(s) thereof in an amount of from 1 to 75 g/m$^2$, preferably from 1 to 50 g/m$^2$, preferably from 1 to 40 g/m$^2$, most preferably from 1 to 30 g/m$^2$, in step (c) of the method according to the invention.

A fifth aspect of the present invention relates to a method for preventing or reducing plant growth, preferably weed growth, on/in a substrate comprising or consisting of the following steps:

(a) Identifying a substrate to be treated on/in which plant growth, preferably weed growth, is to be prevented or reduced,

(b) providing a mixture comprising or consisting of the following components

(i) one or more alkaline earth cation source(s), preferably one or more calcium and/or magnesium cation source(s), (as described above, in particular with regard to the first aspect of the invention)

(ii) one or more inorganic anion source(s), preferably one or more silicate and/or phosphate source(s), (as described above, in particular with regard to the first aspect of the invention)

(iii) optionally, one or more organic substance(s) (as described above; cf. component (iv) of the composition used according to the first aspect of the invention),

or providing components (i) to (iii) separately,

(c) mixing the mixture or components provided in step (b) with water (or an aqueous solution) to generate a composition comprising or consisting of a plurality of particles, preferably a composition as defined herein with regard to the first aspect of the invention,

(d) applying and/or introducing the composition generated in step (c) onto/into the substrate to be treated in an amount sufficient to prevent or reduce plant growth, preferably weed growth,
wherein the plurality of particles contained in the composition generated in step (c) is applied and/or introduced onto/into the substrate in an amount of from 0.1 to 100 g/m$^2$,

(e) optionally: verifying if plant growth, preferably weed growth, has been prevented or reduced.

Herein generally described is also a method for preventing or reducing plant growth, preferably weed growth, on/in a substrate comprising or consisting of the following steps:

(a) Identifying a substrate to be treated on/in which plant growth, preferably weed growth, is to be prevented or reduced,

(b) providing a mixture comprising or consisting of the following components

(i) one or more alkaline earth cation source(s), preferably one or more calcium and/or magnesium cation source(s), (as described above, in particular with regard to the first aspect of the invention)

(ii) one or more inorganic anion source(s), preferably one or more silicate and/or phosphate source(s), (as described above, in particular with regard to the first aspect of the invention)

(iii) optionally, one or more organic substance(s) (as described above; cf. component (iv) of the composition used according to the first aspect of the invention),

or providing components (i) to (iii) separately,

(c) mixing the mixture or components provided in step (b) with water (or an aqueous solution) to generate a composition comprising or consisting of a plurality of particles, preferably a composition as defined herein with regard to the first aspect of the invention,

(d) applying and/or introducing the composition generated in step (c) onto/into the substrate to be treated in an amount sufficient to prevent or reduce plant growth, preferably weed growth,

(e) optionally: verifying if plant growth, preferably weed growth, has been prevented or reduced.

According to another embodiment, the mixture provided in step (b) of the method according to the invention does not comprise any cement.

According to another embodiment, the mixture provided in step (b) of the method according to the invention does not comprise any molecular herbicides (as defined above).

As outlined further above, the water provided, for instance, in step (c) of the method according to the invention may become an integral part of the generated particles (cf. optional component (iii) of the particles as defined above), i.e. may become bound water, and/or may become part of the bulk water contained in the composition.

According to a peferred embodiment of the method, the substrate is not removed from the place where it is identified in step (a) prior to applying and/or introducing the composition generated in step (c) onto/into the substrate.

According to another embodiment, the composition, i.e. also the particles, generated in step (c) of the method according to the invention does/do not comprise any cement.

According to another embodiment, the composition, i.e. also the particles, generated in step (c) of the method according to the invention does/do not comprise any molecular herbicides (as defined above).

According to another embodiment, the plant growth, preferably weed growth, on/in the substrate is not prevented or reduced by hardening of the substrate (i.e. the hardness of the treated substrate is not increased by the methods according to the invention as described herein to such an extent that it prevents or reduces any plant growth, preferably weed growth).

Preferably, the average particle size of the plurality of particles contained in the composition generated in step (c) of the method according to the invention is in a range of from 0.001 to 2 $\mu$m, preferably from 0.001 $\mu$m to 1 $\mu$m, preferably from 0.002 $\mu$m to 0.900 $\mu$m, more preferably from 0.003 to 0.800 $\mu$m, more preferably from 0.005 to 0.700 $\mu$m, more preferably from 0.010 to 0.600 $\mu$m, more preferably from 0.015 to 0.500 $\mu$m, more preferably from 0.020 to 0.400 $\mu$m, more preferably from 0.025 to 0.350 $\mu$m, more preferably from 0.030 to 0.300 $\mu$m, more preferably from 0.035 to 0.250 $\mu$m, more preferably from 0.040 to 0.225 $\mu$m, more preferably from 0.045 to 0.200 $\mu$m, more preferably from 0.050 to 0.175 $\mu$m, more preferably from 0.055 to 0.160 $\mu$m, most preferably from 0.060 to 0.150 $\mu$m.

Preferably, the average particle size of the plurality of particles contained in the composition generated in step (c) of the method according to the invention is in a range of from 0.001 to 2 $\mu$m, preferably from 0.001 $\mu$m to 1 $\mu$m, preferably from 0.002 $\mu$m to 0.900 $\mu$m, preferably from 0.002 $\mu$m to 0.800 $\mu$m, preferably from 0.002 $\mu$m to 0.700 $\mu$m, preferably from 0.002 $\mu$m to 0.600 $\mu$m, preferably from 0.002 $\mu$m to 0.500 $\mu$m, preferably from 0.002 $\mu$m to 0.400 $\mu$m, preferably from 0.002 $\mu$m to 0.300 $\mu$m, preferably from 0.002 to 0.200 $\mu$m, more preferably from 0.002 to 0.190 $\mu$m, more preferably from 0.002 to 0.170 $\mu$m, more preferably from 0.002 to 0.160 $\mu$m, more preferably from 0.002 to 0.150 $\mu$m, more preferably from 0.002 to 0.140 $\mu$m, more preferably from 0.002 to 0.130 $\mu$m, more preferably from 0.002 to 0.120 $\mu$m.

Preferably, the average particle size of the plurality of particles contained in the composition generated in step (c) of the method according to the invention is in a range of from 0.001 to 2 $\mu$m, preferably from 0.001 $\mu$m to 1 $\mu$m, preferably from 0.005 $\mu$m to 0.900 $\mu$m, preferably from 0.005 $\mu$m to 0.800 $\mu$m, preferably from 0.005 $\mu$m to 0.700 $\mu$m, preferably from 0.005 $\mu$m to 0.600 $\mu$m, preferably from 0.005 $\mu$m to 0.500 $\mu$m, preferably from 0.005 $\mu$m to 0.400 $\mu$m, preferably from 0.005 $\mu$m to 0.300 $\mu$m, preferably from 0.005 to 0.200 $\mu$m, more preferably from 0.005 to 0.190 $\mu$m, more preferably from 0.005 to 0.170 $\mu$m, more preferably from 0.005 to 0.160 $\mu$m, more preferably from 0.005 to 0.150 $\mu$m, more preferably from 0.005 to 0.140 $\mu$m, more preferably from 0.005 to 0.130 $\mu$m, more preferably from 0.005 to 0.120 $\mu$m.

Preferably, the average particle size of the plurality of particles contained in the composition generated in step (c) of the method according to the invention is in a range of from 0.010 to 2 $\mu$m, preferably from 0.010 $\mu$m to 1 $\mu$m, preferably from 0.010 $\mu$m to 0.900 $\mu$m, preferably from 0.010 $\mu$m to 0.800 $\mu$m, preferably from 0.010 $\mu$m to 0.700 $\mu$m, preferably from 0.010 $\mu$m to 0.600 $\mu$m, preferably from 0.010 $\mu$m to 0.500 $\mu$m, preferably from 0.010 $\mu$m to 0.400 $\mu$m, preferably from 0.010 $\mu$m to 0.300 $\mu$m, preferably from 0.010 to 0.200 $\mu$m, more preferably from 0.010 to 0.190 $\mu$m, more preferably from 0.010 to 0.170 $\mu$m, more preferably from 0.010 to 0.160 $\mu$m, more preferably from 0.010 to 0.150 $\mu$m, more preferably from 0.010 to 0.140 $\mu$m, more preferably from 0.010 to 0.130 $\mu$m, more preferably from 0.010 to 0.120 $\mu$m.

Preferably, the average particle size of the plurality of particles contained in the composition generated in step (c) of the method according to the invention is in a range of from 0.025 to 2 $\mu$m, preferably from 0.025 $\mu$m to 1 $\mu$m, preferably from 0.025 $\mu$m to 0.900 $\mu$m, preferably from 0.025 $\mu$m to 0.800 $\mu$m, preferably from 0.025 $\mu$m to 0.700 $\mu$m, preferably from 0.025 $\mu$m to 0.600 $\mu$m, preferably from 0.025 $\mu$m to 0.500 $\mu$m, preferably from 0.025 $\mu$m to 0.400 $\mu$m, preferably from 0.025 $\mu$m to 0.300 $\mu$m, preferably from 0.025 to 0.200 $\mu$m, more preferably from 0.025 to 0.190 $\mu$m, more preferably from 0.025 to 0.170 $\mu$m, more preferably from 0.025 to 0.160 $\mu$m, more preferably from 0.025 to 0.150 $\mu$m, more preferably from 0.025 to 0.140 $\mu$m, more preferably from 0.025 to 0.130 $\mu$m, more preferably from 0.025 to 0.120 $\mu$m.

Preferably, the average particle size of the plurality of particles contained in the composition generated in step (c) of the method according to the invention is in a range of from 0.050 to 2 $\mu$m, preferably from 0.050 $\mu$m to 1 $\mu$m, preferably from 0.050 $\mu$m to 0.900 $\mu$m, preferably from 0.050 $\mu$m to 0.800 $\mu$m, preferably from 0.050 $\mu$m to 0.700 $\mu$m, preferably from 0.050 $\mu$m to 0.600 $\mu$m, preferably from 0.050 $\mu$m to 0.500 $\mu$m, preferably from 0.050 $\mu$m to 0.400 $\mu$m, preferably from 0.050 $\mu$m to 0.300 $\mu$m, preferably from 0.050 to 0.200 $\mu$m, more preferably from 0.050 to 0.190 $\mu$m, more preferably from 0.050 to 0.170 $\mu$m, more preferably from 0.050 to 0.160 $\mu$m, more preferably from 0.050 to 0.150 $\mu$m, more preferably from 0.050 to 0.140 $\mu$m, more preferably from 0.050 to 0.130 $\mu$m, more preferably from 0.050 to 0.120 $\mu$m.

Preferably, the average particle size of the plurality of particles contained in the composition generated in step (c) of the method according to the invention is in a range of from 0.075 to 2 $\mu$m, preferably from 0.075 $\mu$m to 1 $\mu$m, preferably from 0.075 $\mu$m to 0.900 $\mu$m, preferably from 0.075 $\mu$m to 0.800 $\mu$m, preferably from 0.075 $\mu$m to 0.700 $\mu$m, preferably from 0.075 $\mu$m to 0.600 $\mu$m, preferably from 0.075 $\mu$m to 0.500 $\mu$m, preferably from 0.075 $\mu$m to 0.400 $\mu$m, preferably from 0.075 $\mu$m to 0.300 $\mu$m, preferably from 0.075 to 0.200 $\mu$m, more preferably from 0.075 to 0.190 $\mu$m, more preferably from 0.075 to 0.170 $\mu$m, more preferably from 0.075 to 0.160 $\mu$m, more preferably from 0.075 to 0.150 $\mu$m, more preferably from 0.075 to 0.140 $\mu$m, more preferably from 0.075 to 0.130 $\mu$m, more preferably from 0.075 to 0.120 $\mu$m.

Preferably, the plurality of particles contained in the composition generated in step (c) is applied and/or introduced onto/into the substrate in an amount of from 0.25 to 100 g/m$^2$, preferably from 0.5 to 90 g/m$^2$, more preferably from 1 to 75 g/m$^2$, more preferably from 1 to 50 g/m$^2$, most preferably from 2 to 50 g/m$^2$, in step (d) of the method according to the invention.

Further preferred, the plurality of particles contained in the composition generated in step (c) is applied and/or introduced onto/into the substrate in an amount of from 0.1 to 90 g/m$^2$, preferably from 0.1 to 80 g/m$^2$, more preferably from 0.1 to 75 g/m$^2$, more preferably from 0.1 to 50 g/m$^2$, more preferably from 0.1 to 40 g/m$^2$, more preferably from 0.1 to 30 g/m$^2$, most preferably from 0.1 to 25 g/m$^2$, in step (d) of the method according to the invention.

More preferably, the plurality of particles contained in the composition generated in step (c) is applied and/or introduced onto/into the substrate in an amount of from 0.5 to 100 g/m$^2$, preferably 0.5 to 75 g/m$^2$, preferably from 0.5 to 50 g/m$^2$, preferably from 0.5 to 40 g/m$^2$, most preferably from 0.5 to 30 g/m$^2$, in step (d) of the method according to the invention.

Most preferably, the plurality of particles contained in the composition generated in step (c) is applied and/or introduced onto/into the substrate in an amount of from 1 to 75 g/m$^2$, preferably from 1 to 50 g/m$^2$, preferably from 1 to 40 g/m$^2$, most preferably from 1 to 30 g/m$^2$, in step (d) of the method according to the invention.

According to an alternative embodiment of the method according to the invention, the mixture or components provided in step (b) can be applied and/or introduced onto/into the substrate to be treated in an amount sufficient to prevent or reduce plant growth, preferably weed growth, before water is added to the obtained treated substrate.

A sixth aspect of the present invention relates to a method for preventing or reducing plant growth, preferably weed growth, comprising or consisting of the following steps:

(a) Identifying one or more plant(s), preferably weed(s), and/or seed(s) thereof, whose growth is to be prevented or reduced,

(b) providing a mixture comprising or consisting of the following components

(i) one or more alkaline earth cation source(s), preferably one or more calcium and/or magnesium cation source(s), (as described above, in particular with regard to the first aspect of the invention)

(ii) one or more inorganic anion source(s), preferably one or more silicate and/or phosphate source(s), (as described above, in particular with regard to the first aspect of the invention)

(iii) optionally, one or more organic substance(s) (as described above; cf. component (iv) of the composition used according to the first aspect of the invention),

or providing components (i) to (iii) separately,

(c) mixing the mixture or components provided in step (b) with water to generate a composition comprising or consisting of a plurality of particles, preferably a composition as defined herein with regard to the first aspect of the invention,

(d) applying the composition generated in step (c) to the one or more plant(s), preferably weed(s), and/or seed(s) thereof,
wherein the plurality of particles contained in the composition generated in step (c) is applied to the one or more plant(s), preferably weed(s), and/or seed(s) thereof in an amount of from 0.1 to 100 g/m$^2$,

(e) optionally: verifying if plant growth, preferably weed growth, has been prevented or reduced.

Herein generally described is also a method for preventing or reducing plant growth, preferably weed growth, comprising or consisting of the following steps:

(a) Identifying one or more plant(s), preferably weed(s), and/or seed(s) thereof, whose growth is to be prevented or reduced,

(b) providing a mixture comprising or consisting of the following components

(i) one or more alkaline earth cation source(s), preferably one or more calcium and/or magnesium cation source(s), (as described above, in particular with regard to the first aspect of the invention)

(ii) one or more inorganic anion source(s), preferably one or more silicate and/or phosphate source(s), (as described above, in particular with regard to the first aspect of the invention)

(iii) optionally, one or more organic substance(s) (as described above; cf. component (iv) of the composition used according to the first aspect of the invention),

or providing components (i) to (iii) separately,

(c) mixing the mixture or components provided in step (b) with water to generate a composition comprising or consisting of a plurality of particles, preferably a composition as defined herein with regard to the first aspect of the invention,

(d) applying the composition generated in step (c) to the one or more plant(s), preferably weed(s), and/or seed(s) thereof,

(e) optionally: verifying if plant growth, preferably weed growth, has been prevented or reduced.

Preferably, the average particle size of the plurality of particles contained in the composition generated in step (c) of the method according to the invention is in a range of from 0.001 to 2 μm, preferably from 0.001 μm to 1 μm, preferably from 0.002 μm to 0.900 μm, more preferably from 0.003 to 0.800 μm, more preferably from 0.005 to 0.700 μm, more preferably from 0.010 to 0.600 μm, more preferably from 0.015 to 0.500 μm, more preferably from 0.020 to 0.400 μm, more preferably from 0.025 to 0.350 μm, more preferably from 0.030 to 0.300 μm, more preferably from 0.035 to 0.250 μm, more preferably from 0.040 to 0.225 μm, more preferably from 0.045 to 0.200 μm, more preferably from 0.050 to 0.175 μm, more preferably from 0.055 to 0.160 μm, most preferably from 0.060 to 0.150 μm.

Preferably, the average particle size of the plurality of particles contained in the composition generated in step (c) of the method according to the invention is in a range of from 0.001 to 2 μm, preferably from 0.001 μm to 1 μm, preferably from 0.002 μm to 0.900 μm, preferably from 0.002 μm to 0.800 μm, preferably from 0.002 μm to 0.700 μm, preferably from 0.002 μm to 0.600 μm, preferably from 0.002 μm to 0.500 μm, preferably from 0.002 μm to 0.400 μm, preferably from 0.002 μm to 0.300 μm, preferably from 0.002 to 0.200 μm, more preferably from 0.002 to 0.190 μm, more preferably from 0.002 to 0.170 μm, more preferably from 0.002 to 0.160 μm, more preferably from 0.002 to 0.150 μm, more preferably from 0.002 to 0.140 μm, more preferably from 0.002 to 0.130 μm, more preferably from 0.002 to 0.120 μm.

Preferably, the average particle size of the plurality of particles contained in the composition generated in step (c) of the method according to the invention is in a range of from 0.001 to 2 μm, preferably from 0.001 μm to 1 μm, preferably from 0.005 μm to 0.900 μm, preferably from 0.005 μm to 0.800 μm, preferably from 0.005 μm to 0.700 μm, preferably from 0.005 μm to 0.600 μm, preferably from 0.005 μm to 0.500 μm, preferably from 0.005 μm to 0.400 μm, preferably from 0.005 μm to 0.300 μm, preferably from 0.005 to 0.200 μm, more preferably from 0.005 to 0.190 μm, more preferably from 0.005 to 0.170 μm, more preferably from 0.005 to 0.160 μm, more preferably from 0.005 to 0.150 μm, more preferably from 0.005 to 0.140 μm, more preferably from 0.005 to 0.130 μm, more preferably from 0.005 to 0.120 μm.

Preferably, the average particle size of the plurality of particles contained in the composition generated in step (c) of the method according to the invention is in a range of from 0.010 to 2 μm, preferably from 0.010 μm to 1 μm, preferably from 0.010 μm to 0.900 μm, preferably from 0.010 μm to 0.800 μm, preferably from 0.010 μm to 0.700 μm, preferably from 0.010 μm to 0.600 μm, preferably from 0.010 μm to 0.500 μm, preferably from 0.010 μm to 0.400 μm, preferably from 0.010 μm to 0.300 μm, preferably from 0.010 to 0.200 μm, more preferably from 0.010 to 0.190 μm, more preferably from 0.010 to 0.170 μm, more preferably from 0.010 to 0.160 μm, more preferably from 0.010 to 0.150 μm, more preferably from 0.010 to 0.140 μm, more preferably from 0.010 to 0.130 μm, more preferably from 0.010 to 0.120 μm.

Preferably, the average particle size of the plurality of particles contained in the composition generated in step (c) of the method according to the invention is in a range of from 0.025 to 2 μm, preferably from 0.025 μm to 1 μm, preferably from 0.025 μm to 0.900 μm, preferably from 0.025 μm to 0.800 μm, preferably from 0.025 μm to 0.700 μm, preferably from 0.025 μm to 0.600 μm, preferably from 0.025 μm to 0.500 μm, preferably from 0.025 μm to 0.400 μm, preferably from 0.025 μm to 0.300 μm, preferably from 0.025 to 0.200 μm, more preferably from 0.025 to 0.190 μm, more preferably from 0.025 to 0.170 μm, more preferably from 0.025 to 0.160 μm, more preferably from 0.025 to 0.150 μm, more preferably from 0.025 to 0.140 μm, more preferably from 0.025 to 0.130 μm, more preferably from 0.025 to 0.120 μm.

Preferably, the average particle size of the plurality of particles contained in the composition generated in step (c) of the method according to the invention is in a range of from 0.050 to 2 μm, preferably from 0.050 μm to 1 μm, preferably from 0.050 μm to 0.900 μm, preferably from 0.050 μm to 0.800 μm, preferably from 0.050 μm to 0.700 μm, preferably from 0.050 μm to 0.600 μm, preferably from 0.050 μm to 0.500 μm, preferably from 0.050 μm to 0.400 μm, preferably from 0.050 μm to 0.300 μm, preferably from 0.050 to 0.200 μm, more preferably from 0.050 to 0.190 μm, more preferably from 0.050 to 0.170 μm, more preferably from 0.050 to 0.160 μm, more preferably from 0.050 to 0.150 μm, more preferably from 0.050 to 0.140 μm, more preferably from 0.050 to 0.130 μm, more preferably from 0.050 to 0.120 μm.

Preferably, the average particle size of the plurality of particles contained in the composition generated in step (c) of the method according to the invention is in a range of from 0.075 to 2 μm, preferably from 0.075 μm to 1 μm, preferably from 0.075 μm to 0.900 μm, preferably from 0.075 μm to 0.800 μm, preferably from 0.075 μm to 0.700 μm, preferably from 0.075 μm to 0.600 μm, preferably from 0.075 μm to 0.500 μm, preferably from 0.075 μm to 0.400 μm, preferably from 0.075 μm to 0.300 μm, preferably from 0.075 to 0.200 μm, more preferably from 0.075 to 0.190 μm, more preferably from 0.075 to 0.170 μm, more preferably from 0.075 to 0.160 μm, more preferably from 0.075 to 0.150 μm, more preferably from 0.075 to 0.140 μm, more preferably from 0.075 to 0.130 μm, more preferably from 0.075 to 0.120 μm.

Preferably, the plurality of particles contained in the composition generated in step (c) is applied to the one or more plant(s), preferably weed(s), and/or seed(s) thereof in an amount of from 0.25 to 100 g/m$^2$, preferably from 0.5 to 90 g/m$^2$, more preferably from 1 to 75 g/m$^2$, more preferably from 1 to 50 g/m$^2$, most preferably from 2 to 50 g/m$^2$, in step (d) of the method according to the invention.

Further preferred, the plurality of particles contained in the composition generated in step (c) is applied to the one or more plant(s), preferably weed(s), and/or seed(s) thereof in an amount of from 0.1 to 90 g/m$^2$, preferably from 0.1 to 80 g/m$^2$, more preferably from 0.1 to 75 g/m$^2$, more preferably from 0.1 to 50 g/m$^2$, more preferably from 0.1 to 40 g/m$^2$, more preferably from 0.1 to 30 g/m$^2$, most preferably from 0.1 to 25 g/m$^2$, in step (d) of the method according to the invention.

More preferably, the plurality of particles contained in the composition generated in step (c) is applied to the one or more plant(s), preferably weed(s), and/or seed(s) thereof in an amount of from 0.5 to 100 g/m$^2$, preferably 0.5 to 75 g/m$^2$, preferably from 0.5 to 50 g/m$^2$, preferably from 0.5 to 40 g/m$^2$, most preferably from 0.5 to 30 g/m$^2$, in step (d) of the method according to the invention.

Most preferably, the plurality of particles contained in the composition generated in step (c) is applied to the one or more plant(s), preferably weed(s), and/or seed(s) thereof in an amount of from 1 to 75 g/m$^2$, preferably from 1 to 50 g/m$^2$, preferably from 1 to 40 g/m$^2$, most preferably from 1 to 30 g/m$^2$, in step (d) of the method according to the invention.

According to another embodiment, the plant growth, preferably weed growth, is not prevented or reduced by hardening of a substrate on/in which the unwanted plants, preferably weed(s), and/or seed(s) thereof are located.

According to a preferred embodiment of the uses and methods of the invention (as described herein), the particles act as a carrier for molecular herbicides and/or act as a stabiliser in solutions and/or powder compositions for molecular herbicides.

According to another preferred embodiment of the uses and methods of the invention (as described herein), the particles exhibit a long-term positive effect on soil material and/or humus content and/or soil composition and/or on water storage capacity, e.g. *via* porosity changes.

According to another preferred embodiment of the uses and methods of the invention (as described herein), the particles do not exhibit any earthworm toxicity when applied in an amount that is required to exert a herbicidal effect on unwanted plants. In this context, the used compositions are preferably used in the form of suspensions and/or powders.

According to another preferred embodiment of the uses and methods of the invention (as described herein), the particles, preferably the inorganic part of a/the particle(s), is/are (a) food ingredient(s). Most preferably, said food ingredients are calcium hydroxide (E 526) and/or calcium silicate (E 552) (hydrate). Preferably, the inorganic part of a/the particle(s) is the active ingredient in the composition.

According to another preferred embodiment of the uses and methods of the invention (as described herein), the particles are synthesised using a *top-down* approach, meaning that bigger particles of the respective mineral are mechanically treated until particles of the desired shape and size (as described herein) are obtained. This is preferably done in one or more of the devices mentioned herein.

According to another preferred embodiment of the uses and methods of the invention (as described herein), the particles are synthesised using a *bottom-up* approach, meaning that the particles are precipitated from soluble precursors. The synthesis of the particles, preferably the *bottom-up* synthesis, can be done in standard chemical reaction tanks known in the state of the art. More preferably, the synthesis, preferably the *bottom-up* synthesis, is done in a controlled flow system, preferably wherein this system is continuous. A preferred embodiment of this invention is the continuous synthesis of particles as described herein.

Another preferred embodiment of the uses and methods according to the invention (as described herein) comprises the application of separation techniques such as sedimentation, centrifugation, (membrane) filtration, sieving, winnowing, size fractioning, flow field fractioning to a composition consisting of or comprising a plurality of particles, preferably to cement accelerators, to separate out the most herbicidally active fraction of said particles.

As described in the state of the art, plants have been modified by breeding, mutagenesis (natural and/or directed) or genetic engineering, e.g. have been rendered tolerant to applications of specific classes of herbicides, such as auxinic herbicides such as dicamba or 2,4-D, bleacher herbicides such as 4-hydroxyphenylpyruvate dioxygenase (HPPD) inhibitors or phytoene desaturase (PDS) inhibitors, acetolactate synthase (ALS) inhibitors such as sulfonyl ureas or imidazolinones, enolpyruvyl shikimate 3-phosphate synthase (EPSP) inhibitors such as glyphosate, glutamine synthetase (GS) inhibitors such as glufosinate, protoporphyrinogen-IX oxidase inhibitors, lipid biosynthesis inhibitors such as acetyl CoA carboxylase (ACCase) inhibitors, or oxynil (i.e. bromoxynil or ioxynil) herbicides as a result of conventional methods of breeding or genetic engineering. Furthermore, plants have been made resistant to multiple classes of herbicides through multiple genetic modifications, such as resistance to both glyphosate and glufosinate or to both glyphosate and a herbicide from another class such as ALS inhibitors, HPPD inhibitors, auxinic herbicides, or ACCase inhibitors. These herbicide resistance generating technologies are, for example, described in Pest Management Science 61, 2005, 246; 61, 2005, 258; 61, 2005, 277; 61, 2005, 269; 61, 2005, 286; 64, 2008, 326; 64, 2008, 332; Weed Science 57, 2009, 108; Australian Journal of Agricultural Research 58, 2007, 708; Science 316, 2007, 1185; and references quoted therein. Several cultivated plants have been rendered tolerant to herbicides by mutagenesis and conventional methods of breeding, e.g., Clearfield® summer rape seed (Canola, BASF SE, Germany) being tolerant to imidazolinones, e.g., imazamox, or ExpressSun® sunflowers (DuPont, USA) being tolerant to sulfonyl ureas, e.g., tribenuron. Genetic engineering methods have been used to render cultivated plants, such as soybean, cotton, corn, beets, and rape seeds, tolerant to herbicides such as glyphosate, imidazolinones, and glufosinate, some of which are under development or commercially available under the brands or trade names RoundupReady® (glyphosate tolerant, Monsanto, USA), Cultivance® (imidazolinone tolerant, BASF SE, Germany) and LibertyLink® (glufosinate tolerant, Bayer CropScience, Germany). According to another preferred embodiment of the uses and methods of the invention (as described herein), said described technologies are used to generate crops (wanted plants and/or seeds) that are resistant to the compositions used according to the invention.

In a further preferred embodiment, these resistant crops (or seeds thereof) are used together with the compositions used according to the invention in farming.

Further preferred is the use of a selective seed coating, creating seeds that are not sensitive to the compositions used according to the invention.

In the studies underlying the present invention, it was found that a correlation seems to exist between the cement acceleration properties of a composition comprising a plurality of particles as defined herein, preferably of the inorganic part(s) of a particle or a plurality of particles as defined herein, and the ability of the composition to function as a herbicide. Thus, the use of a composition comprising a plurality of particles as defined herein as an accelerator for an inorganic binder, preferably for silicate cement, gypsum, aluminate cements, geopolymers, and alkali activated materials, is another aspect of the present invention.

According to another preferred embodiment, the composition comprising a plurality of particles as defined herein is used in combination with other methods for weed control such as, but not limited to, mechanical weed control, e.g. means of mechanical cutting and/or flailing, is used in combination with other herbicides, e.g. chemical herbicides and biological herbicides, surface solidification based weed control, e.g with biocementation and/or cement-based solidification and/or silicate based solidification, electric weed control, e.g. electrophysical treatment, and/or any methods for weed control mentioned in the present text. The use of the composition comprising a plurality of particles as defined herein may take place prior to the application and/or use of the other methods (as described above), simultaneously with the other methods and/or after the application and/or use of the other methods.

According to another preferred embodiment, the composition comprising a plurality of particles as defined herein is used in combination with fertilisers, preferably nitrogen fertilizers, more preferably ammonia and/or urea, phosphate fertilisers, and potassium fertilisers and/or combinations thereof. The use of the composition comprising a plurality of particles as defined herein may take place prior to the application and/or use of the fertilisers (as described above), simultaneously with the fertilisers and/or after the application and/or use of the fertilisers.

What is stated herein for the third aspect of the present invention also applies to the fourth, fifth, and sixth aspect of the present invention and to further aspects of the present invention as mentioned herein and *vice versa*. This applies in particular to (preferred) embodiments of the third aspect of the invention which correspond to (preferred) embodiments of the fourth, fifth, and sixth aspect of the invention and of further aspects of the present invention as mentioned herein or can be derived from these and *vice versa*.

What is stated herein for a use according to the invention also applies to a method according to the invention and *vice versa*. This applies in particular to (preferred) embodiments of the uses according to the invention which correspond to (preferred) embodiments of the methods according to the invention or can be derived from these and *vice versa*.

The invention will now be described in more detail hereinafter with references to the examples. Unless otherwise stated, all data refer to the weight. The solvent of solutions, suspensions and emulsions, if not otherwise stated, is water. Unless otherwise stated, data concerning area in the examples is the area of the soil that was treated with the respective material(s).

Figures:

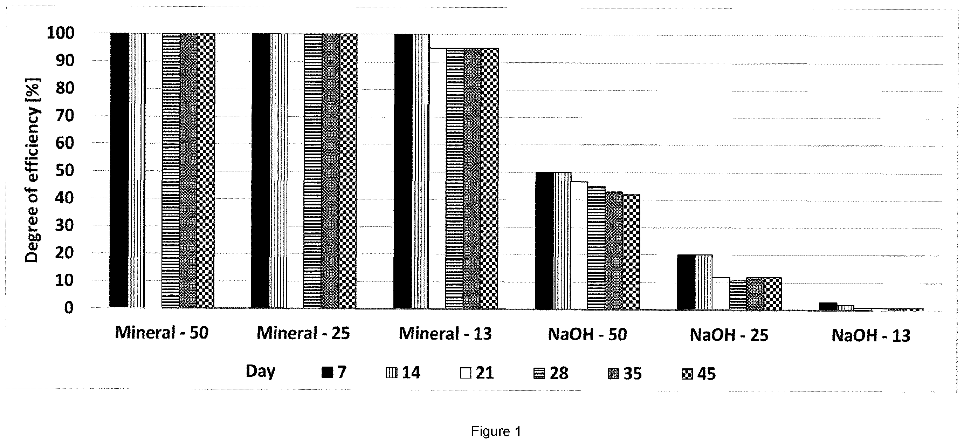

Figure 1: Degree of efficiency of weed control (SeedMix06, Weed Control Assay) at various time points: 7 days: black bars, 14 days: vertical stripes, 21 days: not filled, 28 days: horizontal stripes, 35 days: fine points, 45 days: black and white squares. Mineral particles ("Mineral", plurality of particles) and sodium hydroxide (NaOH) in different application amounts: 50 g/m$^2$ (- 50), 25 g/m$^2$ (- 25), 13 g/m$^2$ (- 13) as indicated by numbers. Use of the same amounts of Ca(OH)$_2$ did not show as efficient weed control as NaOH (data not shown). The mineral particles (plurality of particles) were Hy-7100. Similar results were obtained with X-120 and X-100.

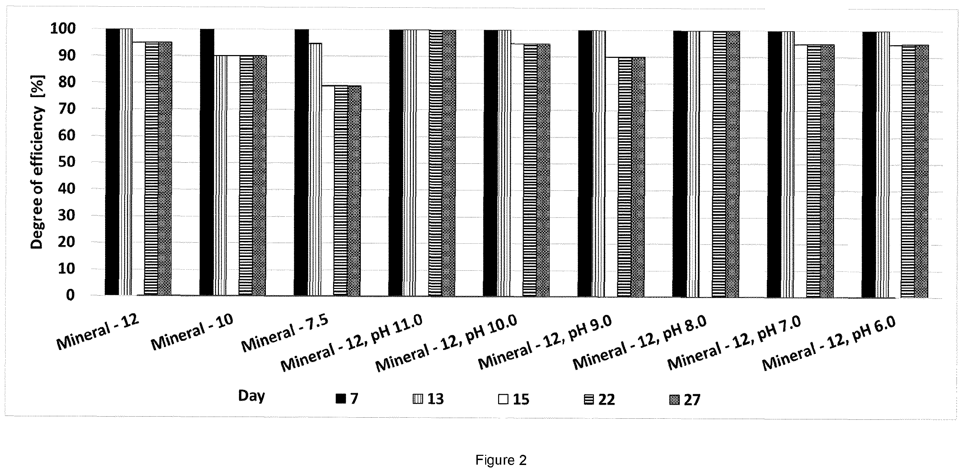

Figure 2: Degree of efficiency of weed control (Seed Mix06, Weed Control Assay) at various time points: 7 days: black bars, 13 days: vertical stripes, 15 days: not filled, 22 days: horizontal stripes, 27 days: fine points. Mineral particles ("Mineral", plurality of particles) using different application amounts of mineral particles 12 g/m$^2$ (Mineral -12), 10 g/m$^2$ (Mineral -10), 7,5 g/m$^2$ (Mineral -7.5) as well as mineral particles at 12 g/m$^2$ (Mineral - 12, pH X) being present in a solution of different pH values (X = 11.0, 10.0, 9.0, 8.0, 7.0, 6.0). The pH values were adjusted using HCl, the identical (required for pH adjustment) amount of HCl was used as a control and did not show any effect in this assay (data not shown). The mineral particles (plurality of particles) were Hy-7100. Similar results were obtained with X-120.

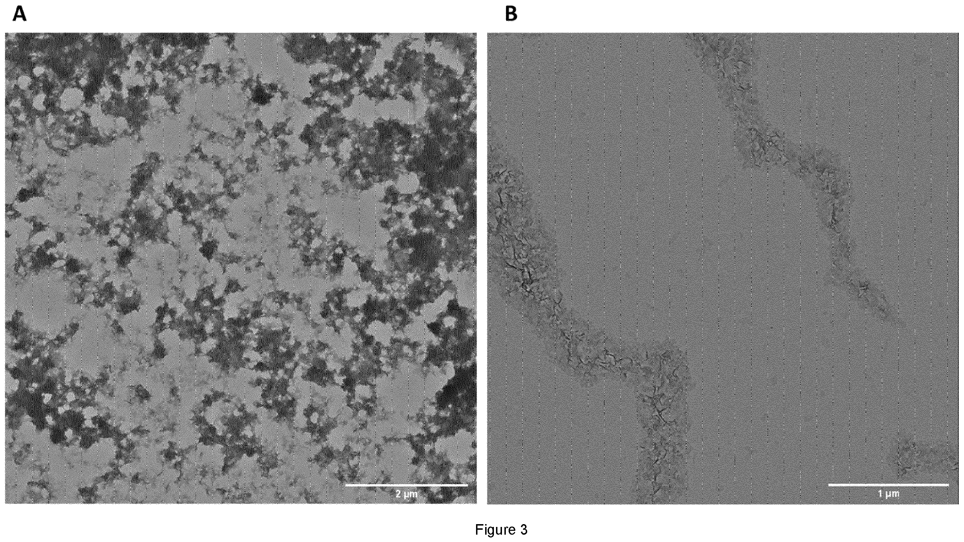

**Figure 3:** TEM images of the pluralities of particles for Sp-001 (A) and Sp-006 (B). In both, irregularly shaped particles are observed, having agglomerated in the drying process during TEM sample preparation. In B) the inorganic part of a/the particle(s) can be identified by its higher electron contrast (and was confirmed as described in this text). The elongated inorganic part(s) of a/the particle(s) is/are embedded in an organic matrix (also identified using elemental mapping). Particles partially coalesced during TEM preparation.

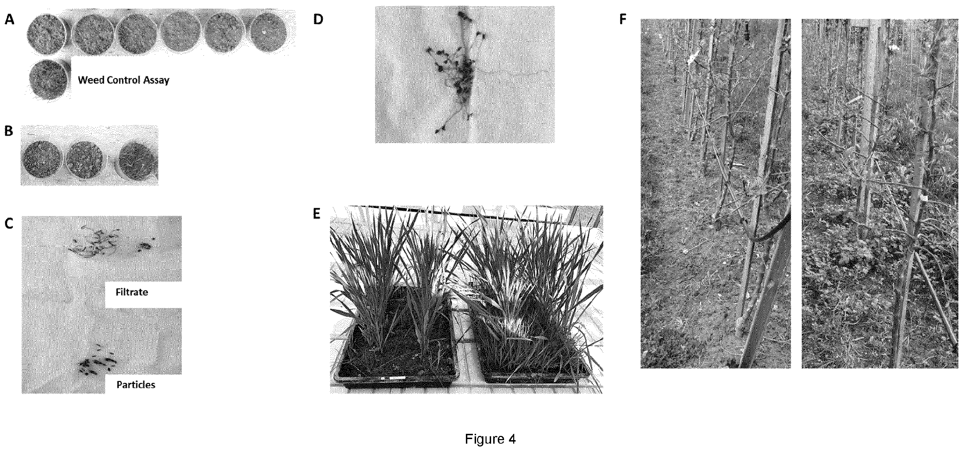

**Figure 4:** Illustration of different effects of mineral particles (plurality of particles) on plants. A: Weed Control Assay at different dosages (top row) and the water control (bottom row). B: Wind-dispersed weed assay - left two samples are Hy-7100 treated samples and the right sample is the water control. C: Determination of sprouting rate after executing three times the membrane filtration assay using Hy-7100 - top is the filtrate and bottom are the particles (similar results obtained with X-120; data not shown). D: Seedlings treated with X-120. E: Weed Control Assay in the presence of seeds of crop plant seeds (spring barley) after 37 days using SeedMix07. Left sample: Treated with particles (analogously to WC-010). Right sample: Water control. Weeds in the control can be clearly detected. F: Field test on young apple trees. Right picture: Water control (no treatment), left picture: Treatment with particles X-120 as defined in the text below.

Examples:

**Example 1: Particulate Cement Accelerators reducing Plant Growth**

Materials and Methods

**Used Chemicals**

The cement used was CEM-I 52.5 R from Dyckerhoff. The cement accelerators used were commercial products and are abbreviated as follows: X-100 and X-120. They are suspensions of fine calcium silicate hydrate crystals (nanoparticles suspended/embedded in a solid/liquid matrix). X-100 is Master X-Seed 100 and X-120 is Master X-Seed 120, both commercialised suspensions of fine calcium silicate hydrate crystals and can be purchased from Master Builders Solutions GmbH. The synthesis of similar substances is described in WO 201006155 A1 and in WO 2011026720 A1. Hy-7100 is an aqueous suspension of calcium silicate hydrate and Hy-3200 is a powdered cement accelerator based on calcium silicate hydrate. Hy-7100 is HyCon® S 7100 L and Hy-3200 is HyCon® S 3200 F, which are both sold by BASF Construction Additives GmbH. Synthesis for similar substances is described in WO 201006155 A1 and in WO 2011026720 A1. HyCon® S 3200 F contains 1-20 wt.-% calcium hydroxide and 5-60 wt.-% calcium disulfamate. Talcum (2-95 $\mu$m) was obtained from Carl Roth GmbH + Co. KG and fully reacted cement was achieved as follows: 10 g cement was mixed with 20 g water and let react for one 1 year under water, followed by 1 month drying at ambient temperature, relative humidity = 50%. The dried cement was ground and sieved, so that 99% of the particles were in a size range of 2-95 $\mu$m (cement, fully reacted, 2-95 $\mu$m). Calcium disulfamate (CAS 13770-92-8) was from Alfa Aesar [Thermo Fisher (Kandel) GmbH] and was used as a powder or as a solution.

**pH-Variation of Mineral Particles**

To vary the pH of the mineral particle suspensions, which are usually basic, HCl was used. In control experiments, the same amount of HCl necessary to adjust the pH of the mineral particle suspensions was applied to the soil and did not show any significant weed control efficiency.

**Homogenisation**

All suspensions were homogenised before use in the respective assay, e.g. the Weed Control Assay. Homogenisation was done by manual shaking (at least 20 sec) before use in the Weed Control Assay. If manual shaking was not sufficient for homogenisation (e.g. shown by sediments still being present), an ultrasonic bath was used for 2 minutes.

**Determination of Concentration**

Measurements of the concentration of the suspended particles were done using absorbance measurements and standard curves (linear regression). Standard curves were obtained by using the known concentrations (e.g. in g/L) of the plurality of particles. In case of purification assays (e.g. after membrane filtration), the concentration of the plurality of particles after purification was calculated using standard curves of absorbance measurements of the plurality of particles from which the purified particles were isolated.

**Membrane Filtration**

Membrane filtration was carried out with centrifugal filter tubes from Marcosep with a size cut-off (pore size) of 200 nm. Membrane material: Polyethersulfone; reservoir material: Polypropylene. The membrane filters comprise an upper reservoir and a lower container to collect the filtrate. Membrane filtration is usually used to separate the soluble fraction from the particulate fraction in used suspensions. During the centrifugation process, also (different) sedimentation (within the particulate fraction) can occur: For each membrane filtration step the liquid sample, whose purification and/or separation was desired, was filled in the upper reservoir of the centrifugal filter tube (15 mL, if not otherwise stated) and centrifugation was carried out at 4.500 x g. The centrifugation time was at least 20 min (and prolonged, if necessary) until the volume in the upper container reached 5 mL. The centrifugation time was prolonged if the necessary reduction in liquid volume was not achieved. After reaching the adequate reduction in liquid volume, the filtrate (typically 10 mL) was separately stored (at ambient temperature) and the particulate fraction was mixed with DI water (deionised water) of the same volume as the filtrate (typically 10 mL) and homogenized. In some cases, the particles sedimented during the assay, forming a pellet and a supernatant. In this case, the respective supernatant was also separated. A membrane filtration step ends with the separation of the filtrate and the dilution of the particulate fraction. The supernatant was separated before the dilution.

The following nomenclature was used: Filtrate X (Product) - the filtrate after X membrane filtration steps. Washed X (Product) - the pellet formed after X membrane filtration steps. Supernat. X - the supernatant formed after X membrane filtration steps. E.g. Supernat.1 is the supernatant formed in the first membrane filtration step, meaning in particular the liquid fraction over the formed pellet after having reached the adequate reduction in volume. Washed 1 is the redispersed pellet after the first membrane filtration step. If a synthesis-protocol (e.g. WC-035) is mentioned as a (Product) in this case, e.g. Supernat. 1 (WC-035), the synthesis protocol was followed, and the purification assay, preferably the membrane filtration assay, was executed after the reaction time. The weed control assay or the sprouting assay was executed subsequently.

**Sedimentation**

Sedimentation was done by using 50 mL polypropylene tubes and 4.000 x g for at least 10 minutes in a centrifuge.

**TEM-Investigation**

Transmission electron microscopy (TEM) images, electron diffraction patterns and energy dispersive spectroscopy (EDS) data were acquired digitally with a JEM-2100F (UHR) operated at an accelerating voltage of 200 keV and equipped with an Oxford UltimMax EDS detector and CMOS 4 megapixel camera (TVIPS TemCam-F216). The samples for TEM studies were prepared by using a homogenised aqueous suspension at a concentration of 1 g/L. The homogenised suspension was added to a carbon-coated copper TEM grid, and the water was allowed to evaporate under ambient conditions.

**Weed Control Assay**

The experiment was carried out in transparent round plant pots with a volume of 450 $cm^3$ in the laboratory. The application area was 78.5 $cm^2$. Also smaller, square plant pots were used with a volume of 310 mL and an application area of 40 $cm^2$. The application amounts were adapted accordingly.

The soil substrate was a sifted land soil. Humus (humic soil) was used as a nutrient source for the desired plant.

Humic soil (250 g, in case of the round plant pots) was placed in a plastic beaker (round plant pots with a volume of 450 $cm^3$). Sifted land soil (approx. 250 g, in case of the round plant pots) was placed on top of the humic soil. Both soil substrates were free of weed growth prior to the treatment. Both soils contained minimal residues of endemic weed seeds or inflowing seeds. These present seeds were not sufficient for efficient weed growth. Weed sowing was done with different seeds or seed mixtures as listed in **Table 1.**

**Table 1:** Different seeds or seed mixtures (SeedMix0X) used, given in weight % of the total seed mixture

| SeedMix-Number | Composition |
|---|---|
| SeedMix01 | 67 wt.% *Plantago lanceolate* (ribwort plantain)<br>33 wt.% *Poa annua* (annual meadow grass) |
| SeedMix02 | 100 wt.% *Poa annua* (annual meadow grass) |
| SeedMix03 | 100 wt.% *Plantago lanceolate* (ribwort plantain) |
| SeedMix04 | 100 wt.% *Brassica rapa chinensis* (Chinese cabbage) |
| SeedMix05 | 100 wt.% *Phaseolus vulgaris* (French Bean) |
| SeedMix06 | 50 wt.% *Plantago lanceolate* (ribwort plantain)<br>50 wt.% *Poa annua* (annual meadow grass) |
| SeedMix07 | 6.5 wt.% *Poa annua* (annual meadow grass)<br>19.3 wt.% *Plantago lanceolate* (ribwort plantain)<br>11.2 wt.% *Chenopodium album* (goosefoot)<br>5 wt.% *Galium aparine* (hitchhikers)<br>40.3 wt.% *Alopecurus myosuroides* (slender meadow foxtail)<br>17.7 wt.% *Geranium dissectum* (cutleaf geranium) |

The seeds or seed mixtures (0.3 g) were placed into the topsoil layer at a depth that ensured physical contact between the seeds and the applied liquids, in particular ensured contact with the applied suspensions. The seed amount was adjusted with respect to surface area if other containers than described above were used.

Different experimental setups were used, which are specified in **Table 2.**

**Table 2:** Setup and results of the Weed Control Assay and synthesis of different pluralities of particles

| Number of Weed Control Test | Substance 1 ([g/m²]) | Substance 2 ([g/m²]);<br>Substance 3 ([g/m²]);<br>Substance 4 ([g/m²]) | Synthesis Method;<br>Reaction time [h] | SeedMix | Degree of efficiency [%] at day (x) [% (day)] |
|---|---|---|---|---|---|
| WC-000 | | | | 1, 2, 3, 4 | 0 (12) |
| WC-001 | Cement powder (100) | | | 1 | 0 (12) |
| WC-002 | Cement powder (200) | | | 1 | 12 (12) |
| WC-003 | Cement powder (300) | | | 1 | 35 (12) |
| WC-004 | Cement powder (400) | | | 1 | 65 (12) |
| WC-005 | Cement powder (200) | X-120 (50) | | 1 | 100 (12) |
| WC-006 | X-120 (50) | | | 1, 2, 3, 4 | 100 (12) |
| WC-007 | X-100 (50) | | | 1, 2, 3, 4 | 100 (12) |
| WC-008 | Hy-7100 (50) | | | 1, 2, 3, 4 | 100 (12) |
| WC-009 | Hy-3200 powder (50) | | | 1, 2, 3, 4 | 100 (12) |
| WC-010 | X-120 (25) | | | 1 | 100 (12) |
| WC-011 | X-120 (15) | | | 1 | 98 (12) |
| WC-012 | X-120 (12) | | | 1 | 95 (12) |

(continued)

| Number of Weed Control Test | Substance 1 ([g/m²]) | Substance 2 ([g/m²]); Substance 3 ([g/m²]); Substance 4 ([g/m²]) | Synthesis Method; Reaction time [h] | SeedMix | Degree of efficiency [%] at day (x) [% (day)] |
|---|---|---|---|---|---|
| WC-013 | X-120 (10) | | | 1 | 90 (12) |
| WC-014 | X-120 (7.5) | | | 1 | 79 (12) |
| WC-015 | Supernat. 1 (Hy-7100) (5) | | | 1 | 100 (12) |
| WC-016 | Supernat. 1 (Hy-7100) (2.5) | | | 1 | 95 (12) |
| WC-017 | Supernat. 1 (Hy-7100) (1) | | | 1 | 90 (12) |
| WC-018 | Supernat. 1 (Hy-7100) (0.5) | | | 1 | 75 (12) |
| WC-019 | Metso 505 (68) | | | 1 | 25 (12) |
| WC-020 | Calcium chloride (50) | | | 1 | 10 (12) |
| WC-021 | Disodium hydrogen phosphate (50) | | | 1 | 0 (12) |
| WC-022 | Lactose (50) | | | 1 | -25 (12) |
| WC-023 | Metso 505 (36) | Calcium chloride (21); Disodium hydrogen phosphate (32); Lactose (10) | SM05; 0.25 | 1 | 78 (12) |
| WC-024 | Metso 505 (36) | Calcium chloride (21); Disodium hydrogen phosphate (32) | SM05; 0.25 | 1 | 46 (12) |
| WC-025 | Metso 505 (36) | Calcium chloride (21); Disodium hydrogen phosphate (32); Saccharose (10) | SM05; 0.25 | 1 | 57 (12) |
| WC-026 | Saccharose (50) | | | 1 | -25 (12) |
| WC-027 | Metso 505 (36) | Calcium chloride (21); Disodium hydrogen phosphate (32); Xylose (10) | SM05; 0.25 | 1 | 75 (12) |
| WC-028 | Xylose (50) | | | 1 | -25 (12) |
| WC-029 | Metso 505 (36) | Calcium chloride (21); Disodium hydrogen phosphate (32); Maleic acid (10) | SM05; 0.25 | 1 | 96 (12) |
| WC-030 | Maleic acid (50) | | | 1 | 28 (12) |
| WC-031 | Metso 505 (20.1) | Calcium chloride (12.85); Disodium hydrogen phosphate (18); Trisodium citrate (50) | SM05; 0.25 | 1 | 67 (12) |
| WC-032 | Trisodium citrate (50) | | | 1 | 18 (12) |

(continued)

| Number of Weed Control Test | Substance 1 ([g/m²]) | Substance 2 ([g/m²]); Substance 3 ([g/m²]); Substance 4 ([g/m²]) | Synthesis Method; Reaction time [h] | SeedMix | Degree of efficiency [%] at day (x) [% (day)] |
|---|---|---|---|---|---|
| WC-033 | Metso 505 (20.1) | Calcium chloride (12.85); Disodium hydrogen phosphate (18); DL-alanine (50) | SM05; 0.25 | 1 | 60 (12) |
| WC-034 | DL-alanine (50) | | | 1 | 25 (12) |
| WC-033a | Metso 505 (20.1) | Calcium chloride (12.85); Disodium hydrogen phosphate (18); L-alanine (50) | SM05; 0.25 | 1 | 50 (12) |
| WC-034b | L-alanine (50) | | | 1 | 40 (12) |
| WC-035 | Britesil C335 (25.5) | Calcium formate (25.3); Disodium hydrogen phosphate (25.5); Disodium tartrate (23) | SM05; 0.25 | 1 | 89 (12) |
| WC-036 | Britesil C335 (25.5) | Calcium acetate (30.74); Disodium hydrogen phosphate (25.5); Disodium tartrate (23) | SM05; 0.25 | 1 | 64 (12) |
| WC-037 | Britesil C335 (25.5) | Calcium propanate (30.74); Disodium hydrogen phosphate (25.5); Disodium tartrate (23) | SM05; 0.25 | 1 | 84 (12) |
| WC-038 | Metso 505 (39) | Calcium chloride (16.8); Master Ease 5020 (19) | SM02; 0.25 | 1 | 65 (12) |
| WC-039 | Master Ease 5020 (19) | | | 1 | 15 (12) |
| WC-038 | Metso 505 (39) | Calcium chloride (16.8); Master Gleium ACE 30 (19) | SM02; 0.25 | 1 | 53 (12) |
| WC-039 | Master Gleium ACE 30 (19) | | | 1 | 21 (12) |
| WC-040 | Metso 400 (36) | Calcium formate (25.3); Disodium hydrogen phosphate (25.5); Disodium tartrate (23) | SM03; 0.02 | 6 | 30 (20) |
| WC-041 | Metso 400 (36) | Calcium formate (25.3); Disodium hydrogen phosphate (25.5); Disodium tartrate (23) | SM03; 0.25 | 6 | 55 (20) |
| WC-042 | Metso 400 (36) | Calcium formate (25.3); Disodium hydrogen phosphate (25.5); Disodium tartrate (23) | SM03; 0.45 | 6 | 64 (20) |
| WC-043 | Metso 400 (36) | Calcium formate (25.3); Disodium hydrogen phosphate (25.5); Disodium tartrate (23) | SM03; 4.5 | 6 | 46 (20) |
| WC-044 | Metso 400 (36) | Calcium formate (25.3); Disodium hydrogen phosphate (25.5); Disodium tartrate (23) | SM03; 21.5 | 6 | 46 (20) |
| WC-045 | X-120 (15) | Bentonite (45) | SM06; 0.5 | 1 | 93 (12) |
| WC-046 | X-120 (15) | Bentonite (37.5); Starch (7.5) | SM06; 0.5 | 1 | 93 (12) |

(continued)

| Number of Weed Control Test | Substance 1 ([g/m²]) | Substance 2 ([g/m²]); Substance 3 ([g/m²]); Substance 4 ([g/m²]) | Synthesis Method; Reaction time [h] | SeedMix | Degree of efficiency [%] at day (x) [% (day)] |
|---|---|---|---|---|---|
| WC-047 | Kasolv 205 (30) | Calcium chloride (26.2); Disodium hydrogen phosphate (17.7); Sucrose (25) | SM05; 0.35 | 1 | 100 (10) |
| WC-048 | Kasolv 205 (30) | Calcium chloride (26.2); Disodium hydrogen phosphate (17.7) | SM05; 0.35 | 1 | 94 (10) |
| WC-049 | Kasolv 205 (30) | Calcium chloride (26.2); Sucrose (25) | SM05; 0.35 | 1 | 82 (10) |
| WC-050 | Kasolv 205 (30) | Disodium hydrogen phosphate (17.7); Sucrose (25) | SM05; 0.35 | 1 | 38 (10) |
| WC-051 | Kasolv 205 (30) | Magnesium chloride (26.2); Disodium hydrogen phosphate (17.7); Sucrose (25) | SM05; 0.35 | 1 | 95 (10) |
| WC-052 | Kasolv 205 (30) | Magnesium chloride (26.2); Sucrose (25) | SM05; 0.35 | 1 | 90 (10) |
| WC-053 | Metso 505 (36) | Calcium chloride (21); Disodium hydrogen phosphate (32); Lactose (10) | SM04; 0.25 | 1 | 85 (12) |
| WC-054 | Metso 505 (36) | Calcium chloride (21); Disodium hydrogen phosphate (32); Saccharose (10) | SM04; 0.25 | 1 | 68 (12) |
| WC-055 | Metso 505 (36) | Calcium chloride (21); Disodium hydrogen phosphate (32); Xylose (10) | SM04; 0.25 | 1 | 83 (12) |
| WC-056 | Talc (2-95 $\mu$m) (100) | | | 1, 2, 3, 4 | 0 (12) |
| WC-057 | Cement (fully reacted, 2-95 $\mu$m) (100) | | | 1, 2, 3, 4 | 0 (12) |
| WC-058 | Supernat. 1 (WC-035) (10) | | | 6 | 93 (14) |
| WC-059 | Supernat. 1 (WC-031) (7.5) | | | 6 | 89 (14) |
| WC-060 | Supernat. 1 (WC-047) (10) | | | 7 | 100 (14) |

The application volume of liquids (water (controls), emulsions, suspensions or solutions) was 4 litres per square metre. The water used was DI water. Each dosage in grams per square metre mentioned refers to the amount of solids applied to the surface of the soil (including the bound water). If samples were used as a powder, they were evenly distributed on the soil surface.

Aqueous suspensions (e.g. cement accelerator suspensions and/or synthesised mineral particles, both plurality of particles) were diluted with water, if applicable.

The liquids (suspensions, emulsions, solutions, or just water in case of controls) were applied to the soil surface and let to incubate for two days prior to first wetting. Each experiment was repeated three times and the results were averaged. All samples were watered every two to three days and the experiment was kept running over at least two months. The samples were exposed to exterior light in addition to artificial growth light with a 12 h rhythm between day and night cycles. During this period, the minimum temperature was 14.5 °C and the maximum temperature was 28.8 °C.

Weed growth was documented on a regular basis, at least once per week. The so-called sprouting rate was determined by visual assessment of the plant pots at the specified times and counting of the number of weeds that had reached the surface. The sprouting rate describes in percent the number of weeds which have surfaced relative to a control treated with just water (WC-000). From this in turn the degree of efficiency was calculated as follows:

Degree of efficiency = [Number of weeds control(day x) – number of weeds sample(day x)]

/ number of weeds control(day x) * 100%

An increased degree of efficiency indicates the inhibition of seed germination. In parallel, the surface coverage was determined and calculated with methods from Abbott (Abbott, W.S. (1925): A method of computing the effectiveness of an insecticide, Journal of Economic Entomology, 18, 265-267, data not shown).

Differences in the degree of efficiency over 3% are considered relevant for interpretation: E.g. samples showing 15% and 18% efficiency were treated as being not different, whereas samples of 15% and 19% were treated as being different. Germination of selected seeds was observed through the transparent plant pots.

**Weed Control Assay (in the presence of wanted plant seeds)**

In a different experimental setup, the same assay protocol as described above (Weed Control Assay) was followed, however, bigger plant plots were used and seeds of wanted plants e.g. corn *(Zea mays)* and/or spring barley *(Hordeum vulgare)* were additionally sown at a depth of 3-4 cm, and the same assay as described above was carried out (application amounts were adjusted to the higher demand due to higher substrate area, syntheses were done multiple times in parallel, if necessary). Additional to counting of weeds (cf. above), the wanted plants were counted in the same way, and rated visually with respect to their vitality.

**Inflowing Weed Assay**

To investigate the inflowing weeds, the same Weed Control Assay as described above under Weed Control Assay was followed, however, no seeds were placed in the top-soil layer at the beginning. The samples were allowed to incubate for two weeks and were exposed to exterior light in addition to artificial growth light with a 12 h rhythm between day and night cycles. After said two weeks, the respectice seeds (0.3 g) were placed on the top of the soil layer and wetted using 4 litres per square metre with suspensions (pluralities of particles) or with DI water (control). During this period, the minimum temperature was 14.5 °C and the maximum temperature was 28.8 °C. The same procedure as described in the Weed Control Assay above was followed with respect to rating and determination of weed control efficiency.

**Sprouting Assay**

At least 100 seeds of the respective seeds and seed mixtures, as specified above, were selected and exposed to the compositions specified in **Table 3.**

**Table 3:** Setup and results of the Sprouting Assay and synthesis of different pluralities of particles

| Number of Sprouting Test | Substance 1 (c1 [g/L]) | Substance 2 (c2 [g/L]); Substance 3 (c3 [g/L]), Substance 4 (c4 [g/L]) | Specification | Synthesis Method; Reaction time [h] | SeedMix | Sprouting Rate [%] at day (Y) [% (day)] |
|---|---|---|---|---|---|---|
| Sp-000 | 0 | | | | 2, 3, 4, 5 | 100 (7) |
| Sp-001 | Hy-7100 (250) | | pH = 11.8, 0.341 $\mu$m | | 2 | 0 (7) |
| Sp-002 | Washed 1 (Hy-7100) (250) | | | | 2 | 10 (7) |

(continued)

| Number of Sprouting Test | Substance 1 (c1 [g/L]) | Substance 2 (c2 [g/L]); Substance 3 (c3 [g/L]), Substance 4 (c4 [g/L]) | Specification | Synthesis Method; Reaction time [h] | SeedMix | Sprouting Rate [%] at day (Y) [% (day)] |
|---|---|---|---|---|---|---|
| Sp-003 | Washed 2 (Hy-7100) (250) | | | | 2 | 15 (7) |
| Sp-004 | Filtrate 1 (Hy-7100) (NA) | | pH = 11.8 | | 2 | 70 (7) |
| Sp-005 | Filtrate 2 (Hy-7100) (NA) | | | | 2 | 85 (7) |
| Sp-006 | Supernatant 1 (Hy-7100) (15) | | pH = 11.8, 0.140 μm | | 2 | 15 (7) |
| Sp-007 | Cement powder (200) | | | | 2 | 90 (7) |
| Sp-008 | Calcium hydroxide powder (200) | | | | 2 | 60 (7) |
| Sp-009 | Sodium hydroxide | | pH = 12.6 | | 2 | 100 (7) |
| Sp-010 | Calcium hydroxide solution (1.7) | | pH = 12.6 | | 2 | 100 (7) |
| Sp-011 | Sodium hydroxide | | pH = 11.8 | | 2 | 100 (7) |
| Sp-012 | Hy-7100 (15) | | pH = 11.8, 0.341 μm | | 2 | 40 (7) |
| Sp-013 | X-120 (25) | | pH = 11.8 | | 2, 3, 4 | 25 (7) |
| Sp-014 | Hy-7100 (25) | | | | 5 | 40 (7) |
| Sp-015 | Metso 505 (2) | | | | 4 | 85 (14) |
| Sp-016 | Metso 505 (5) | | | | 4 | 70 (14) |
| Sp-017 | Calcium chloride (2) | | | | 4 | 95 (14) |
| Sp-018 | Calcium chloride (4.4) | | | | 4 | 91 (14) |
| Sp-019 | Disodium hydrogen phosphate (1) | | | | 4 | 89 (14) |
| Sp-020 | Disodium hydrogen phosphate (2) | | | | 4 | 90 (14) |

(continued)

| Number of Sprouting Test | Substance 1 (c1 [g/L]) | Substance 2 (c2 [g/L]); Substance 3 (c3 [g/L]), Substance 4 (c4 [g/L]) | Specification | Synthesis Method; Reaction time [h] | SeedMix | Sprouting Rate [%] at day (Y) [% (day)] |
|---|---|---|---|---|---|---|
| Sp-021 | Metso 505 (5) | Calcium chloride (1.2); Disodium hydrogen phosphate (2.7) | | SM01; 0.25 | 3 | 55 (14) |
| Sp-022 | Master Ease 5020 (7) | | | SM02; 0.25 | 4 | 95 (14) |
| Sp-023 | Master Ease 5020 (13) | | | SM02; 0.25 | 4 | 92 (14) |
| Sp-024 | Metso 505 (2) | Calcium chloride (4.4); Master Ease 5020 (7) | | SM02; 0.25 | 4 | 24 (14) |
| Sp-025 | Metso 505 (2) | Calcium chloride (4.4); Master Ease 5020 (7); Disodium hydrogen phosphate (1.5) | | SM02; 0.25 | 4 | 20 (14) |
| Sp-026 | Master Suna SBS (6) | | | | 4 | 81 (14) |
| Sp-027 | Metso 505 (2) | Calcium chloride (4.4); Master Suna SBS (6) | | SM02; 0.25 | 4 | 60 (14) |
| Sp-028 | Metso 505 (2) | Calcium chloride (4.4); Master Suna SBS (6); Disodium hydrogen phosphate (1.5) | | SM02; 0.25 | 4 | 48 (14) |
| Sp-029 | Master Glenium ACE 30 (6) | | | SM02; 0.25 | 4 | 82 (14) |
| Sp-030 | Metso 505 (2) | Calcium chloride (4.4); Master Glenium ACE 30 (6) | | SM02; 0.25 | 4 | 45 (14) |
| Sp-031 | Master Glenium ACE 432 (6) | | | | 4 | 85 (14) |
| Sp-032 | Metso 505 (2) | Calcium chloride (4.4); Master Glenium ACE 432 (4) | | SM02; 0.25 | 4 | 32 (14) |
| Sp-033 | Metso 505 (2) | Calcium chloride (4.4); Master Glenium ACE 432 (4); Disodium hydrogen phosphate (1.5) | | SM02; 0.25 | 4 | 26 (14) |

(continued)

| Number of Sprouting Test | Substance 1 (c1 [g/L]) | Substance 2 (c2 [g/L]); Substance 3 (c3 [g/L]), Substance 4 (c4 [g/L]) | Specification | Synthesis Method; Reaction time [h] | SeedMix | Sprouting Rate [%] at day (Y) [% (day)] |
|---|---|---|---|---|---|---|
| Sp-034 | Metso 505 (2) | Calcium chloride (4.4); Master Glenium ACE 432 (4); Disodium hydrogen phosphate (1.5) | | SM02; 0.25 | 4 | 24 (14) |
| Sp-035 | Metso 505 (2) | Calcium chloride (4.4); Master Glenium ACE 432 (4); Disodium hydrogen phosphate (1.5) | | SM02; 0.25 | 4 | 20 (14) |
| Sp-036 | Disodium tartrate (4,5) | | | | 4 | 100 (9) |
| Sp-037 | Metso 505 (5) | Calcium chloride (4.4); Disodium tartrate (2.5); Disodium hydrogen phosphate (1) | | SM02; 0.45 | 4 | 0 (9) |
| Sp-038 | Metso 505 (5) | Calcium chloride (4.4); Disodium tartrate (4.5); Disodium hydrogen phosphate (1) | | SM02; 0.45 | 4 | 0 (9) |
| Sp-039 | Metso 505 (5) | Calcium chloride (4.4); Disodium tartrate (2.5); Disodium hydrogen phosphate (2) | | SM02; 0.45 | 4 | 40 (9) |
| Sp-040 | Metso 505 (5) | Calcium chloride (4.4); Disodium tartrate (4.5); Disodium hydrogen phosphate (2) | | SM02; 0.45 | 4 | 35 (9) |
| Sp-041 | Supernat. 1 (Sp-025) (10) | | | | 2 | 15 (14) |
| Sp-042 | Supernat .1 (Sp-039) (10) | | | | 2 | 18 (14) |

In case of powders, the powder (200 mg) was evenly distributed over the seeds and mixed with these, prior to wetting with DI water (1 mL). In the case of liquid solutions and/or suspensions, the liquid was brought into direct contact with the seeds. The synthesis of the particles was carried out using the synthesis methods described in example 2 and diluted to the applicable concentration. In all cases (suspensions, emulsions, solutions, and powders), the compositions were let to incubate with the seeds for 5 minutes in 1.5 mL reaction tubes. After incubation, the content of the reaction tubes (seed + liquid, or seeds + powders + liquid) was transferred to filter paper and covered with plastic films. Samples were exposed to natural daylight for at least 28 days. During this period, the minimum temperature was 14.5 °C, the maximum temperature was 25.8 °C and the samples were kept humid by watering (every two days).

At several time points, the number of germinated seeds was counted. The germination rate in percent was determined by dividing the number of germinated seeds by the total number of seeds multiplied by 100%.

**Phytotoxicity Against Seedlings**

Seeds were watered (with DI water) as described above in the Sprouting Assay (control) and incubated (exposed to natural daylight, minimum temperature 14.5 °C and the maximum temperature 25.8 °C) as described herein. After 10 days, when all seeds sprouted and grew (seedlings with BBCH-score of 06 - 08), the solutions and/or suspensions (compositions, controls) were applied to the seedlings dropwise, so that the whole seedling surface came into contact with the solution and/or suspension. These seedlings were incubated (exposed to natural daylight, minimum temperature 14.5 °C and maximum temperature 25.8 °C) and visually rated with respect to viability for 8 days. Samples were kept humid by watering every two days. For evaluation, the number of viable weeds was divided by the number of weeds at the beginning of the assay.

**Phytotoxicity Against Emerged Weeds**

Sample preparation was done as in the Weed Control Assay and seeds were just watered. After 12 days, when weeds had emerged (small plants with BBCH-score of 10 - 29), particle suspensions were sprayed over the emerged plants. For evaluation, the number of viable weeds was divided by the number of weeds at the beginning of the assay. This assay was done with various seed mixtures (data not shown).

**Earthworm Toxicity**

Earthworm, Acute Toxicity Tests [OECD Guidelines for Testing of Chemicals, #207, Adopted: 4 April 1984] were carried out as described in the guideline. Specifically, the *Filter Paper Test* and *Artificial Soil Tests* were done with Hy-7100 (pH value of 11.8).

Results

Surprisingly, it was found that cement accelerators, normally desigend to accelerate cement hardening and thus to improve the mechanical properties of a formed cement layer, reduced plant growth by a chemical mode of action, and not by hardening the soil surface above the seeds: The cement accelerators alone (WC-006 to WC-018) showed herbicidal activity at lower dosages compared to cement alone (WC-001 to WC-004), which hardened the surface. The cement accelerators (WC-006 to WC-018) showed minor influence on the mechanical properties of the soil, especially no hardening of the soil surface. Thus, hardening of the surface is not the reason for the reduction in weed growth in WC-006 to WC-018. The effect of the combination of cement and accelerator (WC-005) can be attributed to the presence of the accelerator (cf. with WC-006).

Since the commercial cement accelerator suspensions exhibit a high pH value (approx. pH $12.5 \pm 1.0$, respectively), alkaline controls using sodium hydroxide of the same dosage were done to clarify whether the observed herbicidal effects may be due to the alkaline conditions. Using the same dosage (with respect to the same solid weight per square metre) of a mineral particle suspension exhibiting a pH value of 11.8 (X-120) and of a sodium hydroxide solution exhibiting a pH value of 13.5, the mineral particles (plurality of particles) show significantly higher degrees of efficiency. This indicates that the mode of action goes beyond the alkalinity of the mineral particle suspensions (cf. **Fig. 1**). Thus, mineral particles (plurality of particles) are surprisingly more suitable weed control agents than alkaline solutions.

The herbicidal character of the used suspensions is associated to the particles and not to the solubilised species, as can be seen by the fact that the (washed) particulate fraction of the suspension does suppress the germination of weeds (Sp-002 and Sp-003) whereas the liquid fraction of said suspension does not suppress germination to a significant extent (Sp-004 and Sp-005). Furthermore, adjusting the pH of the mineral particle suspensions to 11.0, 10.0, 9.0, 8.0, 7.0 and 6.0 also resulted in high weed control efficiency, as can be seen in **Figure 2.** This indicates that the mode of action of the particles goes beyond their pH value, as also supported from comparison of Sp-001 to Sp-003 with Sp-007 to Sp-011.

This effect was particularly surprising, as some particles tend to agglomerate and/or aggregate during the adjustment of the pH value. Knowing that the particles are the cause of the herbicidial character of the used suspensions, this behavior could be interpreted as single particles of the plurality of particles still being mobile enough to be washed out of these agglomerates and/or aggregates and to reach the seeds, where they reduce the plant growth due to the inhibition of sprouting and/or the inhibition of the growth of the sprouts. Another possibility is that a fraction of non-agglomerated and/or non-aggregated particles is effective enough to suppress weed growth. Without wishing to be bound by theory, this leads to the interpretation that within the plurality of particles, a certain fraction of particles exists, which has a higher herbicidal character than the other fraction(s). This is also backed up by further investigations carried out within the framework of the present study: The supernatant formed during the purification assay contained only small particles (Z average = 0.140 $\mu$m, Sp-006) and showed effective sprouting inhibition (cf. e.g. Sp-001, Z average = 0.341 $\mu$m). The small fraction (Sp-006) showed significantly higher sprouting inhibition than the same amount of the plurality of particles they had been isolated from (Sp-012). Thus, particles exhibiting a smaller hydrodynamic size show a significantly higher herbicidal character than particles with a larger hydrodynamic size. The preferred average particle size (Z average) of the mineral particles (plurality of particles) is between 2 $\mu$m and 0.001 $\mu$m.

TEM investigation showed that the suspensions contain an elongated inorganic part of a/the particle(s), embedded in an organic matrix: Size determination of the inorganic part of a/the particle(s) showed an average particle length (Sp-006: 0.045 $\mu$m; Sp-001: 0.050 $\mu$m), an average particle width (Sp-006: 0.010 $\mu$m; Sp-001: 0.012 $\mu$m), and average particle aspect ratios (Sp-006: 4.5; Sp-001: 6). The inorganic part of a/the particle(s) was identified by TEM contrast analysis and elemental analysis (cf. **Fig. 3**).

Size determination of the organic part of the particles showed an average particle length of 0.057 $\mu$m (Sp-006) and an average particle width of 0.040 $\mu$m and an average particle aspect ratio of 1.4. Single particles were identified by TEM contrast analysis. To facilitate identification of single particles 10 and 100 times higher dilution was used in preparation of the TEM samples, compared to the preparation of TEM samples of which images are shown in **Figure 3** (images not shown).

Also, efficient weed control ability of mineral particles (plurality of particles) was found in lower dosages proving herbicidal character (e.g. WC-010 to WC-018).

In **Figure 4,** photographs of the different effects of the mineral particles (pluralities of particles) on plants are shown: Additional to the results discussed above **(Fig. 4 A** Weed Control Assay, **Fig. 4 C** Sprouting Assay), it is shown that the particulate herbicides can also act against wind-dispersed seeds (**Fig. 4 B**) as well as against seedlings (**Fig. 4 D**). Furthermore it is shown that adequate use of a plurality of particles, as defined herein, is able to suppress weed growth, while not inhibiting the sprouting and growth of crops (wanted plants) (**Fig. 4 E**). Also, pictures from a young apple tree orchard test are shown, described in detail in example 3, which support this finding (**Fig. 4 F**).

In the assay investigating phytotoxicity against emerged weeds, the application of 50 g/m$^2$ X-120 led to the absence of any viable plants 10 days after application of the suspension on sprouted seedlings (1 L/m$^2$) of SeedMix07. It was thus surprisingly shown that the plurality of particles contained in the compositions according to the invention are pre-emergence herbicides as well as post-emergence herbicides. The use as pre-emergence herbicide is, however, more preferred: It was observed that the same amount of mineral particles (plurality of particles) added in growth stages (BBCH-scale 0 to 9) suppressed emergence more effectively than the application of the same amount of the same particles to plants of BBCH growth stages 10 to 29.

With respect to earthworm toxicity, the amounts used for efficient weed control (e.g. 25 g/m$^2$) did not show any earthworm toxicity in both the *Filter Paper Test* and in the *Artificial Soil Test.*

Colloidal stability of particles was investigated by repeating the experiment WC-013 after one, two, and three years of initial experiment without any (significant) detectable loss in performance (p = 0.1; 4 repetitions each after 1, 2, and 2.5 years). There was 0% loss in herbicidal activity. The particle suspension was constantly stored in its delivered state at room temperature during this time period. Also, colloidal stability ofWC-017 was confirmed using the same assay.

**Example 2: Synthesis of Mineral Particles to control Plant Growth**

Material and Methods

**Synthesis of Mineral Particles (pluralities of particles)**

The synthesis of the particles contained in the compositions as defined herein comprises a reaction of at least one cation source and at least one anion source. Preferably, this reaction is carried out in the presence of one or more organic substance(s), which influence(s) the reaction mechanism and thus, the temporal evolution of the particle size, particle shape and aspect ratio of each particle and, consequently, of the plurality of particles. Different methods of mixing the particle precursors (i.e. cation source(s), anion source(s) and optionally organic substance(s)), were used to synthesise the particles. The methods are specified below. Unless otherwise indicated, the reaction procedure was strictly followed. Any deviations from a synthesis method (e.g. educt concentration, addition time (AT), final reaction volume (V) are listed in the respective tables and/or within the present text. In the tables, also the reaction time (RT), being the time between the end of the addition of the precursors and the start of the designated assay, is mentioned. NA or an empty cell is used when the information is not applicable, e.g. there is no reaction time when single solutions and/or components are used (e.g. WC-001 to WC-004, WC-007, WC-010, and others). The addition time is the time between the start and the end of the addition of component I to component II or *vice versa* (as indicated below). The addition amount and addition rate can be calculated from the given time information, the relative proportion of the single components and the final concentrations of the reactions. The final reaction volume is the final reaction volume within the respective container. All suspensions were homogenised before the use in the respective assay (cf. example 1).

**Synthesis Method 1 (SM01)**

Synthesis in 45 mL plastic vial: Addition of cation source (I) to anion source (II) while the precursors were used as solutions: AT = 1 min; the additives (organic substances) were present in the anion source solution (II). The final reaction volume was 32 mL and the sum of solid components added was 37.5 g/L. During the addition time, the reaction was not shaken or stirred. After the addition, the vial was shaken manually for 1 minute. During the reaction time, the reaction was not shaken or stirred.

**Synthesis Method 2 (SM02)**

Each synthesis was done in a 45 mL plastic vial with continuous stirring by using a magnetic stirrer (400 rpm, IKAR RCT Basic). The final reaction volume was 32 mL and the sum of solid components added was 37.5 g/L. The precursors were used as solutions, respectively. AT = 1 min; the additives were present in the anion source solution (II) and cation source (I) was added to the anion source (II) under stirring (400 rpm). During the reaction time, the solutions were stirred using a magnetic stirrer (400 rpm).

**Synthesis Method 3 (SM03)**

The synthesis was performed in a glass three neck flask (1 L) under continuous stirring (700 rpm). The final reaction volume was 400 mL and the sum of soild components added was 37.5 g/L. The precursors were used as solutions, respectively. AT = 10 min; the anion source (I) was added to the cation source (II) under stirring (700 rpm), the organic substances were present in the anion source solution (I). During the reaction time, the solution was stirred (700 rpm).

**Synthesis Method 4 (SM04)**

Mixing of powdered precursors (I) in a reaction vessel (plastic vial) and addition to the total amount of DI water (II) (AT = 2 seconds) followed by manual shaking (1 min) and further continuous stirring (400 rpm, 5 min). The final reaction volume was 32 mL and the sum of solid components added was 37.5 g/L. During the reaction time, the solutions were not stirred or shaken.

**Synthesis Method 5 (SM05)**

Addition of DI water (I) to a reaction vessel and addition of the mixed powdered precursors (II) under constant stirring (400 rpm, AT = 1 min). The final reaction volume was 32 mL and the sum of solid components added was 37.5 g/L. After the addition time, the suspensions were stirred for 6 min (400 rpm) and afterwards not stirred or shaken.

**Synthesis Method 6 (SMOG)**

Solid material having a high water binding capacity (e.g. bentonite and/or starch, also referred to as "carrier") (I) was added to a particle suspension (liquid) (II) until the suspension became plastic (AT = 2 min). The resulting paste was dried under nitrogen flow for 2 days to obtain a granulate form of said composition. A powder form was obtained by grinding of the granulate in a mortar. Before further use, the powder, comprising adsorbed particles on the carrier, was redissolved and/or resuspeded in DI water.

Further details regarding the synthesis of the particles are shown in **Table 2** and **Table 3.** These details are in particular the particle precursors categorised in substances 1 to 4 (usually anion source, cation source, organic substance and/or further anion source) and their concentration and/or application amounts in g/m$^2$.

**Used Chemicals**

Metso 505 is a sodium metasilicate (modulus M = 1.0) pentahydrate powder from PQ Silicas BV, which was used as delivered or in a concentration of 250 g/L sodium metasilicate pentahydrate in DI water and was used as anion source. Metso 400 is a potassium metasilicate (modulus M = 1.0, solid content 50 wt.-%) solution from PQ Corporation and was used as delivered as anion source. Kasolv 205 is a potassium silicate (modulus M = 3.3) powder from PQ Silicas BV (average particle size 110 µm) and was used as anion source. Britesil C335 is a sodium silicate (modulus M = 3.3) powder from PQ Silicas BV (average particle size 95 µm) and was used as anion source. Calcium chloride and or magnesium chloride powder were used as delivered or in a liquid concentration of 222 g/L in DI water (cation source, calcium and/or magnesium source). Master Ease 5020, Master Suna SBS (used with solid content 20 wt.-%), Master Glenium ACE 30, Master Glenium ACE 432 (used with solid content 25.7 wt.-%) are polymer solutions from Master Builders Solutions GmbH (part of MBCC Group) and were used as delivered (organic substances). These polymers (poly arylic ether and poly carboxylate ether) solutions are usually used as superplasticisers for inorganic binders, preferably cement. The comb-type polymer Master Glenium ACE 30 is a commercialised polycarboxylate ether (obtainable by MBCC Group and/or BASF Italy S.p.A) based on the monomers maleic acid, acrylic acid, vinyloxybutyl-polyethyleneglycol - 5800 (Mw = 40000 g/mol (measured by G.P.C.). The solid content of the sample is 45 wt.-%. Master Ease 5020 is a phosphate polycondensate cement superplasticiser commercialised by Master Builders Solutions Deutschland GmbH and has a solid content of 23.1 wt.-%. Similar polymers can be synthesised by following synthesis protocols found from WO 201006155, EP 2344566 A1 as well as references cited therein. Baypure CX 100 and Baypure DS 100 were obtained from Lanxess AG and are (poly)aminoacids and were used as delivered (as organic substances) or as stock solutions of 250 g/L in DI water. Baypure DS 100 is a sodium salt of polyaspartic acid with a Mw = 2000-3000 g/mol according to the supplier (CAS: 144538-83-0). Baypure CX 100 is tetrasodium iminodisuccinate (CAS: 144538-83-0). Baypure CX 100 and Baypure DS 100 are considered biodegradable. Genapol® PF20 and Genapol® PF80 (block copolymer of propylene oxide and ethylene oxide) were from Clariant SE and used as delivered (as organic substances). Genapol® PF 20 is a block copolymer of propylene oxide and ethylene oxide, containing 20% w/w ethylene oxide with an Mw = 2500 g/mol according to the supplier. Genapol® PF 80 is a block copolymer of propylene oxide and ethylene oxide, containing 80% w/w ethylene oxide. Both are considered biodegradable. Yeast extract powder (water soluble, extracts from autolysed beer yeast, 8% N, 4.8-6.3 % Amino-N, AN/TN 41-60, water content 6 wt.-%, pH= 6.4-7.4) and albumin (Albumin Fraction V, protease free, CAS Nr. 90604-29-8) were in powder form from Carl Roth GmbH + Co. KG. Both were used as organic substances and were used as delivered or in 100 g/L liquid concentration in DI water and are considered biobased and biodegradable. Disodium hydrogen phosphate (anion source, phosphate source), sodium hydrogen carbonate (anion source, carbonate source), sodium hydroxide, sodium aluminate (anion source, aluminate source), potassium hydroxide, were from Carl Roth GmbH + Co. KG. The organic substances disodium tartrate, sucrose, malic acid, lactose, D-xylose, ethylenediaminetetraacetic acid (EDTA), trisodium citrate, L-glutamine, L-glycine, sodium gluconate, tris(hydroxymethyl)aminomethane (TRIS), sodium salicylate, disodium maleate, L-alanine, DL-alanine, trehalose and fructose were purchased from Carl Roth GmbH + Co. KG and used as delivered or as solutions. If used as aqueous solutions, the concentrations were 200 g/L, if not soluble at this concentration, 90% of the maximum solubility was used as a stock concentration. Starch was HI-MAIZE® 260 from Ingredion Germany GmbH with a pH of 6.0 and a total dietary fibre (AOAC) of 53 % (CML 623B: AOAC 991.43 dry basis). It was used as an organic substance as a powder and or a suspension (50 g/L).

Results

To transfer the findings with regard to commercial calcium silicate hydrate based cement accelerators (cf. example 1) to further kinds of mineral particles (pluralities of particles), syntheses were carried out using different cation sources, anion sources and optionally organic substances. Also, different reaction procedures were followed. It was observed that the reaction conditions, e.g. the addition time and/or reaction time, influenced the weed control abilities of the synthesised particles (cf. **Table 2** and **Table 3,** e.g. WC-040 to WC-044). The temporal evolution of each particle and consequently of the plurality of particles (e.g. particle size and shape of each particle) depends on the selected synthesis parameters. Especially, this was observed when the same particle precursors and varying synthesis methods are used, supporting preferred synthesis methods for particles as described herein. This observation supports example 1, wherein the particle properties, such as e.g. the hydrodynamic size, influenced the herbicidal character of the particles. Also, **Table 2** and **Table 3** show that the herbicidal effect is not caused by the associated organic substance itself. It seems as if the herbicidial activity of the compositions is due to the presence of the inorganic part of a/the particle(s), rather than the chosen organic substance. Preferably, the organic substance(s) alone, in the same dosage as present in the composition used according to the invention, do(es) not act as herbicide.

The results of **Table 2** and **Table 3** show that particle size and/or particle shape of the particles are crucial for the regulation of plant growth, preferably the suppression of weed growth and/or sprouting, after physical contact between the particles and the plants and/or seeds and/or sprouts. As a consequence, the ability of the particles to function as herbicides is dependent on the particle properties, i.e. dependent on particle size, particle shape and/or particle composition. The concentration of inorganic material itself does not seem to be the limiting factor for efficient weed control: Small amounts of small particles controlled weed growth more efficiently than large amounts of larger particles.

It was observed that sprouting and/or weed growth of non-inhibited seeds usually took place within the first two weeks of the Weed Control Assay. After two weeks, no further weeds sprouted, indicating that an efficient weed control mechanism is achieved by the use according to the invention.

Similar results, meaning a synergistic weed control ability (in comparison to the pure precursors) of particles derived from sodium metasilicate, calcium chloride and disodium hydrogen phosphate and the following organic substances was achieved: TRIS, sodium salicylate, L-glutamine, glycine, Trilon M (trisodium salt of methylglycinediacetic acid), disodium tartrate, sodium potassium tartarte, malic acid, potassium hydrogen tartrate, fumaric acid, EDTA, disodium oxalate, glucose, sodium gluconate (data not shown). Also, the use of cold swelling starch and hot swelling starch as well as modified starch (ethoxylated and propoxylated starch) showed similar results than synthesis similar to WC-046 substituting the starch with the before mentioned cold swelling starch and hot swelling starch or modified starch (ethoxylated and propoxylated starch), respectively.

During a synthesis that was carried out analogously to WC-035, 10% and 20% of the calcium ions (number of cations) were substituted with magnesium ions (using magnesium chloride) showing comparable performance of the weed control efficiency. Also, a substitution of 20% of the silicate atoms exchanged by sulfur (using sodium sulfate) showed weed control efficiency. Also, the presence of 10 wt.% of aluminate (using sodium aluminate) in replacement for silicate (10 wt.-% of sodium silicate was replaced by sodium aluminate during a synthesis analogous to WC-035) showed weed control efficiency (data not shown).

As a control experiment, an experiment analogous to WC-009 was run using the same amount of calcium disulfamate (as added through adding Hy-3200). This control did not show as effective weed control as the plurality of particles (data not shown).

As described herein, efficient weed control was observed with regard to various kinds of seeds, however, some seeds tend to be more resistant towards the compositions used according to the invention. French bean *(Phaseolus vulgaris,* Seed Mix05) showed a different sprouting inhibition than other seeds (e.g. Sp-014), indicating that a certain selectivity of the seeds to the formed particles of the synthesis procedure exists. Based on this result, it is conceivable that seeds could be coated with a selective coating, rendering them resistant to the particles contained in the compositions used according to the invention (e.g. by preventing physical contact between the particles used according to the invention and the seed surface). Furthermore, a protective seed coat, which reacts and/or interacts with the particles contained in the compositions used according to the invention, is thinkable. The protected seed would react with the particles and allow the (protected) seed to sprout. In addition, this seed coat would render the coated seed resistant against the particles contained in the compositions used according to the invention. This selective and/or protective coating may be of organic and/or inorganic origin and be essentially acidic, basic or neutral.

The commercial products (Hy-7100, X-120, X-120, Hy-3200 powder) are not designed to act as herbicides. Consequently, the herbicidal property of the cement accelerators used herein could be improved by adapting the particle size, preferably reducing the particle size, e.g. by using different reaction parameters such as temperature, higher or lower stirring speed and/or by changing the relative proportions of the cation and anion source(s) and/or the organic compound(s), if present, suitable to control the particle size and/or shape. Also, a different mode of addition (adding the anion to the cation source or *vice versa,* wherein both solutions could contain the organic substance(s), if present) is thinkable. The organic substance(s) could also be added from a separated container (instead), if suitable for achieving synthesis of herbicidal particles. This could be done e.g. in continuous flow. Also, solid state reactions forming particles are thinkable to obtain particles for most efficient weed control.

## Example 3: Field Tests and Associated Lab Tests

Materials and Methods

**Synthesis**

The synthesis methods as defined in examples 1 and 2 were further used as stated herein.

**Investigation of Influence on Ground Elder**

An outdoor area fully covered (100% coverage rate, BBCH 20-39) with ground elder (*Aegopodium podagraria*) was chosen. For each experiment, two plots were prepared: In the first plot any organic plant substance which surfaced was mechanically cut off. In a second plot, the ground elder was treated as is (including above soil shoots). Different mineral particle suspensions were applied to the different areas of the respective plot using the following application amounts: X-120 (10 g/m$^2$), X-120 (20 g/m$^2$) and application volumes of 2 L/m$^2$. The untreated control was treated with water only (2 L/m$^2$). After this application, the plots were let to incubate under outdoor conditions and ground elder appearance and health was rated by an experienced rater (at least 5 years of experience) over two months (visually assessed every two weeks). During this period, 203 L rain per square metre was observed, the temperature varied between -2°C and 20 °C and the relative humidity varied between 50% and 90%. As a back-up experiment, ground elder was also cultivated in the laboratory including the rhizomes in big plant pots filled with humic soil and sifted land soil and similar application amounts were used. The ground elder was watered at least twice a week and rated every two weeks.

**Field Tests Apple**

Different amounts of X-120 (20 g/m$^2$ and 10 g/m$^2$, applied in 1 L/m$^2$ as aqueous suspension) and the reaction product of WC-045 (80 g/m$^2$ and 40 g/m$^2$ overall application amount, resuspended in tap water and applied in 1 L/m$^2$) were applied to the soil (45 m$^2$ on three different plots) below young apple plants (lower foot area). As a chemical control, Roundup (glyphosate, a molecular herbicide) was used as described in the manual by the manufacturer by a person skilled in the art. The untreated control was treated with water only. The suspensions were applied to the soil surface and left under outdoor conditions for three months. No rain occurred for at least 48 hours after application and weed presence and vitality of the apple trees was rated by an experienced rater (at least 5 years of experience) over three months (visually assessed every two weeks). During this period, 153 L rain per square metre fell, the temperature varied between 0°C and 23 °C and the relative humidity varied between 50% and 90%. The results from the respective plots were averaged and rated with respect to their degree of coverage.

**Field Test Grapevine**

Different amounts of X-120 or Hy-7100 (20 and 10 g/m$^2$ each, applied in 1 L/m$^2$ as aqueous suspensions) were applied to the soil (45 m$^2$ on three different plots) below grapevine plants, respectively. As a chemical control, Roundup (glyphosate, a molecular herbicide) was used as described in the manual from the manufacturer by a person skilled in the art. The untreated control was treated with water only. The suspensions were applied to the soil surface and left under outdoor conditions for three months. No rain occurred for at least 48 hours after application and weed presence and vitality of the wine trees was rated by an experienced rater (at least 5 years of experience) over three months (visually assessed every two weeks). During this period, 175 L rain per square metre fell, the temperature varied between 2°C and 23 °C and the relative humidity varied between 45% and 90%. The results from the respective plots were averaged and rated with respect to their degree of coverage.

Results

**Investigation of Influence on Ground Elder**

In the ground elder samples, where the particles contained in the compositions used according to the invention were applied on top of the green shoots, the ground elder stopped growing. Even four weeks after treatment, the plants were significantly smaller than the untreated control: 100% plants stopped growing with signs of phytotoxicity.

In the samples where all the above ground plant material was removed prior to application, just 5% of the area was re-covered (coverage rate) with plants after 6 weeks in the samples treated with particles (re-growth from the untreated side caused this coverage), when compared to the control examples treated with water. In the control area, the whole application area was re-covered (100% coverage rate). This indicated that the particles contained in the compositions used according to the invention can also reduce the re-growth from rhizomes.

Similar results were observed in the laboratory. No re-occurrence of ground elder after six weeks was observed there in the treated area (5% coverage rate), whereas the untreated area was completely covered with ground elder (100% coverage rate, re-growth from the soil).

**Apple Field Test**

Pictures of the untreated control in the apple field test seven weeks after application are shown in **Figure 4 F.** On the right side, the untreated control is shown, strongly covered by weeds. On the left side, a sample treated with 10 g/m$^2$ X-120 is shown, exhibiting efficient weed control. In the sample treated with 20 g/m$^2$ X-120, even less weed growth was observed. The degree of efficiency of 10 g/m$^2$ X-120 was statistically not different from the chemical (positive) control (glyphosate). Thus, the examples show that the particles contained in the compositions used according to the invention can yield as effective weed control as molecular herbicides. Use of adsorbed X-120 (WC-045) (synonyms: stabilised X-120, X-120 on a carrier) was statistically not distinguishable from the same amount of active (X-120). Thus, the application of adsorbed particles within a granule yields similar weed control properties. The use of a stabilised form of particles is thus preferred. After nine weeks of application in samples treated with 10 g/m$^2$, approx. 2% of the surface was covered by weeds, whereas in the untreated control (application of just water) 95% of the surface was covered by weeds. No negative effect on apple yield and/or quality was observed.

**Grapevine field test**

Four weeks after application, samples treated with Hy-7100 and X-120 were statistically not distinguishable from the chemical control (glyphosate). The coverage rate was approximately 2%, whereas the untreated control showed 90% coverage by weeds.
Field tests documented good performance of the particles contained in the compositions used according to the invention in outdoor application and proved applicability as pre-emergence herbicides and post-emergence herbicides.

**Claims**

1.  Use of a composition comprising or consisting of a plurality of particles,

    wherein the particles comprise or consist of the following components

        (i) one or more alkaline earth cation(s), preferably calcium and/or magnesium ions, and
        (ii) one or more inorganic anion(s) selected from the group consisting of silicate and phosphate anion(s), and
        (iii) optionally bound water, and
        (iv) optionally one or more organic substance(s),

    as herbicide,
    wherein the plurality of particles contained in the composition is applied in an amount of from 0.1 to 100 g/m$^2$.

2.  Use according to claim 1, wherein the average particle size of the plurality of particles is in a range of from 0.001 to 2 $\mu$m, preferably from 0.001 $\mu$m to 1 $\mu$m, preferably from 0.002 $\mu$m to 0.900 $\mu$m, more preferably from 0.003 to 0.800 $\mu$m, more preferably from 0.005 to 0.700 $\mu$m, more preferably from 0.010 to 0.600 $\mu$m, more preferably from 0.015 to 0.500 $\mu$m, more preferably from 0.020 to 0.400 $\mu$m, more preferably from 0.025 to 0.350 $\mu$m, more preferably from 0.030 to 0.300 $\mu$m, more preferably from 0.035 to 0.250 $\mu$m, more preferably from 0.040 to 0.225 $\mu$m, more preferably from 0.045 to 0.200 $\mu$m, more preferably from 0.050 to 0.175 $\mu$m, more preferably from 0.055 to 0.160 $\mu$m, most preferably from 0.060 to 0.150 $\mu$m.

3.  Use according to claim 1 or 2, wherein the plurality of particles contained in the composition is applied in an amount of from 0.25 to 100 g/m$^2$, preferably from 0.5 to 90 g/m$^2$, more preferably from 1 to 75 g/m$^2$, more preferably 1 to 50 g/m$^2$, most preferably from 2 to 50 g/m$^2$.

4.  Use according to any of the preceding claims, wherein component (iv) is present and the, one, several or all of the organic substance(s) is/are selected from the group consisting of

        (a) monomers and/or oligomers selected from the group consisting of

            saccharides, preferably comprising maltose, galactose, xylose, lactose, sucrose, glucose, glucosamine, mannose, glycerol, gluconate, fructose and/or inulin;
            more preferably selected from the group consisting of maltose, galactose, xylose, lactose, sucrose, glucose, glucosamine, mannose, glycerol, gluconate, fructose and inulin;
            organic acids and derivatives thereof, preferably selected from the group consisting of monocarboxylic acids, preferably formic acid, acetic acid, propionic acid, butyric acid, benzoic acid and salicylic acid, dicarboxylic acids, preferably oxalic acid, malonic acid, succinic acid, glutaric acid, adipic acid and maleic acid, fatty acids, keto acids, preferably pyruvic acid and acetoacetic acid, fruit acids, preferably malic acid and tartaric acid, hydroxy acids, preferably lactic acid, alpha hydroxy acids and beta hydroxy acids, tricarboxylic acids, preferably citric acid, more preferably salts, carboxylates and esters of the before mentioned;
            amino acids and derivatives thereof, preferably selected from the group consisting of alanine, aspartate, arginine, threonine, glycine, lysine, glutamine, glutamate, methionine, methylglycine diacetic acid and non-proteinogenic amino acids, preferably esters and amides thereof;

        (b) (bio)polymers selected from the group consisting of

            cellulose and derivatives thereof, preferably cellulose esters, cellulose ethers and cellulose carboxylates;
            starch and derivatives thereof, preferably starch ethers, starch esters, starch carboxylates, cold swelling starches and hot swelling starches;

lignin and derivatives thereof, preferably lignin sulfonates, kraft-lignins and lignin carboxylates, most preferably calcium lignosulfonate, magnesium lignosulfonate, sodium lignosulfonate, and ammonium lignosulfonate;

pectins and derivatives thereof;

xanthan and derivates thereof;

guar ethers and derivatives thereof;

chitin and derivatives thereof;

algin and derivatives thereof, preferably alginate;

chitosan and derivatives thereof;

cylcodextrins and derivatives thereof;

dextrins and derivatives thereof;

natural glues, hydrogel formers, plant lime, latex, rubber and derivatives thereof;

proteins and peptides, preferably comprising one or more of the amino acids selected from the group consisting of alanine, glycine, lysine, asparagine, glutamine, glutamate, methionine, and non-proteinogenic amino acids;

industrial by-products, preferably from yeast production, polymer production, meat production, fruit production, fisheries, aquaculture, vegetable production, egg production, dairy industry and paper making, preferably corn steep liquor, lactose mother liquor, protein lysates, molasses, more preferably sugar beet molasse and sugar cane molasse, vegetable meals, preferably corn gluten meal, pea meal, fruit meals and protein wastes;liquid or dried polymer dispersions or polymers comprising organic acids, preferably sulfonic acids, carboxylic acids, peroxy carboxylic acids, thio carboxylic acids and salts thereof, sulfoxides, sulfides, cyanates, thiocyanates, esters, ethers, thioethers, oxides, thio oxides, amines, imines, hydrazines, hyrazones, amides, sulfates, nitriles, aldehydes, thio aldehydes, ketones, thioketones, oximes, alcohols, thiols, radicals, halogens, silanes, siloxanes, phosphates, phosponates, alkyls, allyls, aryls and derivatives thereof, preferably wherein the polymer(s) is/are biodegradable;

polysaccharides and derivatives thereof, preferably selected from the group consisting of polysaccharides comprising or consisting of mannose, xylose, ribose, maltose, galactose, xylose, lactose, glucose, fructose, sucrose and/or galactose and/or of derivatives of the before mentioned, and microbial exopolysaccharides, preferably comprising or consisting of mannose, xylose, ribose, maltose, galactose, xylose, lactose, sucrose, glucose, glucosamine, mannose, glycerol, gluconate, fructose and/or inulin and/or derivatives of the before mentioned;

(c) substances having an affinity towards the particle surface;
(d) emulsifiers; thixotropic agents;
(e) chemical and natural fungicides, molluscicides, and insecticides.

5. Use according to any of the preceding claims, wherein the average ratio of the total number of alkaline earth cations to the total number of inorganic anions in the plurality of particles is in a range of from more than 0.01 to less than 20, preferably from more than 0.1 to less than 17.5, more preferably from more than 0.25 to less than 15, more preferably from more than 0.5 to less than 10, more preferably from more than 0.6 to less than 5, more preferably from more than 0.7 to less than 2.5, most preferably from more than 0.75 to less than 2.

6. Use according to any of the preceding claims, wherein the, one, several or all of the inorganic anion(s) of component (ii) is/are (a) silicate anion(s),
preferably wherein the particles comprise or consist of the following components

(i) one or more calcium cation(s), and
(ii) one or more silicate anion(s), and
(iii) bound water, preferably crystal water, and
(iv) optionally one or more organic substance(s).

7. Use according to any of the claims 1 to 5, wherein the particles comprise or consist of calcium silicate hydrate and/or calcium silicate phosphate and/or calcium silicate hydrate phosphate.

8. Use according to any of the preceding claims, wherein the average ratio of the total number of alkaline earth cations to the total number of inorganic anions, preferably silicate anions, in the plurality of particles is in a range of from more than 0.25 to less than 10, preferably from more than 0.5 to less than 5, more preferably from more than 0.6 to less than 3, most preferably from more than 0.7 to less than 2.5.

9. Use according to any of the claims 6 to 8, wherein the ratio of the total number of bound water molecules, preferably of the crystal water molecules, if present, to the total number of silicon atoms in each particle is in a range of from more than 0.25 to less than 10, preferably from more than 0.5 to less than 8, most preferably from more than 1 to less than 6.

10. Use according to any of the preceding claims, wherein the average aspect ratio of the plurality of particles is in a range of from 1.0 to 20, preferably from 1.01 to 19, preferably from 1.02 to 18, preferably from 1.03 to 17, preferably from 1.04 to 16, preferably from 1.05 to 15, preferably from 1.075 to 14, preferably from 1.1 to 13, preferably from 1.2 to 10, preferably from 1.3 to 9, more preferably from 1.4 to 8, more preferably from 1.5 to 7, most preferably from 2 to 6.

11. Use according to any of the preceding claims, wherein the plurality of particles, preferably the composition, is a particulate cement modifier, preferably is a particulate cement accelerator or a particulate cement retarder.

12. Use of a particulate cement modifier, preferably of a particulate cement accelerator, more preferably of an inorganic particulate cement accelerator, as herbicide,
wherein the particulate cement modifier, preferably the particulate cement accelerator, more preferably of the inorganic particulate cement accelerator, is applied in an amount of from 0.1 to 100 g/m$^2$.

13. A method for preventing or reducing plant growth, preferably weed growth, on/in a substrate comprising or consisting of the following steps:

  (a) Identifying a substrate to be treated on/in which plant growth, preferably weed growth, is to be prevented or reduced,
  (b) providing a composition comprising or consisting of a plurality of particles as defined in any of the claims 1 to 11, and/or
  providing a particulate cement modifier, preferably a particulate cement accelerator, more preferably an inorganic particulate cement accelerator,
  (c) applying and/or introducing the composition and/or modifier provided in step (b) onto/into the substrate to be treated in an amount sufficient to prevent or reduce plant growth, preferably weed growth,
  wherein the plurality of particles contained in the composition provided in step (b) and/or the modifier provided in step (b) is/are applied and/or introduced onto/into the substrate in an amount of from 0.1 to 100 g/m$^2$,
  (d) optionally: verifying if plant growth, preferably weed growth, on/in the substrate has been prevented or reduced.

14. A method for preventing or reducing plant growth, preferably weed growth, comprising or consisting of the following steps:

  (a) Identifying one or more plants(s), preferably weed(s), and/or seed(s) thereof, whose growth is to be prevented or reduced,
  (b) providing a composition comprising or consisting of a plurality of particles as defined in any of the claims 1 to 11, and/or
  providing a particulate cement modifier, preferably a particulate cement accelerator, more preferably an inorganic particulate cement accelerator,
  (c) applying the composition and/or modifier provided in step (b) to the one or more plant(s), preferably weed(s), and/or seed(s) thereof,
  wherein the plurality of particles contained in the composition provided in step (b) and/or the modifier provided in step (b) is/are applied to the one or more plant(s), preferably weed(s), and/or seed(s) thereof in an amount of from 0.1 to 100 g/m$^2$,
  (d) optionally: verifying if plant growth, preferably weed growth, has been prevented or reduced.

15. A method for preventing or reducing plant growth, preferably weed growth, on/in a substrate comprising or consisting of the following steps:

  (a) Identifying a substrate to be treated on/in which plant growth, preferably weed growth, is to be prevented or reduced,

(b) providing a mixture comprising or consisting of the following components

(i) one or more alkaline earth cation source(s), preferably one or more calcium and/or magnesium cation source(s),
(ii) one or more inorganic anion source(s), preferably one or more silicate and/or phosphate source(s),
(iii) optionally, one or more organic substance(s),

or providing components (i) to (iii) separately,
(c) mixing the mixture or components provided in step (b) with water to generate a composition comprising or consisting of a plurality of particles, preferably a composition as defined in any of the claims 1 to 11,
(d) applying and/or introducing the composition generated in step (c) onto/into the substrate to be treated in an amount sufficient to prevent or reduce plant growth, preferably weed growth,
wherein the plurality of particles contained in the composition generated in step (c) is applied and/or introduced onto/into the substrate in an amount of from 0.1 to 100 $g/m^2$,
(e) optionally: verifying if plant growth, preferably weed growth, has been prevented or reduced.

Figure 1

Figure 2

Figure 3

Figure 4

Europäisches
Patentamt

European
Patent Office

Office européen
des brevets

# EUROPEAN SEARCH REPORT

Application Number

EP 22 21 6265

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2019 149999 A (DENKA CO LTD) 12 September 2019 (2019-09-12) * abstract * * paragraphs [0006] - [0009], [0012] - [0017], [0020] - [0021], [0027] - [0029], [0033] - [0038], [0054] * * claims 1-7 * | 1-6,8, 11-13,15 | INV. A01N25/28 A01N55/00 A01N59/06 A01N59/26 A01P13/00 C04B28/00 A01G13/02 |
| X | EP 2 570 028 A1 (DORFNER GMBH & CO KAOLIN UND KRISTALLQUARZSAND WERKE KG GEB [DE]) 20 March 2013 (2013-03-20) * paragraphs [0001], [0004], [0006] - [0007], [0026] - [0028], [0031], [0037]; claims 1-6 * | 12 | |
| X | JP 6 827303 B2 (DENKA CO LTD) 10 February 2021 (2021-02-10) * paragraphs [0001] - [0003], [0006], [0009], [0014] - [0017], [0021] * * examples 1-4 * * claims 1-5 * | 12 | |
| X | WO 2022/111788 A1 (BIND X GMBH [DE]) 2 June 2022 (2022-06-02) * figures 5B, /A, 7B * * page 9, line 21 - page 10, line 30; examples 3-4 * * page 11, line 19 - page 13, line 15 * | 7,9,10, 12 | TECHNICAL FIELDS SEARCHED (IPC) A01N A01P C04B A01G |
| A | JP 2011 026165 A (HAKKO KOGYO KK) 10 February 2011 (2011-02-10) * claim 1 * * paragraphs [0009] - [0016] * | 1-15 | |
| X | JP 2010 280578 A (NISSAN CHEMICAL IND LTD) 16 December 2010 (2010-12-16) * paragraphs [0001] - [0019], [0024] - [0026], [0029] - [0032], [0035] * | 1-3,5,6, 13-15 | |

The present search report has been drawn up for all claims

| Place of search | Date of completion of the search | Examiner |
|---|---|---|
| Munich | 30 May 2023 | Zanobini, Alessandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 388 874 A1**

## ANNEX TO THE EUROPEAN SEARCH REPORT
## ON EUROPEAN PATENT APPLICATION NO.

EP 22 21 6265

30-05-2023

| Patent document cited in search report | | Publication date | Patent family member(s) | | Publication date |
|---|---|---|---|---|---|
| JP 2019149999 | A | 12-09-2019 | NONE | | |
| EP 2570028 | A1 | 20-03-2013 | CY | 1115733 T1 | 25-01-2017 |
| | | | DE 102011053650 A1 | | 21-03-2013 |
| | | | DE 202011110480 U1 | | 25-03-2014 |
| | | | DK | 2570028 T3 | 03-11-2014 |
| | | | EP | 2570028 A1 | 20-03-2013 |
| | | | ES | 2515723 T3 | 30-10-2014 |
| | | | HR | P20141043 T1 | 16-01-2015 |
| | | | PL | 2570028 T3 | 30-01-2015 |
| | | | PT | 2570028 E | 05-11-2014 |
| | | | SI | 2570028 T1 | 31-12-2014 |
| JP 6827303 | B2 | 10-02-2021 | JP | 6827303 B2 | 10-02-2021 |
| | | | JP | 2018080138 A | 24-05-2018 |
| WO 2022111788 | A1 | 02-06-2022 | NONE | | |
| JP 2011026165 | A | 10-02-2011 | JP | 5385715 B2 | 08-01-2014 |
| | | | JP | 2011026165 A | 10-02-2011 |
| JP 2010280578 | A | 16-12-2010 | NONE | | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H06245680 A
- CN 110140727 A
- WO 2013186695 A1
- WO 201006155 A1
- WO 2011026720 A1
- WO 201006155 A
- EP 2344566 A1

**Non-patent literature cited in the description**

- *Nanotoxicology,* 2016, vol. 10 (3), 257-278
- *Arabian Journal of Chemistry,* 2020, vol. 13 (1), 3172-3182
- *BBCH Monograph*
- *CHEMICAL ABSTRACTS,* 499223-49-3
- Candidates for Substitution. European commission, 27 January 2015
- *Nature Materials,* 2007, vol. 6, 311-316
- **H. STRUNZ ; E.H. NICKEL.** Strunz Mineralogical Tables. 2001
- **W.H. WALTON.** Feret's Statistical Diameter as a Measure of Particle Size. *Nature,* 1948, 162
- *Pest Management Science,* 2005, vol. 61, 246
- *Pest Management Science,* 2005, vol. 61, 258
- *Pest Management Science,* 2005, vol. 61, 277
- *Pest Management Science,* 2005, vol. 61, 269
- *Pest Management Science,* 2005, vol. 61, 286
- *Pest Management Science,* 2008, vol. 64, 326
- *Pest Management Science,* 2008, vol. 64, 332
- *Weed Science,* 2009, vol. 57, 108
- *Australian Journal of Agricultural Research,* 2007, vol. 58, 708
- *Science,* 2007, vol. 316, 1185
- *CHEMICAL ABSTRACTS,* 13770-92-8
- **ABBOTT, W.S.** A method of computing the effectiveness of an insecticide. *Journal of Economic Entomology,* 1925, vol. 18, 265-267
- Earthworm, Acute Toxicity Tests. *OECD Guidelines for Testing of Chemicals,* 04 April 1984, vol. 207
- *CHEMICAL ABSTRACTS,* 144538-83-0
- *CHEMICAL ABSTRACTS,* 90604-29-8